# EUROPEAN PATENT APPLICATION

(11) **EP 4 668 592 A1**
(43) Date of publication of application: **24.12.2025**
(21) Application number: 24766488.1
(22) Date of filing: 06.03.2024
(51) Int. Cl.: H04B 1/7176

(54) **COMMUNICATION METHOD FOR UWB, AND RELATED PRODUCT**

(30) Priority: 09.03.2023 CN 202310262436; 28.04.2023 CN 202310491082
(71) Applicant: Huawei Technologies Co., Ltd., Shenzhen, Guangdong 518129 (CN)
(72) Inventor: WU, Kuan, Shenzhen, Guangdong 518129 (CN); HUANG, Lei, Shenzhen, Guangdong 518129 (CN); CHITRAKAR, Rojan, Shenzhen, Guangdong 518129 (CN); LI, Yunbo, Shenzhen, Guangdong 518129 (CN); QIAN, Bin, Shenzhen, Guangdong 518129 (CN); YANG, Xun, Shenzhen, Guangdong 518129 (CN)
(74) Representative: Pfenning, Meinig & Partner mbB
(86) International application number: PCT/CN2024/080404
(87) International publication number: WO 2024/183774

(57) **Abstract**

This application discloses a communication method for a UWB and a related product. This application may be applied to a UWB-based wireless personal area network system, a sensing system, a positioning system, a ranging system, or a communication system, and may be further applied to a wireless local area network system that supports 802.11 series protocols such as a next-generation Wi-Fi protocol of IEEE 802.11ax, for example, 802.11be or Wi-Fi 7, and a next-generation protocol of 802.11be, for example, Wi-Fi 8. The method includes: generating a first message, where the first message includes a first bitmap, an i^{th} bit in the first bitmap corresponds to an i^{th} UWB device, and when the i^{th} bit is set to a specified value, the i^{th} bit indicates a location of parameter configuration information of the i^{th} UWB device in a first DPL; and sending the first message. The first bitmap indicates the location of the parameter configuration information of the UWB device in the DPL, to reduce signaling overheads for updating a list element.

## Description

This application claims priorities to Chinese Patent Application No. 202310262436.7, filed with the China National Intellectual Property Administration on March 9, 2023 and entitled "COMMUNICATION METHOD FOR UWB AND RELATED PRODUCT", and to Chinese Patent Application No. 202310491082.3, filed with the China National Intellectual Property Administration on April 28, 2023 and entitled "COMMUNICATION METHOD FOR UWB AND RELATED PRODUCT", both of which are incorporated herein by reference in their entireties.

### TECHNICAL FIELD

This application relates to the computer field, and in particular, to a communication method for a UWB and a related product.

### BACKGROUND

An ultra-wideband (ultra-wideband, UWB) technology is a wireless communication and sensing/ranging technology in which a nanosecond-level non-sine narrow impulse is used for signal transmission. Therefore, the ultra-wideband occupies a wide frequency spectrum range. Due to a narrow impulse and extremely low radiation spectrum density, a UWB system has advantages such as a strong multipath resolution capability, low power consumption, and high confidentiality, and has attracted wide attention in the industry.

Since the Federal Communications Commission approved entry of the UWB technology into the civil field in 2002, many world-renowned large companies, research institutes, and standardization organizations have been actively engaged in research, development, and standardization of ultra-wideband wireless communication technologies. The Institute of Electrical and Electronics Engineers (Institute of Electrical and Electronics Engineers, IEEE) has incorporated the UWB technology into IEEE 802 series wireless standards, and has released a UWB technology-based wireless personal area network (wireless personal area networks, WPAN) standard IEEE 802.15.4a and an evolved version IEEE 802.15.4z of the standard IEEE 802.15.4a. Currently, formulation of a next-generation UWB WPAN standard IEEE 802.15.4ab is put on the agenda. A UWB is planned to be comprehensively upgraded in the IEEE 802.15.4ab standard.

A scheduling information element (information element, IE) for UWB application (such as ranging, sensing, positioning, and communication) is used to schedule one or more UWB devices to implement the UWB application. Currently, an existing scheduling information element for the UWB application usually has high signaling overheads. Therefore, an enhanced scheduling IE design for the UWB application needs to be provided, to reduce the signaling overheads of the scheduling information element for the UWB application.

### SUMMARY

Embodiments of this application disclose a communication method for a UWB and a related product, to reduce signaling overheads of a scheduling information element for UWB application.

According to a first aspect, an embodiment of this application provides a communication method for a UWB. The method includes: generating a first message, where the first message includes a first bitmap, the first bitmap includes N bits, an i^{th} bit in the first bitmap corresponds to an i^{th} UWB device, and when the i^{th} bit is set to a specified value, the i^{th} bit indicates a location of parameter configuration information of the i^{th} UWB device in a first device parameters list (device parameters list, DPL), where i is greater than or equal to 1 and less than or equal to N, N is an integer greater than 0, and the first DPL is included in the first message; and sending the first message.

In embodiments of this application, the first bitmap indicates the location of the parameter configuration information of the UWB device in the DPL, so that a device address in a list element is omitted, and signaling overheads for updating the list element can be reduced.

In a possible implementation, before the sending the first message, the method further includes: sending a second message. The second message includes a second DPL, the second DPL includes one or more list elements arranged in order, any list element in the second DPL includes an address of a UWB device corresponding to the any list element, and an i^{th} list element arranged in order in the second DPL includes the parameter configuration information of the corresponding i^{th} UWB device.

In this implementation, the second message is sent, so that a receiver determines, based on the second message, that the i^{th} list element arranged in order in the second DPL includes the parameter configuration information of the corresponding i^{th} UWB device.

According to a second aspect, an embodiment of this application provides another communication method for a UWB. The method includes: receiving a first message, where the first message includes a first bitmap, the first bitmap includes N bits, an i^{th} bit in the first bitmap corresponds to an i^{th} UWB device; and determining a location of parameter configuration information of the i^{th} UWB device in a first device parameters list DPL when the i^{th} bit is set to a specified value, where i is greater than or equal to 1 and less than or equal to N, N is an integer greater than 0, and the first DPL is included in the first message.

In embodiments of this application, the location of the parameter configuration information of the i^{th} UWB device in the first DPL is determined when the i^{th} bit is set to the specified value, so that a device address in a list element is omitted, and signaling overheads for updating the list element can be reduced.

In a possible implementation, the first DPL includes a plurality of list elements arranged in order. Determining the location of the parameter configuration information of the i^{th} UWB device in the first device parameters list DPL when the i^{th} bit is set to the specified value includes: when the i^{th} bit is an F^{th} bit that is arranged in order in the first bitmap and that is set to the specified value, determining that an F^{th} list element in the first DPL includes the parameter configuration information of the i^{th} UWB device, where F is an integer greater than 0.

In this implementation, it is determined, based on the first bitmap, that the F^{th} list element in the first DPL includes the parameter configuration information of the i^{th} UWB device, so that the device address in the list element is omitted, and signaling overheads for updating the list element can be reduced.

In a possible implementation, before receiving the first message, the method further includes: receiving a second message, where the second message includes a second DPL, the second DPL includes one or more list elements arranged in order, and any list element in the second DPL includes an address of a UWB device corresponding to the any list element; and determining, based on the second message, that an i^{th} list element arranged in order in the second DPL includes the parameter configuration information of the corresponding i^{th} UWB device, where i is an integer greater than 0. Determining the location of the parameter configuration information of the i^{th} UWB device in the first device parameters list DPL when the i^{th} bit is set to the specified value includes: determining that the i^{th} bit in the first bitmap corresponds to the i^{th} UWB device; and determining the location of the parameter configuration information of the i^{th} UWB device in the first DPL when the i^{th} bit is set to the specified value.

In this implementation, it is determined that the i^{th} list element arranged in order in the second DPL includes the parameter configuration information of the corresponding i^{th} UWB device, and then it is determined that the i^{th} bit in the first bitmap corresponds to the i^{th} UWB device.

In a possible implementation of the first aspect or the second aspect, the first DPL includes one or more list elements arranged in order, and when the i^{th} bit is an F^{th} bit that is arranged in order in the first bitmap and that is set to the specified value, the i^{th} bit indicates that an F^{th} list element in the first DPL includes the parameter configuration information of the i^{th} UWB device, where F is an integer greater than 0.

In this implementation, it is determined, based on the first bitmap, that the F^{th} list element in the first DPL includes the parameter configuration information of the i^{th} UWB device, so that the device address in the list element is omitted, and signaling overheads for updating the list element can be reduced.

In a possible implementation of the first aspect or the second aspect, the first message further includes a first field, and the first field indicates to use the first bitmap to identify (identify) a location of parameter configuration information of a UWB device in the first DPL.

In this implementation, the first field indicates to use the first bitmap to identify the location of the parameter configuration information of the UWB device in the first DPL, so that a receiver learns, based on the first field, of the location, in the first DPL, that is identified by the first bitmap and that is of the parameter configuration information of the UWB device.

In a possible implementation of the first aspect or the second aspect, the first message further includes a field indicating a length of the first bitmap.

In this implementation, the first message further includes the field indicating the length of the first bitmap. Therefore, the receiver learns of the length of the first bitmap, to correctly parse the first bitmap.

In a possible implementation of the first aspect or the second aspect, the first message is included in a measurement initiation message or a poll/initiation POLL message.

According to a third aspect, an embodiment of this application provides another communication method for a UWB. The method includes: generating a first message, where the first message includes a first list element, the first list element includes parameter configuration information of an i^{th} UWB device and an identifier of the i^{th} UWB device, the identifier indicates an order, in a device parameters list DPL, of a list element of the i^{th} UWB device in a second message, the second message is information sent before the first message is sent, the second message carries an address of the i^{th} UWB device, and the DPL is included in the second message; and sending the first message. The identifier of the i^{th} UWB device occupies fewer than 2 octets. The identifier of the i^{th} UWB device is used to identify the i^{th} UWB device.

In embodiments of this application, the first message is sent. The first list element in the first message includes the parameter configuration information of the i^{th} UWB device and the identifier of the i^{th} UWB device. The identifier of the i^{th} UWB device is used, so that a device identifier in the list element is changed from a 2-octet or 8-octet device address to the identifier that occupies fewer than 2 octets. This reduces signaling consumption.

According to a fourth aspect, an embodiment of this application provides another communication method for a UWB. The method includes: receiving a first message, where the first message includes a first list element, the first list element includes parameter configuration information of an i^{th} UWB device and an identifier of the i^{th} UWB device, the identifier indicates an order, in a device parameters list DPL, of a list element of the i^{th} UWB device in a second message, the second message is information sent before the first message is sent, the second message carries an address of the i^{th} UWB device, and the DPL is included in the second message; and determining the first list element based on the identifier. The identifier of the i^{th} UWB device occupies fewer than 2 octets. The identifier of the i^{th} UWB device is used to identify the i^{th} UWB device.

In embodiments of this application, the list element, in the first message, that includes the parameter configuration information of the UWB device is determined based on the identifier of the i^{th} UWB device. A device identifier in the list element is changed from a 2-octet or 8-octet device address to the identifier that occupies fewer than 2 octets. This reduces signaling consumption.

In a possible implementation, before receiving the first message, the method further includes: receiving the second message; and determining the order, in the DPL, of the list element of the i^{th} UWB device in the second message, and recording the order as the identifier.

In this implementation, the identifier of the i^{th} UWB device is determined and recorded, so that the identifier is subsequently used to identify the i^{th} UWB device.

In a possible implementation of the first aspect or the second aspect, the identifier occupies fewer than 2 octets.

In a possible implementation of the first aspect or the second aspect, the first message further includes a first field, and the first field indicates to use the identifier of the i^{th} UWB device to identify a location of the parameter configuration information of the i^{th} UWB device in the first DPL.

In this implementation, the first field indicates to use the identifier of the i^{th} UWB device to identify the location of the parameter configuration information of the i^{th} UWB device in the first DPL, so that a receiver learns, based on the first field, of the location of the parameter configuration information in the first DPL, where the location of the parameter configuration information of the i^{th} UWB device is identified by the identifier of the i^{th} UWB device.

In a possible implementation of the first aspect or the second aspect, the first message is included in a measurement initiation message or a poll/initiation POLL message. For example, the measurement initiation message is a start-of-ranging (start-of-ranging, SOR) message.

According to a fifth aspect, an embodiment of this application provides another communication method for a UWB. The method includes: A first device sends a first message. The first message indicates expiry time of a contention access period (contention-based access period, CAP), and the CAP is a period of time in which sending of a response message for the first message is allowed. The first device receives second messages of a plurality of second devices. Each of the plurality of second messages includes second parameter configuration information of a corresponding second device. The first device sends a third message. The third message includes first parameter configuration information of some or all of the plurality of second devices and information indicating a moment at which a fourth message is sent, and the fourth message is used to update first parameter configuration information of at least one of some or all of the second devices.

In embodiments of this application, the first device sends the first message. The first message indicates the expiry time of the CAP, so that a target second device sends the second message before the expiry time. This can reduce duration of waiting to receive the second message, to reduce energy consumption. The first device sends the third message. The third message includes the information indicating the moment at which the fourth message is sent. This can reduce duration in which the target second device enables a receiver to receive a possible updated SOR message, to reduce energy consumption.

In a possible implementation, the first message includes a first field indicating the expiry time of the CAP.

In a possible implementation, the first message further includes information indicating start time of the CAP.

In this implementation, the first message further includes the information indicating the start time of the CAP, so that a responder learns of the start time of the CAP. This can reduce power consumption of the responder.

In a possible implementation, the third message includes a second field, and the second field indicates that the third message includes the information indicating the moment at which the fourth message is sent.

In this implementation, the target second device may learn that the third message includes the information indicating the moment at which the fourth message is sent.

In a possible implementation, the third message further includes addresses of some or all of the plurality of second devices.

In a possible implementation, the method further includes: sending the fourth message. The fourth message includes a first bitmap, the first bitmap includes N bits, an i^{th} bit in the first bitmap corresponds to an i^{th} UWB device, and when the i^{th} bit is set to a specified value, the i^{th} bit indicates a location of first parameter configuration information of the i^{th} UWB device in a first device parameters list DPL, where i is greater than or equal to 1 and less than or equal to N, N is an integer greater than 0, and the first DPL is included in the fourth message.

In this implementation, the fourth message includes the first bitmap, and the first bitmap indicates the location of the parameter configuration information of the UWB device in the DPL, so that a device address in a list element is omitted, and signaling overheads for updating the list element can be reduced.

In a possible implementation, the first DPL includes a plurality of list elements arranged in order, and when the i^{th} bit is an F^{th} bit that is arranged in order in the first bitmap and that is set to the specified value, the i^{th} bit indicates that an F^{th} list element in the first DPL includes the first parameter configuration information of the i^{th} UWB device, where F is an integer greater than 0.

In this implementation, the first bitmap indicates the location of the parameter configuration information of the UWB device in the DPL, so that the device address in the list element is omitted, and signaling overheads for updating the list element can be reduced.

In a possible implementation, the fourth message further includes a third field, and the third field indicates to use the first bitmap to identify a location of first parameter configuration information of a UWB device in the first DPL.

In this implementation, the third field indicates to use the first bitmap to identify the location of the parameter configuration information of the UWB device in the first DPL, so that a receiver learns, based on the third field, of the location, in the first DPL, that is identified by the first bitmap and that is of the parameter configuration information of the UWB device.

In a possible implementation, the fourth message further includes a field indicating a length of the first bitmap.

In a possible implementation, the method further includes: sending the fourth message. The fourth message includes a first list element, the first list element includes the first parameter configuration information of the i^{th} UWB device and the identifier of the i^{th} UWB device, the identifier indicates the order, in the device parameters list DPL, of a list element of the i^{th} UWB device in the third message, the DPL is included in the third message, and the i^{th} UWB device is one of the plurality of second devices.

In this implementation, the fourth message is sent. The first list element in the fourth message includes the parameter configuration information of the i^{th} UWB device and the identifier of the i^{th} UWB device. A device identifier in the list element is changed from a 2-octet or 8-octet device address to the identifier that occupies fewer than 2 octets. This reduces signaling consumption.

In a possible implementation, the identifier occupies fewer than 2 octets.

In a possible implementation, the fourth message further includes a fourth field, and the fourth field indicates to use the identifier of the i^{th} UWB device to identify the location of the first parameter configuration information of the i^{th} UWB device in the first DPL.

In this implementation, the fourth field indicates to use the identifier of the i^{th} UWB device to identify the location of the parameter configuration information of the i^{th} UWB device in the first DPL, so that the receiver learns, based on the fourth field, of the location of the parameter configuration information in the first DPL, where the location of the parameter configuration information of the i^{th} UWB device is identified by the identifier of the i^{th} UWB device.

In a possible implementation, the fourth message is included in a measurement initiation message or a poll/initiation POLL message.

According to a sixth aspect, an embodiment of this application provides another communication method for a UWB. The method includes: A target second device receives a first message, where the first message indicates expiry time of a CAP, and the CAP is a period of time in which sending of a response message for the first message is allowed; sends a second message before the expiry time, where the second message includes second parameter configuration information of the target second device; and receives a third message, where the third message includes first parameter configuration information of one or more second devices and information indicating a moment at which a fourth message is sent, and the fourth message is used to update first parameter configuration information of at least one of the one or more second devices.

In embodiments of this application, the third message is received. The third message includes the first parameter configuration information of the one or more second devices and the information indicating the moment at which the fourth message is sent. This can reduce duration in which the target second device enables a receiver to receive a possible fourth message, to reduce energy consumption.

In a possible implementation, the first message includes a first field indicating the expiry time of the CAP.

In a possible implementation, the first message further includes information indicating start time of the CAP.

In a possible implementation, the third message includes a second field, and the second field indicates that the third message includes the information indicating the moment at which the fourth message is sent.

In a possible implementation, the third message further includes addresses of some or all of the plurality of second devices.

In a possible implementation, the method further includes: receiving the fourth message, where the fourth message includes a first bitmap, the first bitmap includes N bits, and an i^{th} bit in the first bitmap corresponds to an i^{th} UWB device; and determining a location of first parameter configuration information of the i^{th} UWB device in a first device parameters list DPL when the i^{th} bit is set to a specified value, where i is greater than or equal to 1 and less than or equal to N, N is an integer greater than 0, and the first DPL is included in the fourth message.

In this implementation, the location of the first parameter configuration information of the i^{th} UWB device in the first DPL is determined when the i^{th} bit is set to the specified value, so that a device address in a list element is omitted, and signaling overheads for updating the list element can be reduced.

In a possible implementation, the first DPL includes a plurality of list elements arranged in order, and when the i^{th} bit is an F^{th} bit that is arranged in order in the first bitmap and that is set to the specified value, the i^{th} bit indicates that an F^{th} list element in the first DPL includes the first parameter configuration information of the i^{th} UWB device, where F is an integer greater than 0.

In a possible implementation, the fourth message further includes a third field, and the third field indicates to use the first bitmap to identify a location of first parameter configuration information of a UWB device in the first DPL.

In a possible implementation, the fourth message further includes a field indicating a length of the first bitmap.

In a possible implementation, the first DPL includes a plurality of list elements arranged in order. The determining a location of first parameter configuration information of the i^{th} UWB device in a first device parameters list DPL when the i^{th} bit is set to a specified value includes: when the i^{th} bit is an F^{th} bit that is arranged in order in the first bitmap and that is set to the specified value, determining that an F^{th} list element in the first DPL includes the first parameter configuration information of the i^{th} UWB device, where F is an integer greater than 0.

In this implementation, the device address in the list element is omitted, and signaling overheads for updating the list element can be reduced.

In a possible implementation, the third message includes a second DPL, the second DPL includes a plurality of list elements arranged in order, and any list element in the second DPL includes an address of a second device corresponding to the any list element. The method further includes: determining, based on the third message, that an i^{th} list element arranged in order in the second DPL corresponds to the i^{th} UWB device, where i is an integer greater than 0. The determining a location of first parameter configuration information of the i^{th} UWB device in a first device parameters list DPL when the i^{th} bit is set to a specified value includes: determining that the i^{th} bit in the first bitmap corresponds to the i^{th} UWB device; and determining the location of the first parameter configuration information of the i^{th} UWB device in the first DPL when the i^{th} bit is set to the specified value.

In this implementation, it is determined that the i^{th} list element arranged in order in the second DPL includes the parameter configuration information of the corresponding i^{th} UWB device, and then it is determined that the i^{th} bit in the first bitmap corresponds to the i^{th} UWB device.

In a possible implementation, the method further includes: receiving the fourth message, where the fourth message includes a first list element, the first list element includes the first parameter configuration information of the i^{th} UWB device and the identifier of the i^{th} UWB device, the identifier indicates an order, in a device parameters list DPL, of a list element of the i^{th} UWB device in the third message, the DPL is included in the third message, and the i^{th} UWB device is one of the plurality of second devices; and determining the first list element based on the identifier.

In this implementation, the list element, in the first message, that includes the parameter configuration information of the UWB device is determined based on the identifier of the i^{th} UWB device. A device identifier in the list element is changed from a 2-octet or 8-octet device address to the identifier that occupies fewer than 2 octets. This reduces signaling consumption.

In a possible implementation, the identifier occupies fewer than 2 octets.

In a possible implementation, the fourth message further includes a fourth field, and the fourth field indicates to use the identifier of the i^{th} UWB device to identify the location of the first parameter configuration information of the i^{th} UWB device in the first DPL.

In a possible implementation, the method further includes: determining the order, in the DPL, of the list element of the i^{th} UWB device in the third message, and recording the order as the identifier.

In this implementation, the identifier of the i^{th} UWB device is determined and recorded, so that the identifier is subsequently used to identify the i^{th} UWB device.

In a possible implementation, the fourth message is included in a measurement initiation message or a poll/initiation POLL message.

According to a seventh aspect, an embodiment of this application provides another communication method for a UWB. The method includes: A first device sends a first message, where the first message indicates expiry time of a CAP, and the CAP is a period of time in which sending of a response message for the first message is allowed; receives second messages of a plurality of second devices, where each of the plurality of second messages includes second parameter configuration information of a corresponding second device; and sends a third message, where the third message carries information indicating a moment at which a fourth message is sent, and the fourth message is sent to some or all of the plurality of second devices.

In embodiments of this application, the first device sends the first message. The first message indicates the expiry time of the CAP, so that a target second device sends the second message before the expiry time. This can reduce duration of receiving the second message, to reduce energy consumption. The first device sends the third message. The third message includes the information indicating the moment at which the fourth message is sent. This can reduce duration in which the target second device enables a receiver to receive a possible updated SOR message, to reduce energy consumption.

In a possible implementation, the first message includes a first field, and the first field indicates that the first message includes information indicating the expiry time of the CAP.

In a possible implementation, the first message further includes information indicating start time of the CAP.

In a possible implementation, the third message includes a second field, and the second field indicates that the third message includes the information indicating the moment at which the fourth message is sent.

According to an eighth aspect, an embodiment of this application provides another communication method for a UWB. The method includes: A target second device receives a first message, where the first message indicates expiry time of a CAP, and the CAP is a period of time in which sending of a response message for the first message is allowed; sends a second message to a first device before the expiry time, where the second message includes second parameter configuration information of the target second device; and receives a third message from the first device, where the third message carries information indicating a moment at which a fourth message is sent, and the fourth message is sent to some or all of devices that send response messages for the first message to the first device before the expiry time.

In embodiments of this application, the third message is received. The third message includes first parameter configuration information of one or more second devices and the information indicating the moment at which the fourth message is sent. This can reduce duration in which the target second device enables a receiver to receive a possible fourth message, to reduce energy consumption.

In a possible implementation, the first message includes a first field, and the first field indicates that the first message includes information indicating the expiry time of the CAP.

In a possible implementation, the first message further includes information indicating start time of the CAP.

In a possible implementation, the third message includes a second field, and the second field indicates that the third message includes the information indicating the moment at which the fourth message is sent.

In a possible implementation, the fourth message indicates to terminate measurement of a current round or measurement of a next round.

In a possible implementation, the fourth message indicates to terminate measurement of one or more measurement rounds. In other words, the fourth message indicates to terminate one or more rounds of measurement. For example, the fourth message indicates to terminate measurement of a plurality of measurement rounds, and the plurality of measurement rounds may be adjacent in time, or may not be adjacent in time. For another example, the fourth message indicates to terminate measurement of a plurality of measurement rounds, and the plurality of measurement rounds may be located in a same measurement block, or may be located in different measurement blocks. One measurement block includes one or more measurement rounds. Being adjacent in time may mean that a plurality of measurement rounds in a same measurement block are adjacent, or one or more trailing measurement rounds in a previous measurement block are adjacent to one or more leading measurement rounds in a current measurement block.

In this implementation, the fourth message indicates to terminate measurement of one or more measurement rounds, to reduce resource overheads and unnecessary measurement. In addition, a time resource corresponding to a terminated measurement round may be used by another measurement procedure.

In a possible implementation, the one or more measurement rounds are a plurality of consecutive measurement rounds.

In a possible implementation, that the fourth message indicates to terminate measurement of one or more measurement rounds includes: The fourth message includes identifiers (for example, measurement round indexes) of the one or more measurement rounds. In other words, the fourth message includes identifiers of one or more measurement rounds for which measurement needs to be terminated.

In a possible implementation, that the fourth message indicates to terminate measurement of one or more measurement rounds includes: A value F included in the fourth message indicates to terminate measurement of an F^{th} measurement round, where F is an integer greater than or equal to 0, and the F^{th} measurement round is included in the one or more measurement rounds. For example, a current measurement round, namely, a round 1, is used as a reference point, and indicates to terminate measurement of a round (measurement round) relative to the round 1. For example, a value 0 indicates that measurement of the round 1 is terminated, that is, measurement of the current measurement round is terminated, and a value 1 indicates that measurement of a round 2 is terminated.

In a possible implementation, that the fourth message indicates to terminate measurement of one or more measurement rounds includes: The fourth message indicates to terminate measurement of all remaining measurement rounds. For example, a specific value included in the fourth message indicates that measurement of all remaining rounds is terminated. For example, the specific value is a maximum value of a field occupied by the specific value.

In a possible implementation, that the fourth message indicates to terminate measurement of one or more measurement rounds includes: The fourth message includes a second bitmap, a j^{th} bit in the second bitmap corresponds to a j^{th} measurement round, and when the j^{th} bit is set to a specified value, the j^{th} bit indicates to terminate the j^{th} measurement round, where the j^{th} measurement round is included in the one or more measurement rounds, and j is an integer greater than or equal to 0.

In a possible implementation, the one or more measurement rounds are a plurality of consecutive measurement rounds. That the fourth message indicates to terminate measurement of one or more measurement rounds includes: The fourth message includes a first value and a second value, the first value indicates an initial measurement round in the plurality of consecutive measurement rounds, and the second value indicates a last measurement round in the plurality of consecutive measurement rounds.

In a possible implementation, the fourth message includes a target field, and when the target field is set to the first value, it indicates that the fourth message indicates to terminate measurement of a measurement round.

In a possible implementation, the fourth message is a POLL message.

In a possible implementation, the third message indicates to terminate measurement of one or more measurement rounds. In other words, the third message indicates to terminate one or more rounds of measurement. For example, the third message indicates to terminate measurement of a plurality of measurement rounds, and the plurality of measurement rounds may be adjacent in time, or may not be adjacent in time. For another example, the third message indicates to terminate measurement of a plurality of measurement rounds, and the plurality of measurement rounds may be located in a same measurement block, or may be located in different measurement blocks. One measurement block includes one or more measurement rounds. Being adjacent in time may mean that a plurality of measurement rounds in a same measurement block are adjacent, or one or more trailing measurement rounds in a previous measurement block are adjacent to one or more leading measurement rounds in a current measurement block.

In this implementation, the third message indicates to terminate measurement of one or more measurement rounds, to reduce resource overheads and unnecessary measurement. In addition, a time resource corresponding to a terminated measurement round may be used by another measurement procedure.

In a possible implementation, the one or more measurement rounds are a plurality of consecutive measurement rounds.

In a possible implementation, that the third message indicates to terminate measurement of one or more measurement rounds includes: The third message includes identifiers (for example, measurement round indexes) of the one or more measurement rounds. In other words, the third message includes identifiers of one or more measurement rounds for which measurement needs to be terminated.

In a possible implementation, that the third message indicates to terminate measurement of one or more measurement rounds includes: A value F included in the third message indicates to terminate measurement of an F^{th} measurement round, where F is an integer greater than or equal to 0, and the F^{th} measurement round is included in the one or more measurement rounds. For example, a current measurement round, namely, a round 1, is used as a reference point, and indicates to terminate measurement of a round (measurement round) relative to the round 1. For example, a value 0 indicates that measurement of the round 1 is terminated, that is, measurement of the current measurement round is terminated, and a value 1 indicates that measurement of a round 2 is terminated.

In a possible implementation, that the third message indicates to terminate measurement of one or more measurement rounds includes: The third message indicates to terminate measurement of all remaining measurement rounds. For example, a specific value included in the third message indicates that measurement of all remaining rounds is terminated. For example, the specific value is a maximum value of a field occupied by the specific value.

In a possible implementation, that the third message indicates to terminate measurement of one or more measurement rounds includes: The third message includes a second bitmap, a j^{th} bit in the second bitmap corresponds to a j^{th} measurement round, and when the j^{th} bit is set to a specified value, the j^{th} bit indicates to terminate the j^{th} measurement round, where the j^{th} measurement round is included in the one or more measurement rounds, and j is an integer greater than or equal to 0.

In a possible implementation, the one or more measurement rounds are a plurality of consecutive measurement rounds. That the third message indicates to terminate measurement of one or more measurement rounds includes: The third message includes a first value and a second value, the first value indicates an initial measurement round in the plurality of consecutive measurement rounds, and the second value indicates a last measurement round in the plurality of consecutive measurement rounds.

In a possible implementation, the third message includes a target field, and when the target field is set to the first value, it indicates that the third message indicates to terminate measurement of a measurement round.

In a possible implementation, the third message is a POLL message.

According to a ninth aspect, an embodiment of this application provides a communication apparatus. The communication apparatus has a function of implementing behavior in the method embodiment in the first aspect. The communication apparatus may be a communication device, may be a component (for example, a processor, a chip, or a chip system) of the communication device, or may be a logical module or software that can implement all or some functions of the communication device. The functions of the communication apparatus may be implemented by hardware, or may be implemented by hardware executing corresponding software. The hardware or the software includes one or more modules or units corresponding to the foregoing functions. In a possible implementation, the communication apparatus includes a transceiver module and a processing module. The processing module is configured to generate a first message. The first message includes a first bitmap, the first bitmap includes N bits, an i^{th} bit in the first bitmap corresponds to an i^{th} UWB device, and when the i^{th} bit is set to a specified value, the i^{th} bit indicates a location of parameter configuration information of the i^{th} UWB device in a first DPL, where i is greater than or equal to 1 and less than or equal to N, N is an integer greater than 0, and the first DPL is included in the first message. The transceiver module is configured to send the first message.

In a possible implementation, the transceiver module is further configured to send a second message. The second message includes a second DPL, the second DPL includes one or more list elements arranged in order, any list element in the second DPL includes an address of a UWB device corresponding to the any list element, and an i^{th} list element arranged in order in the second DPL includes the parameter configuration information of the corresponding i^{th} UWB device.

For possible implementations of the communication apparatus in the ninth aspect, refer to the possible implementations of the first aspect.

For technical effect brought by the possible implementations of the ninth aspect, refer to descriptions of technical effect of the first aspect or the possible implementations of the first aspect.

According to a tenth aspect, an embodiment of this application provides a communication apparatus. The communication apparatus has a function of implementing behavior in the method embodiment in the second aspect. The communication apparatus may be a communication device, may be a component (for example, a processor, a chip, or a chip system) of the communication device, or may be a logical module or software that can implement all or some functions of the communication device. The functions of the communication apparatus may be implemented by hardware, or may be implemented by hardware executing corresponding software. The hardware or the software includes one or more modules or units corresponding to the foregoing functions. In a possible implementation, the communication apparatus includes a transceiver module and a processing module. The transceiver module is configured to receive a first message. The first message includes a first bitmap, the first bitmap includes N bits, and an i^{th} bit in the first bitmap corresponds to an i^{th} UWB device. The processing module is configured to determine a location of parameter configuration information of the i^{th} UWB device in a first device parameters list DPL when the i^{th} bit is set to a specified value, where i is greater than or equal to 1 and less than or equal to N, N is an integer greater than 0, and the first DPL is included in the first message.

In a possible implementation, the first DPL includes a plurality of list elements arranged in order. The processing module is specifically configured to: when the i^{th} bit is an F^{th} bit that is arranged in order in the first bitmap and that is set to the specified value, determine that an F^{th} list element in the first DPL includes the parameter configuration information of the i^{th} UWB device, where F is an integer greater than 0.

In a possible implementation, the transceiver module is further configured to receive a second message. The second message includes a second DPL, the second DPL includes one or more list elements arranged in order, and any list element in the second DPL includes an address of a UWB device corresponding to the any list element. The processing module is further configured to determine, based on the second message, that an i^{th} list element arranged in order in the second DPL includes the parameter configuration information of the corresponding i^{th} UWB device, where i is an integer greater than 0. The processing module is specifically configured to determine that the i^{th} bit in the first bitmap corresponds to the i^{th} UWB device; and determine the location of the parameter configuration information of the i^{th} UWB device in the first DPL when the i^{th} bit is set to the specified value.

For possible implementations of the communication apparatus in the tenth aspect, refer to the possible implementations of the second aspect.

For technical effect brought by the possible implementations of the tenth aspect, refer to descriptions of technical effect of the second aspect or the possible implementations of the second aspect.

According to an eleventh aspect, an embodiment of this application provides a communication apparatus. The communication apparatus has a function of implementing behavior in the method embodiment in the third aspect. The communication apparatus may be a communication device, may be a component (for example, a processor, a chip, or a chip system) of the communication device, or may be a logical module or software that can implement all or some functions of the communication device. The functions of the communication apparatus may be implemented by hardware, or may be implemented by hardware executing corresponding software. The hardware or the software includes one or more modules or units corresponding to the foregoing functions. In a possible implementation, the communication apparatus includes a transceiver module and a processing module. The processing module is configured to generate a first message. The first message includes a first list element, the first list element includes parameter configuration information of an i^{th} UWB device and an identifier of the i^{th} UWB device, the identifier indicates an order, in a device parameters list DPL, of a list element of the i^{th} UWB device in a second message, the second message is information sent before the first message is sent, the second message carries an address of the i^{th} UWB device, and the DPL is included in the second message. The transceiver module is configured to send the first message.

For possible implementations of the communication apparatus in the eleventh aspect, refer to the possible implementations of the third aspect.

For technical effect brought by the possible implementations of the eleventh aspect, refer to descriptions of technical effect of the third aspect or the possible implementations of the third aspect.

According to a twelfth aspect, an embodiment of this application provides a communication apparatus. The communication apparatus has a function of implementing behavior in the method embodiment in the fourth aspect. The communication apparatus may be a communication device, may be a component (for example, a processor, a chip, or a chip system) of the communication device, or may be a logical module or software that can implement all or some functions of the communication device. The functions of the communication apparatus may be implemented by hardware, or may be implemented by hardware executing corresponding software. The hardware or the software includes one or more modules or units corresponding to the foregoing functions. In a possible implementation, the communication apparatus includes a transceiver module and a processing module. The transceiver module is configured to receive a first message. The first message includes a first list element, the first list element includes parameter configuration information of an i^{th} UWB device and an identifier of the i^{th} UWB device, the identifier indicates an order, in a device parameters list DPL, of a list element of the i^{th} UWB device in a second message, the second message is information sent before the first message is sent, the second message carries an address of the i^{th} UWB device, and the DPL is included in the second message. The processing module is configured to determine the first list element based on the identifier.

In a possible implementation, the transceiver module is further configured to receive the second message. The processing module is further configured to determine the order, in the DPL, of the list element of the i^{th} UWB device in the second message, and record the order as the identifier.

For possible implementations of the communication apparatus in the twelfth aspect, refer to the possible implementations of the fourth aspect.

For technical effect brought by the possible implementations of the twelfth aspect, refer to descriptions of technical effect of the fourth aspect or the possible implementations of the fourth aspect.

According to a thirteenth aspect, an embodiment of this application provides a communication apparatus. The communication apparatus has a function of implementing behavior in the method embodiment in the fifth aspect. The communication apparatus may be a communication device, may be a component (for example, a processor, a chip, or a chip system) of the communication device, or may be a logical module or software that can implement all or some functions of the communication device. The functions of the communication apparatus may be implemented by hardware, or may be implemented by hardware executing corresponding software. The hardware or the software includes one or more modules or units corresponding to the foregoing functions. In a possible implementation, the communication apparatus includes a transceiver module and a processing module. The processing module is configured to generate a first message. The transceiver module is configured to: send the first message, where the first message indicates expiry time of a CAP, and the CAP is a period of time in which sending of a response message for the first message is allowed; receive second messages of a plurality of second devices, where each of the plurality of second messages includes second parameter configuration information of a corresponding second device; and send a third message, where the third message includes first parameter configuration information of some or all of the plurality of second devices and information indicating a moment at which a fourth message is sent, and the fourth message is used to update first parameter configuration information of at least one of some or all of the second devices.

In a possible implementation, the transceiver module is further configured to send the fourth message. The fourth message includes a first bitmap, the first bitmap includes N bits, an i^{th} bit in the first bitmap corresponds to an i^{th} UWB device, and when the i^{th} bit is set to a specified value, the i^{th} bit indicates a location of first parameter configuration information of the i^{th} UWB device in a first device parameters list DPL, where i is greater than or equal to 1 and less than or equal to N, N is an integer greater than 0, and the first DPL is included in the fourth message.

In a possible implementation, the transceiver module is further configured to send the fourth message. The fourth message includes a first list element, the first list element includes the first parameter configuration information of the i^{th} UWB device and the identifier of the i^{th} UWB device, the identifier indicates the order, in the device parameters list DPL, of a list element of the i^{th} UWB device in the third message, the DPL is included in the third message, and the i^{th} UWB device is one of the plurality of second devices.

For possible implementations of the communication apparatus in the thirteenth aspect, refer to the possible implementations of the fifth aspect.

For technical effect brought by the possible implementations of the thirteenth aspect, refer to descriptions of technical effect of the fifth aspect or the possible implementations of the fifth aspect.

According to a fourteenth aspect, an embodiment of this application provides a communication apparatus. The communication apparatus has a function of implementing behavior in the method embodiment in the sixth aspect. The communication apparatus may be a communication device, may be a component (for example, a processor, a chip, or a chip system) of the communication device, or may be a logical module or software that can implement all or some functions of the communication device. The functions of the communication apparatus may be implemented by hardware, or may be implemented by hardware executing corresponding software. The hardware or the software includes one or more modules or units corresponding to the foregoing functions. In a possible implementation, the communication apparatus includes a transceiver module and a processing module. The transceiver module is configured to receive a first message. The first message indicates expiry time of a CAP, and the CAP is a period of time in which sending of a response message for the first message is allowed. The transceiver module is configured to generate a second message. The transceiver module is further configured to: send the second message before the expiry time, where the second message includes second parameter configuration information of a target second device; and receive a third message, where the third message includes first parameter configuration information of one or more second devices and information indicating a moment at which a fourth message is sent, and the fourth message is used to update first parameter configuration information of at least one of the one or more second devices.

In a possible implementation, the transceiver module is further configured to receive the fourth message. The fourth message includes a first bitmap, the first bitmap includes N bits, and an i^{th} bit in the first bitmap corresponds to an i^{th} UWB device. The processing module is further configured to determine a location of first parameter configuration information of the i^{th} UWB device in a first device parameters list DPL when the i^{th} bit is set to a specified value, where i is greater than or equal to 1 and less than or equal to N, N is an integer greater than 0, and the first DPL is included in the fourth message.

In a possible implementation, the first DPL includes a plurality of list elements arranged in order. The processing module is specifically configured to: when the i^{th} bit is an F^{th} bit that is arranged in order in the first bitmap and that is set to the specified value, determine that an F^{th} list element in the first DPL includes the first parameter configuration information of the i^{th} UWB device, where F is an integer greater than 0.

In a possible implementation, the third message includes a second DPL, the second DPL includes a plurality of list elements arranged in order, and any list element in the second DPL includes an address of a second device corresponding to the any list element. The processing module is further configured to determine, based on the third message, that an i^{th} list element arranged in order in the second DPL corresponds to the i^{th} UWB device, where i is an integer greater than 0. The processing module is specifically configured to determine the location of the first parameter configuration information of the i^{th} UWB device in the first DPL when the i^{th} bit is set to the specified value.

In a possible implementation, the transceiver module is further configured to receive the fourth message, where the fourth message includes a first list element, the first list element includes the first parameter configuration information of the i^{th} UWB device and the identifier of the i^{th} UWB device, the identifier indicates an order, in a device parameters list DPL, of a list element of the i^{th} UWB device in the third message, the DPL is included in the third message, and the i^{th} UWB device is one of the plurality of second devices. The processing module is further configured to determine the first list element based on the identifier.

In a possible implementation, the processing module is further configured to determine the order, in the DPL, of the list element of the i^{th} UWB device in the third message, and record the order as the identifier.

For possible implementations of the communication apparatus in the fourteenth aspect, refer to the possible implementations of the sixth aspect.

For technical effect brought by the possible implementations of the fourteenth aspect, refer to descriptions of technical effect of the sixth aspect or the possible implementations of the sixth aspect.

According to a fifteenth aspect, an embodiment of this application provides a communication apparatus. The communication apparatus has a function of implementing behavior in the method embodiment in the seventh aspect. The communication apparatus may be a communication device, may be a component (for example, a processor, a chip, or a chip system) of the communication device, or may be a logical module or software that can implement all or some functions of the communication device. The functions of the communication apparatus may be implemented by hardware, or may be implemented by hardware executing corresponding software. The hardware or the software includes one or more modules or units corresponding to the foregoing functions. In a possible implementation, the communication apparatus includes a transceiver module and a processing module. The processing unit is configured to generate a first message. The transceiver module is configured to: send the first message, where the first message indicates expiry time of a CAP, and the CAP is a period of time in which sending of a response message for the first message is allowed; receive second messages of a plurality of second devices, where each of the plurality of second messages includes second parameter configuration information of a corresponding second device; and send a third message, where the third message carries information indicating a moment at which a fourth message is sent, and the fourth message is sent to some or all of the plurality of second devices.

For possible implementations of the communication apparatus in the fifteenth aspect, refer to the possible implementations of the seventh aspect.

For technical effect brought by the possible implementations of the fifteenth aspect, refer to descriptions of technical effect of the seventh aspect or the possible implementations of the seventh aspect.

According to a sixteenth aspect, an embodiment of this application provides a communication apparatus. The communication apparatus has a function of implementing behavior in the method embodiment in the eighth aspect. The communication apparatus may be a communication device, may be a component (for example, a processor, a chip, or a chip system) of the communication device, or may be a logical module or software that can implement all or some functions of the communication device. The functions of the communication apparatus may be implemented by hardware, or may be implemented by hardware executing corresponding software. The hardware or the software includes one or more modules or units corresponding to the foregoing functions. In a possible implementation, the communication apparatus includes a transceiver module and a processing module. The transceiver module is configured to receive a first message. The first message indicates expiry time of a CAP, and the CAP is a period of time in which sending of a response message for the first message is allowed. The processing unit is configured to generate a second message. The transceiver module is further configured to: send the second message to a first device before the expiry time, where the second message includes second parameter configuration information of a target second device; and receive a third message from the first device, where the third message carries information indicating a moment at which a fourth message is sent, and the fourth message is sent to some or all of devices that send response messages for the first message to the first device before the expiry time.

For possible implementations of the communication apparatus in the sixteenth aspect, refer to the possible implementations of the eighth aspect.

For technical effect brought by the possible implementations of the sixteenth aspect, refer to descriptions of technical effect of the eighth aspect or the possible implementations of the eighth aspect.

According to a seventeenth aspect, an embodiment of this application provides another communication apparatus. The communication apparatus includes a processor, the processor is coupled to a memory, the memory is configured to store a program or instructions, and when the program or the instructions are executed by the processor, the communication apparatus performs the method in any one of the first aspect to the eighth aspect.

In this embodiment of this application, in a process of performing the method, a process of sending information (or a signal) in the method may be understood as a process of outputting information based on the instructions of the processor. When outputting the information, the processor outputs the information to a transceiver, so that the transceiver transmits the information. After the information is output by the processor, other processing may further need to be performed on the information before the information arrives at the transceiver. Similarly, when the processor receives input information, the transceiver receives the information, and inputs the information into the processor. Further, after the transceiver receives the information, other processing may need to be performed on the information before the information is input to the processor.

Unless otherwise specified, or if an operation like sending and/or receiving related to the processor does not conflict with an actual function or internal logic of the operation in related descriptions, the operation may be generally understood as an instruction output based on the processor.

In an implementation process, the processor may be a processor specially configured to perform these methods, or may be a processor like a general-purpose processor that executes computer instructions in the memory to perform these methods. For example, the processor may be further configured to execute a program stored in the memory. When the program is executed, the communication apparatus performs the method in the first aspect or any possible implementation of the first aspect.

In a possible implementation, the memory is located outside the communication apparatus. In a possible implementation, the memory is located inside the communication apparatus.

In a possible implementation, the processor and the memory may alternatively be integrated into one component, that is, the processor and the memory may alternatively be integrated together.

In a possible implementation, the communication apparatus further includes the transceiver. The transceiver is configured to: receive a signal, send a signal, or the like.

According to an eighteenth aspect, an embodiment of this application provides another communication apparatus. The communication apparatus includes a processing circuit and an interface circuit, the interface circuit is configured to obtain data or output data, and the processing circuit is configured to perform the method in any one of the first aspect to the eighth aspect.

According to a nineteenth aspect, an embodiment of this application provides a computer-readable storage medium. The computer-readable storage medium stores a computer program, the computer program includes program instructions, and when the program instructions are executed, a computer is enabled to perform the method in any one of the first aspect to the eighth aspect.

According to a twentieth aspect, an embodiment of this application provides a computer program product. The computer program product includes a computer program, the computer program includes program instructions, and when the program instructions are executed, a computer is enabled to perform the method in any one of the first aspect to the eighth aspect.

According to a twenty-first aspect, an embodiment of this application provides a communication system, including the communication apparatus in the ninth aspect or any possible implementation of the ninth aspect and the communication apparatus in the tenth aspect or any possible implementation of the tenth aspect.

According to a twenty-second aspect, an embodiment of this application provides a communication system, including the communication apparatus in the eleventh aspect or any possible implementation of the eleventh aspect and the communication apparatus in the twelfth aspect or any possible implementation of the twelfth aspect.

According to a twenty-third aspect, an embodiment of this application provides a communication system, including the communication apparatus in the thirteenth aspect or any possible implementation of the thirteenth aspect and the communication apparatus in the fourteenth aspect or any possible implementation of the fourteenth aspect.

According to a twenty-fourth aspect, an embodiment of this application provides a communication system, including the communication apparatus in the fifteenth aspect or any possible implementation of the fifteenth aspect and the communication apparatus in the sixteenth aspect or any possible implementation of the sixteenth aspect.

According to a twenty-fifth aspect, an embodiment of this application provides a chip, including a processor and a communication interface. The processor reads, through the communication interface, instructions stored in a memory, to perform the method in any one of the first aspect to the eighth aspect.

According to a twenty-sixth aspect, an embodiment of this application provides another communication method for a UWB. The method includes: generating a fifth message, where the fifth message indicates to terminate measurement of one or more measurement rounds; and sending the fifth message.

In this embodiment of this application, the fifth message indicates to terminate measurement of the one or more measurement rounds, to reduce resource overheads and unnecessary measurement.

According to a twenty-seventh aspect, an embodiment of this application provides another communication method for a UWB. The method includes: receiving a fifth message, where the fifth message indicates to terminate measurement of one or more measurement rounds; and terminating measurement of the one or more measurement rounds based on the fifth message.

In this embodiment of this application, measurement of the one or more measurement rounds is terminated based on the fifth message, to reduce resource overheads and unnecessary measurement.

In a possible implementation of the twenty-sixth aspect or the twenty-seventh aspect, the one or more measurement rounds are a plurality of consecutive measurement rounds. The plurality of consecutive measurement rounds are a plurality of measurement rounds that are consecutive in time.

In a possible implementation of the twenty-sixth aspect or the twenty-seventh aspect, that the fifth message indicates to terminate measurement of one or more measurement rounds includes: The fifth message includes identifiers (for example, measurement round indexes) of the one or more measurement rounds. In other words, the fifth message includes identifiers of one or more measurement rounds for which measurement needs to be terminated.

In a possible implementation of the twenty-sixth aspect or the twenty-seventh aspect, that the fifth message indicates to terminate measurement of one or more measurement rounds includes: A value F included in the fifth message indicates to terminate measurement of an F^{th} measurement round after a current measurement round, where F is an integer greater than or equal to 0, and the F^{th} measurement round is included in the one or more measurement rounds.

In a possible implementation of the twenty-sixth aspect or the twenty-seventh aspect, that the fifth message indicates to terminate measurement of one or more measurement rounds includes: The fifth message indicates to terminate measurement of all remaining measurement rounds.

In a possible implementation of the twenty-sixth aspect or the twenty-seventh aspect, that the fifth message indicates to terminate measurement of one or more measurement rounds includes: The fifth message includes a second bitmap, a j^{th} bit in the second bitmap corresponds to a j^{th} measurement round, and when the j^{th} bit is set to a specified value, the j^{th} bit indicates to terminate the j^{th} measurement round, where the j^{th} measurement round is included in the one or more measurement rounds.

In a possible implementation of the twenty-sixth aspect or the twenty-seventh aspect, the one or more measurement rounds are a plurality of consecutive measurement rounds. That the fifth message indicates to terminate measurement of one or more measurement rounds includes: The fifth message includes a first value and a second value, the first value indicates an initial measurement round in the plurality of consecutive measurement rounds, and the second value indicates a last measurement round in the plurality of consecutive measurement rounds.

In a possible implementation of the twenty-sixth aspect or the twenty-seventh aspect, the fifth message includes a target field, and the target field indicates whether a terminated measurement round corresponding to a measurement task is configured for the fifth message.

In a possible implementation of the twenty-sixth aspect or the twenty-seventh aspect, the fifth message is a POLL message, a response (Response) message, a report (Report) message, or an SOR message.

According to a twenty-eighth aspect, an embodiment of this application provides another communication method for a UWB. The method includes: generating a sixth message, where the sixth message indicates a recommendation (suggestion or request) of terminating measurement of S measurement rounds; and sending the sixth message, where S is an integer greater than 0. In this application, the recommendation may be replaced with the request, the suggestion, or another word whose meaning is similar to that of the recommendation. For example, the sixth message indicates that a second device recommends (suggests or requests) termination of measurement of the S measurement rounds. The second device is an initiator or a responder of a measurement task.

In this embodiment of this application, the sixth message indicates the recommendation of terminating measurement of the S measurement rounds, to terminate measurement of one or more measurement rounds. This further reduces resource overheads and unnecessary measurement.

In a possible implementation of the twenty-eighth aspect, the method further includes: receiving a seventh message, where the seventh message indicates to terminate measurement of the one or more measurement rounds. For possible implementations of the seventh message, refer to the possible implementations of the fourth message in the eighth aspect.

In a possible implementation of the twenty-eighth aspect, the method further includes: terminating measurement of the one or more measurement rounds based on the seventh message.

In a possible implementation of the twenty-eighth aspect, the method further includes: terminating measurement of the S measurement rounds.

According to a twenty-ninth aspect, an embodiment of this application provides another communication method for a UWB. The method includes: receiving a sixth message, where the sixth message indicates a recommendation (suggestion or request) of terminating measurement of S measurement rounds; and terminating measurement of the S measurement rounds, or sending a seventh message, or performing rejection based on the sixth message, where the seventh message indicates to terminate measurement of one or more measurement rounds. For possible implementations of the seventh message, refer to the possible implementations of the fourth message in the eighth aspect. The rejection may be not responding to the sixth message, that is, no processing is performed after the sixth message is received; or may be sending a recommendation that indicates to reject the sixth message. The terminating measurement of the S measurement rounds includes skipping sending a POLL message.

In this embodiment of this application, measurement of the S measurement rounds is terminated or the seventh message is sent based on the sixth message, to avoid unnecessary measurement, and further reduce resource overheads.

In a possible implementation of the twenty-eighth aspect or the twenty-ninth aspect, that the sixth message indicates a recommendation of terminating measurement of S measurement rounds includes: The sixth message includes identifiers (for example, measurement round indexes) of the S measurement rounds. In other words, the sixth message includes the identifiers of the S measurement rounds for which measurement needs to be terminated.

In a possible implementation of the twenty-eighth aspect or the twenty-ninth aspect, that the sixth message indicates a recommendation of terminating measurement of S measurement rounds includes: A value F included in the sixth message indicates a recommendation of terminating measurement of an F^{th} measurement round after a current measurement round, where F is an integer greater than or equal to 0, and the F^{th} measurement round is included in the S measurement rounds.

In a possible implementation of the twenty-eighth aspect or the twenty-ninth aspect, that the sixth message indicates a recommendation of terminating measurement of S measurement rounds includes: The sixth message indicates a recommendation of terminating measurement of all remaining measurement rounds.

In a possible implementation of the twenty-eighth aspect or the twenty-ninth aspect, that the sixth message indicates a recommendation of terminating measurement of S measurement rounds includes: The sixth message includes a third bitmap, a j^{th} bit in the third bitmap corresponds to a j^{th} measurement round, and when the j^{th} bit is set to a specified value, the j^{th} bit indicates a recommendation of terminating measurement of the j^{th} measurement round, where the j^{th} measurement round is included in the S measurement rounds, and j is an integer greater than or equal to 0.

In a possible implementation of the twenty-eighth aspect or the twenty-ninth aspect, the S measurement rounds are a plurality of consecutive measurement rounds. That the sixth message indicates a recommendation of terminating measurement of S measurement rounds includes: The sixth message includes a third value and a fourth value, the third value indicates an initial measurement round in the plurality of consecutive measurement rounds, and the fourth value indicates a last measurement round in the plurality of consecutive measurement rounds.

In a possible implementation of the twenty-eighth aspect or the twenty-ninth aspect, the sixth message includes a target field, and the target field indicates whether a terminated measurement round corresponding to a measurement task is configured for the sixth message.

In a possible implementation of the twenty-eighth aspect or the twenty-ninth aspect, the sixth message is a response (Response) message or a report (Report) message.

In a possible implementation of the twenty-eighth aspect or the twenty-ninth aspect, the seventh message is a POLL message.

According to a thirtieth aspect, an embodiment of this application provides another communication apparatus. The communication apparatus has a function of implementing behavior in the method embodiment in the twenty-sixth aspect. The communication apparatus may be a communication device, may be a component (for example, a processor, a chip, or a chip system) of the communication device, or may be a logical module or software that can implement all or some functions of the communication device. The functions of the communication apparatus may be implemented by hardware, or may be implemented by hardware executing corresponding software. The hardware or the software includes one or more modules or units corresponding to the foregoing functions. In a possible implementation, the communication apparatus includes a transceiver module and a processing module. The processing unit is configured to generate a fifth message. The fifth message indicates to terminate measurement of one or more measurement rounds. The transceiver module is configured to send the fifth message.

For possible implementations of the communication apparatus in the thirtieth aspect, refer to the possible implementations of the twenty-sixth aspect.

For technical effect brought by the possible implementations of the thirtieth aspect, refer to descriptions of technical effect of the twenty-sixth aspect or the possible implementations of the twenty-sixth aspect.

According to a thirty-first aspect, an embodiment of this application provides another communication apparatus. The communication apparatus has a function of implementing behavior in the method embodiment in the twenty-seventh aspect. The communication apparatus may be a communication device, may be a component (for example, a processor, a chip, or a chip system) of the communication device, or may be a logical module or software that can implement all or some functions of the communication device. The functions of the communication apparatus may be implemented by hardware, or may be implemented by hardware executing corresponding software. The hardware or the software includes one or more modules or units corresponding to the foregoing functions. In a possible implementation, the communication apparatus includes a transceiver module and a processing module. The transceiver module is configured to receive a fifth message. The fifth message indicates to terminate measurement of one or more measurement rounds. The processing unit is configured to terminate measurement of the one or more measurement rounds based on the fifth message.

For possible implementations of the communication apparatus in the thirty-first aspect, refer to the possible implementations of the twenty-seventh aspect.

For technical effect brought by the possible implementations of the thirty-first aspect, refer to descriptions of technical effect of the twenty-seventh aspect or the possible implementations of the twenty-seventh aspect.

According to a thirty-second aspect, an embodiment of this application provides another communication apparatus. The communication apparatus has a function of implementing behavior in the method embodiment in the twenty-eighth aspect. The communication apparatus may be a communication device, may be a component (for example, a processor, a chip, or a chip system) of the communication device, or may be a logical module or software that can implement all or some functions of the communication device. The functions of the communication apparatus may be implemented by hardware, or may be implemented by hardware executing corresponding software. The hardware or the software includes one or more modules or units corresponding to the foregoing functions. In a possible implementation, the communication apparatus includes a transceiver module and a processing module. The processing unit is configured to generate a sixth message. The sixth message indicates a recommendation (suggestion or request) of terminating measurement of S measurement rounds. The transceiver module is configured to send the sixth message, where S is an integer greater than 0.

For possible implementations of the communication apparatus in the thirty-second aspect, refer to the possible implementations of the twenty-eighth aspect.

For technical effect brought by the possible implementations of the thirty-second aspect, refer to descriptions of technical effect of the twenty-eighth aspect or the possible implementations of the twenty-eighth aspect.

According to a thirty-third aspect, an embodiment of this application provides another communication apparatus. The communication apparatus has a function of implementing behavior in the method embodiment in the twenty-ninth aspect. The communication apparatus may be a communication device, may be a component (for example, a processor, a chip, or a chip system) of the communication device, or may be a logical module or software that can implement all or some functions of the communication device. The functions of the communication apparatus may be implemented by hardware, or may be implemented by hardware executing corresponding software. The hardware or the software includes one or more modules or units corresponding to the foregoing functions. In a possible implementation, the communication apparatus includes a transceiver module and a processing module. The transceiver module is configured to receive a sixth message. The sixth message indicates a recommendation (suggestion or request) of terminating measurement of S measurement rounds. The processing unit is configured to terminate measurement of the S measurement rounds, or send a seventh message, or perform rejection based on the sixth message. The seventh message indicates to terminate measurement of one or more measurement rounds.

For possible implementations of the communication apparatus in the thirty-third aspect, refer to the possible implementations of the twenty-ninth aspect.

For technical effect brought by the possible implementations of the thirty-third aspect, refer to descriptions of technical effect of the twenty-ninth aspect or the possible implementations of the twenty-ninth aspect.

According to a thirty-fourth aspect, an embodiment of this application provides another communication apparatus. The communication apparatus includes a processor, the processor is coupled to a memory, the memory is configured to store a program or instructions, and when the program or the instructions are executed by the processor, the communication apparatus performs the method in any one of the twenty-sixth aspect to the twenty-ninth aspect.

According to a thirty-fifth aspect, an embodiment of this application provides another communication apparatus. The communication apparatus includes a processing circuit and an interface circuit, the interface circuit is configured to obtain data or output data, and the processing circuit is configured to perform the method in any one of the twenty-sixth aspect to the twenty-ninth aspect.

According to a thirty-sixth aspect, an embodiment of this application provides a computer-readable storage medium. The computer-readable storage medium stores a computer program, the computer program includes program instructions, and when the program instructions are executed, a computer is enabled to perform the method in any one of the twenty-sixth aspect to the twenty-ninth aspect.

According to a thirty-seventh aspect, an embodiment of this application provides a computer program product. The computer program product includes a computer program, the computer program includes program instructions, and when the program instructions are executed, a computer is enabled to perform the method in any one of the twenty-sixth aspect to the twenty-ninth aspect.

According to a thirty-eighth aspect, an embodiment of this application provides a communication system, including the communication apparatus in the thirtieth aspect or any possible implementation of the thirtieth aspect and the communication apparatus in the thirty-first aspect or any possible implementation of the thirty-first aspect.

According to a thirty-ninth aspect, an embodiment of this application provides a communication system, including the communication apparatus in the thirty-second aspect or any possible implementation of the thirty-second aspect and the communication apparatus in the thirty-third aspect or any possible implementation of the thirty-third aspect.

### BRIEF DESCRIPTION OF DRAWINGS

To describe technical solutions in embodiments of this application or in the background more clearly, the following briefly describes accompanying drawings for describing embodiments of this application or the background.
FIG. 1 is a diagram of each phase in a ranging round in the conventional technology;
FIG. 2 is a diagram of ranging blocks in the conventional technology;
FIG. 3 is a diagram of an initialization process of NBA-MMS UWB ranging;
FIG. 4A is a diagram of one-to-many NBA-MMS UWB ranging;
FIG. 4B is a diagram of one-to-many NBA-MMS UWB ranging based on an interlacing mode;
FIG. 5 is a diagram of an example of a star topology structure;
FIG. 6 is a diagram of an example of a point-to-point topology structure or a mesh topology structure;
FIG. 7 shows an example of a UWB system to which a technical solution according to an embodiment of this application is applicable;
FIG. 8 is an interaction flowchart of a communication method for a UWB according to an embodiment of this application;
FIG. 9 is an interaction flowchart of another communication method for a UWB according to an embodiment of this application;
FIG. 10 is an interaction flowchart of another communication method for a UWB according to an embodiment of this application;
FIG. 11 is an interaction flowchart of another communication method for a UWB according to an embodiment of this application;
FIG. 12 is a diagram of a one-to-many NBA-MMS UWB initialization phase according to an embodiment of this application;
FIG. 13 is an interaction flowchart of another communication method for a UWB according to an embodiment of this application;
FIG. 14A is a diagram of a measurement round in a measurement block N (Block N) according to an embodiment of this application;
FIG. 14B is a diagram of measurement rounds in a measurement block M-1 (Block M-1) and a measurement block (Block M) according to an embodiment of this application;
FIG. 14C is a diagram of other measurement rounds in a measurement block M-1 (Block M-1) and a measurement block (Block M) according to an embodiment of this application;
FIG. 14D is a diagram of other measurement rounds in a measurement block M-1 (Block M-1) and a measurement block (Block M) according to an embodiment of this application;
FIG. 14E is a diagram of other measurement rounds in a measurement block M-1 (Block M-1) and a measurement block (Block M) according to an embodiment of this application;
FIG. 14F is a diagram of other measurement rounds in a measurement block M-1 (Block M-1) and a measurement block (Block M) according to an embodiment of this application;
FIG. 14G is a diagram of receiving, in a slot before a next round starts, an SOR message for parameter configuration update;
FIG. 14H is a diagram of receiving, in one or more slots in an RCP of a next round, an SOR message for parameter configuration update;
FIG. 14I is a diagram of receiving, in one or more slots in an MRP of a next round or a current round, an SOR message for parameter configuration update;
FIG. 15 shows that a POLL message sent by an initiator to a 1^{st} responder also carries a slot that is for a next update and that is broadcast to all responders;
FIG. 16 shows that an initiator broadcasts, to all responders based on a report message, a slot for a next update;
FIG. 17 shows that an initiator broadcasts, to all responders based on a response message, a slot for a next update;
FIG. 18 is an interaction flowchart of another communication method for a UWB according to an embodiment of this application;
FIG. 19 is a diagram of a structure of a communication apparatus 1900 according to an embodiment of this application;
FIG. 20 is a diagram of a structure of another communication apparatus 200 according to an embodiment of this application; and
FIG. 21 is a diagram of a structure of another communication apparatus 210 according to an embodiment of this application.

### DESCRIPTION OF EMBODIMENTS

In the specification, claims, and the accompanying drawings of this application, terms such as "first" and "second" are only intended to distinguish between different objects but do not describe a particular order. It may be understood that various numbers in embodiments of this application are merely for distinguishing for ease of description, and are not intended to limit the scope of embodiments of this application. Sequential numbers of the foregoing processes do not mean execution sequences. The execution sequences of the processes should be determined based on functions and internal logic of the processes. In addition, terms "include", "have", or any other variant thereof are intended to cover a non-exclusive inclusion. For example, processes, methods, systems, products, devices that include a series of steps or units are not limited to listed steps or units, but instead, optionally further include steps units that are not listed, or optionally further include other steps or units inherent to these processes, methods, products, devices.

"Embodiments" mentioned herein mean that specific features, structures, or characteristics described in combination with the embodiments may be included in at least one embodiment of this application. The phrase shown in various locations in the specification may not necessarily refer to a same embodiment, and is not an independent or optional embodiment exclusive from another embodiment. It may be understood explicitly and implicitly by a person skilled in the art that embodiments described in the specification may be combined with other embodiment.

Terms used in the following embodiments of this application are merely intended to describe specific embodiments, but are not intended to limit this application. The terms "one", "a", "the", and "this" of singular forms used in this specification and the appended claims of this application are also intended to include plural forms, unless otherwise specified in the context clearly. It should also be understood that the term "and/or" used in this application means and includes any or all possible combinations of one or more listed items. For example, "A and/or B" may represent three cases: Only A exists, only B exists, and both A and B exist, where A and B may be singular or plural. The term "a plurality of' used in this application means two or more. In text descriptions of this application, a character "/" usually indicates an "or" relationship between associated objects.

It may be understood that in embodiments of this application, "B corresponding to A" indicates that there is a correspondence between A and B, and B may be determined based on A. However, it should be further understood that determining (or generating) B based on (or according to) A does not mean that B is determined (or generated) based only on (or according to) A, and B may alternatively be determined (or generated) based on (or according to) A and/or other information.

For ease of understanding of solutions of this application, the following first describes terms and technical solutions in embodiments of this application.

Narrowband assisted multi-millisecond ultra-wideband (narrowband assisted multi-millisecond ultra-wideband, NBA-MMS UWB):

An ultra-wideband system has a large bandwidth, and a device of the ultra-wideband system needs to have an ultra-high-speed data receiving and sending capability. However, spectrum efficiency of an impulse radio ultra-wideband (impulse radio ultra-wideband, IR-UWB) system based on impulse transmission is low, and when same information is transmitted, power consumption overheads required by an IR-UWB solution are much higher than those of another narrowband short-range protocol (for example, Bluetooth or ZigBee). In a ranging, positioning, or sensing scenario, precision of measurement, positioning, or sensing of a device is greatly related to a signal bandwidth. A larger signal bandwidth indicates higher precision of sensing, positioning, or ranging of the device. Therefore, it is considered that a reference signal for ranging, positioning, or sensing is received and sent by using the UWB system, and other data/control message/synchronization message is transmitted according to a narrowband (narrowband, NB) protocol, to ensure precision of ranging and sensing and reduce power consumption.

The UWB technical solution that combines a narrowband assisted UWB and multi-millisecond transmission is also referred to as the NBA-MMS UWB.

Ranging round (ranging round), positioning round (positioning round), sensing round (sensing round), measurement period, and communication period:

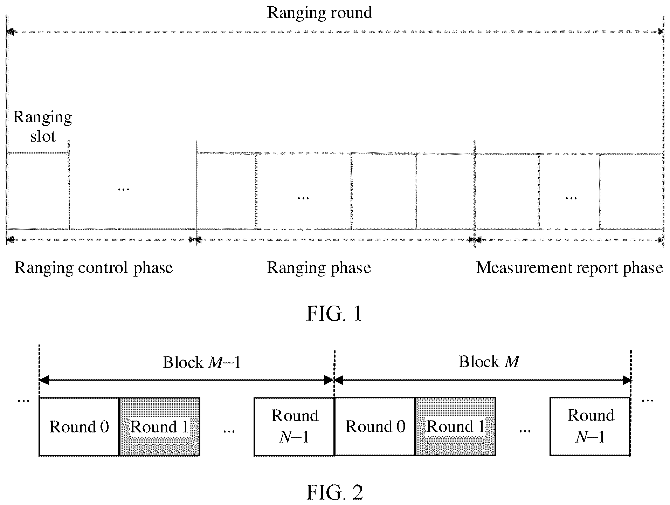

In the IEEE 802.15.4z standard, a single ranging process is defined as a ranging round (ranging round). In the IEEE 802.15.4z standard, the ranging round is defined as follows: The ranging round is a period of sufficient duration to complete one entire ranging period involving a set of ERDEVs participating in ranging exchange (a ranging round is a period of sufficient duration to complete one entire range-measurement cycle involving the set of ERDEVs participating in the ranging exchange). A minimum processing time unit in each ranging round is a ranging slot (ranging slot). A ranging round is divided into three phases: a ranging control phase (ranging control phase), a ranging phase (ranging phase), and a measurement report phase (measurement report phase). FIG. 1 is a diagram of each phase in a ranging round in the conventional technology. Details are shown in FIG. 1. In the IEEE 802.15.4z standard, the ranging control phase includes one ranging slot. However, in the IEEE 802.15.4ab standard currently under discussion and formulation, the ranging control phase may include more than one ranging slot.

In a 1^{st} slot of the ranging round shown in FIG. 1, a controller sends a ranging control message (ranging control message, RCM). The RCM may carry a message for updating a round structure of the ranging round, for example, updating duration (round duration) of the ranging round.

An updated ranging round (which may be referred to as a round for short in the following) and a ranging round that is not updated may be adjacent in time, or may not be adjacent in time. Duration of different rounds may be the same or may be different. The following uses an example in which duration of different rounds is the same by default for description.

A case in which an updated ranging round (which may be referred to as a round for short in the following) and a ranging round that is not updated are not adjacent in time is shown in FIG. 2. FIG. 2 is a diagram of ranging blocks in the conventional technology. As shown in FIG. 2, the ranging block may be a time structure including a plurality of ranging rounds. Optionally, the ranging blocks repeatedly appear in a periodic manner. Optionally, duration of the ranging rounds in the ranging block is the same. As shown in FIG. 2, for a specific ranging process, an initiator (initiator) and a responder (responder) perform the ranging process in a ranging round in a ranging block (ranging block), for example, a round 1 shown in FIG. 2. In this application, the initiator may be referred to as an initiator, and is a UWB device that initiates a ranging/sensing/communication procedure. In a ranging/sensing/communication process, the initiator may be a transmitter or a receiver. In this application, the initiator may be referred to as a responder, and is a UWB device that responds to the ranging/sensing/communication process initiated by the UWB initiator device. In the ranging/sensing/communication process, the responder may be a transmitter or a receiver. After the ranging round is completed, the specific ranging process is performed in a round 1 in a next ranging block. It can be learned from FIG. 2 that two adjacent rounds 1 are not adjacent in time, that is, there is a time interval between the two adjacent rounds 1. In an interval slot between the two adjacent rounds 1, the device may turn off the receiver to sleep, to reduce power consumption. Duration of adjacent ranging blocks may be the same or may be different. For example, ranging blocks with different duration in adjacent ranging blocks may be located in a hyper-block (hyper-block). The following uses an example in which duration of adjacent ranging blocks is the same by default for description.

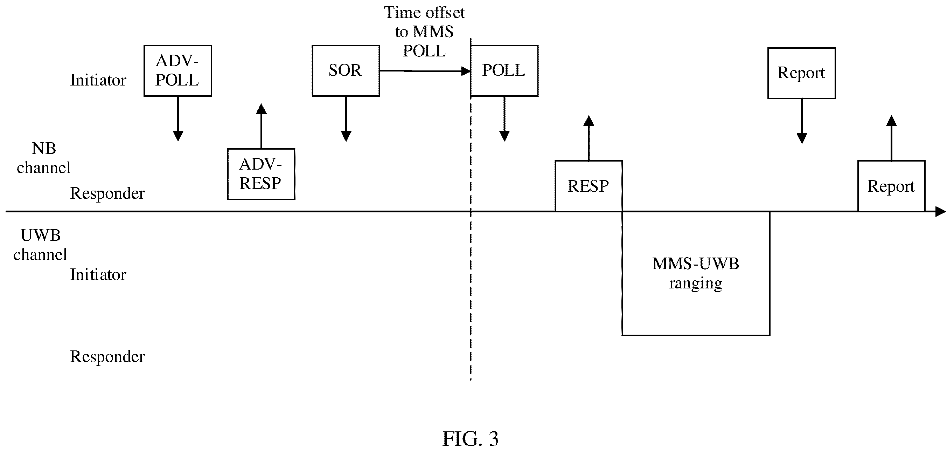

Before NBA-MMS UWB ranging is performed (or started), initialization and setup processes need to be performed (or executed) between related devices. For example, the initiator is a controller. The initiator needs to first broadcast an advertisement message, to notify all responders that NBA-MMS UWB ranging needs to be performed currently. The broadcast advertisement message may be carried in an advertising poll (advertisement poll, ADV-POLL) message/advertising initiation message. After the responder receives the ADV-POLL message, if ranging needs to be performed, the responder feeds back an advertising response message/advertising response (advertisement response, ADV-RESP) message to the initiator. Parameter configuration information required by the responder is carried in the ADV-RESP message. After receiving the ADV-RESP message, the initiator may determine whether to accept parameter configuration proposed by the responder, and may notify the responder of a final parameter configuration result based on a start-of-ranging (start-of-ranging, SOR) message. The SOR message may carry a parameter acknowledgment message for the ADV-RESP message of the responder, or carry a parameter change/update message for the ADV-RESP message of the responder. After a period of time after the responder receives the SOR message, the initiator and the responder may start an NBA-MMS UWB ranging process. A length of the period of time may be determined based on Time offset to MMS POLL information in the SOR message. FIG. 3 shows an initialization process of the NBA-MMS UWB ranging. FIG. 3 is a diagram of an initialization process of NBA-MMS UWB ranging.

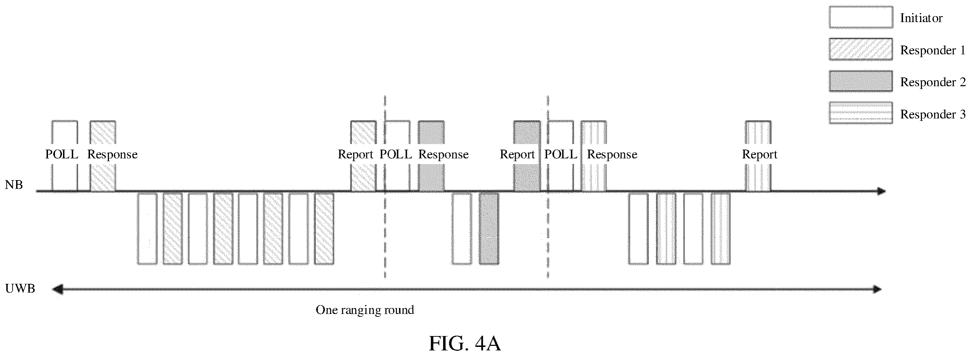

An application scenario of the NBA-MMS UWB ranging may be a one-to-one scenario, that is, one initiator corresponds to one responder; or may be a one-to-many (one-to-many) scenario, that is, one initiator corresponds to a plurality of responders, as shown in FIG. 4A. FIG. 4A is a diagram of one-to-many NBA-MMS UWB ranging.

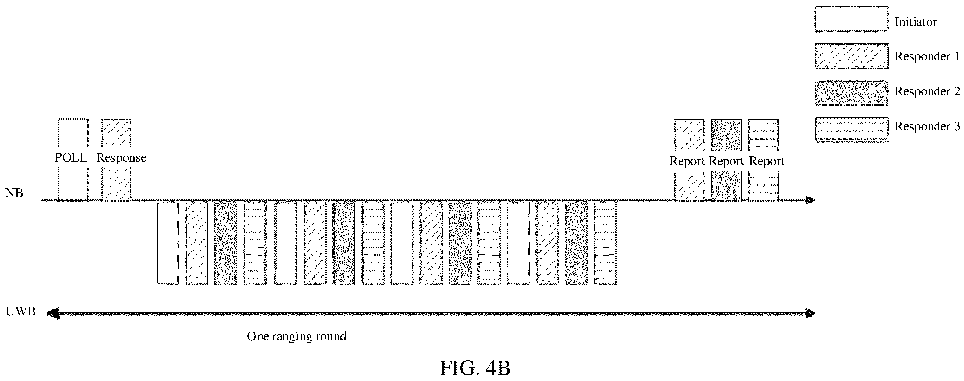

In the one-to-many NBA-MMS UWB ranging shown in FIG. 4A, the initiator and each responder sequentially perform NBA-MMS UWB ranging. In other words, the initiator and each responder complete exchange of a poll/initiation (POLL) message and a response (response, RESP) message, multi-millisecond (multi-millisecond, MMS) block exchange, ranging, and a ranging result report (report) exchange process. The ranging result report includes both a report from the responder to the initiator and a report from the initiator to the responder. The ranging process shown in FIG. 4A may be referred to as one-to-many NBA-MMS UWB ranging based on a concatenate (concatenate) mode. It should be noted that this application is also applicable to a one-to-many ranging process based on another mode, for example, one-to-many NBA-MMS UWB ranging based on an interlacing (interlacing) mode. Refer to FIG. 4B. FIG. 4B is a diagram of one-to-many NBA-MMS UWB ranging based on an interlacing mode. As shown in FIG. 4B, in the one-to-many NBA-MMS UWB ranging based on the interlacing mode, each responder sequentially sends MMS fragments, instead of sending all MMS fragments by a next responder after a current responder sends all MMS fragments. In embodiments of this application, the following uses the one-to-many NBA-MMS UWB based on the concatenate mode as an example for description. The method in related embodiments is also applicable to the one-to-many NBA-MMS UWB process based on the interlacing mode. Details are not described.

In embodiments of this application, a single positioning process, namely, a process of completing a positioning task, is defined as a positioning round. The positioning round may have another name. This is not limited in this application. The positioning round may be a period of time (or time period) sufficient to complete one entire positioning task. A meaning of the positioning round is similar to a meaning of the ranging round, and a difference lies in that one is a time period corresponding to ranging, and the other is a time period corresponding to positioning. A minimum processing time unit of each positioning round is a positioning slot (positioning slot). A positioning round may be divided into three phases: a positioning control phase (positioning control phase), a positioning phase (positioning phase), and a positioning report phase (positioning report phase).

In embodiments of this application, a single sensing process, namely, a process of completing a sensing task, is defined as a sensing round. The sensing round may have another name. This is not limited in this application. The sensing round may be a period of time (or time period) sufficient to complete one entire sensing task. A meaning of the sensing round is similar to the meaning of the ranging round, and a difference lies in that one is the time period corresponding to ranging, and the other is a time period corresponding to sensing. A minimum processing time unit of each sensing round is a sensing slot (sensing slot). A sensing round may be divided into three phases: a sensing control phase (sensing control phase), a sensing phase (sensing phase), and a sensing report phase (sensing report phase).

A measurement period is a time period in which one or more UWB devices complete one or more measurement tasks. The measurement task herein may be a ranging task, a positioning task, a sensing task, or the like. The measurement period may be the ranging round, the positioning round, or the sensing round. The communication period is a time period in which one or more UWB devices complete one or more communication tasks.

In addition, it should be further noted that names of different phases in a single measurement round (for example, the ranging round, the sensing round, or the positioning round) are merely examples, and do not constitute any limitation on the protection scope of this application. For example, the measurement control phase may be understood as a phase in which a parameter required in the measurement round is configured. For another example, the measurement phase may be understood as a phase in which measurement is performed. For another example, the measurement result report phase may be understood as a phase in which the measurement result is reported, and may also be referred to as an end of the measurement phase. In addition, it should be further noted that in embodiments of this application, a size of each field indicates a number of bits occupied by the field.

In this application, a signal carrier of the message carrying the parameter configuration information is not limited. In other words, a carrier carrying messages such as a first message and a second message may be based on an NB signal, a UWB signal, or a Bluetooth signal. For example, in an NBA-MMS ranging process, the ADV-POLL/ADV-RESP/SOR/POLL/RESP/REPORT message may be carried in the NB signal. For another example, in a non-NBA-MMS ranging process, the carrier carrying the messages such as the first message and the second message may use the UWB signal.

In this application, a channel of the message carrying the parameter configuration information is not limited. For example, in the following, the ADV-POLL/ADV-RESP/SOR message uses a discovery channel (discovery channel) by default, or the ADV-POLL/ADV-RESP/SOR message may use an operation channel (operation channel). The POLL/RESP/REPORT message uses an operation channel by default, or the POLL/RESP/REPORT message may use a discovery channel.

### Format of a compressed header information element:

To reduce a duty cycle of the NB signal, the ADV-POLL message, the ADV-RESP message, and the SOR message may be carried in a message based on a compressed header information element (compressed header IE), as shown in Table 1-1. Table 1-1 is an example of a format of a message based on the compressed header information element.

**Table 1-1**

| | | |
|---|---|---|
| SHR | PHR | Compressed PSDU |

SHR (synchronization header) indicates a synchronization header, PHR is a PHY header, PSDU (PHY service data unit) indicates a physical layer service data unit, and PHY (physical layer) is a physical layer. Table 1-2 shows an example format of the compressed PSDU.

**Table 1-2**

| Octets: 1 | Octets: 2 | Octets: 1 | Variable | Octets: 2 |
|---|---|---|---|---|
| FC | Address | Message ID | Content | CRC |

FC indicates frame control (frame control), and is used to control the format of the header information element (header IE). The FC field occupies 1 octet (octet).

Address indicates a device address of a device that receives the message shown in Table 1-1. Address occupies 2 octets.

The Message ID field is a message identification field, and indicates which message the current compressed PSDU field corresponds to. Message content corresponding to the Message ID field is used to determine a type and a size of data content carried in the content (Content) field in the frame format of the compressed PSDU. The Message ID field occupies 1 octet.

The Content field is the data content carried in the compressed PSDU. A value of the field is a variable (variable), and is determined based on the message content corresponding to the Message ID field.

The CRC field is a cyclic redundancy check (cyclic redundancy check, CRC) field, and is a field for performing error detection on the compressed PSDU in Table 1-2. The CRC field occupies 2 octets.

### Format of a compressed POLL/RESP/REPORT message:

To reduce the duty cycle of the NB signal, the POLL/RESP/REPORT message may be carried in a message based on a compressed PSDU (compressed PSDU), as shown in Table 2-1. Table 2-1 is an example of a format of the POLL/RESP/REPORT message based on the compressed PSDU.

**Table 2-1**

| | | |
|---|---|---|
| SHR | PHR | Compressed PSDU |

Meanings of the fields in Table 2-1 are the same as meanings of the fields in Table 1-1. Details are not described herein again. Table 2-2 shows an example format of the compressed PSDU.

**Table 2-2**

| Octets: 1 | Octets: 2 | Variable | Octets: 2 |
|---|---|---|---|
| Message ID | Address | Content | CRC |

Meanings of the Address field, the Message ID field, the Content field, and the CRC field are the same as those in Table 1-2. Details are not described herein again. The message ID in Table 1-1, Table 1-2, Table 2-1, and Table 2-2 is not limited in embodiments of this application.

The following describes a conventional technology 1 and a conventional technology 2 that are related to a communication solution provided in embodiments of this application.

### Conventional technology 1:

The conventional technology 1 provides a scheduling information element for UWB ranging, namely, a ranging device management information element (ranging device management information element, RDM IE). Table 3 shows a format of the RDM IE in the conventional technology.

**Table 3**

| Bits: 0 | 1 | 2 to 7 | Octets: variable |
|---|---|---|---|
| SIU | Address Size | RDM List Length | RDM List |

Specifically, meanings of some fields in Table 3 are as follows:
The SIU (slot index used) field indicates an access mode used in a current ranging process. If SIU=0, the current RDM IE is used to manage a ranging process based on contention access. If SIU=1, the current RDM IE is used to manage a ranging process based on scheduling access.

The Address Size field indicates an address type of a device participating in the ranging process. If Address Size=0, it indicates that addresses of all devices related to the current RDM List (list) are short addresses, that is, an address length is 2 octets (Bytes). If Address Size=1, it indicates that addresses of all devices related to the current RDM List are extended addresses (long addresses), that is, an address length is 8 octets (Bytes).

The RDM List Length field indicates a number of elements in RDM List, namely, a number of list elements (list elements) in a format shown in Table 4. Table 4 shows the format of the list elements in RDM List in the conventional technology 1. In embodiments of this application, the list element may be referred to as a scheduling list element (scheduling list element).

The RDM List field is a list, and the format of the elements in the list is shown in Table 4.

**Table 4**

| Bits: 0 | 1 to 7 | Octets: 2/8 |
|---|---|---|
| Ranging Role | Ranging Slot Index | Address |

Specifically, meanings of some fields in Table 4 are as follows:
The Ranging Role field indicates a ranging role of a device corresponding to the Address field of the current list element. If Ranging Role=0, it indicates that the device is a ranging responder (responder). If Ranging Role=1, it indicates that the device is a ranging initiator (initiator).

The Ranging Slot Index field indicates a subscript of a slot allocated to the device that participates in ranging and that corresponds to the current list element. An address of the device is determined based on the Address field in Table 4.

The Address field indicates the address of the device that participates in ranging and that corresponds to the current list element.

Refer to Table 4. A proportion of the Address field in the list elements of RDM List is excessively high. When the number of list elements of the RDM List field is excessively large, overall transmission efficiency is reduced.

For a device with a short address (2-octet device address), the proportion of the Address field in the list elements of RDM List is 2/3≈66.7%.

For a device with a long address (8-octet device address), the proportion of the Address field in the list elements of RDM List is 8/9≈88.9%.

### Conventional technology 2:

The conventional technology 2 provides a format of a bitmap (bitmap)-based scheduling information element (information element, IE) for a UWB. Table 5 shows the format of the bitmap-based scheduling IE provided in the conventional technology 2.

**Table 5**

| Octets: 1 | Variable (one or more octets octets) |
|---|---|
| Control (control field) | Scheduling List (scheduling list field) |

The Control field occupies 1 octet (octet), and the Scheduling List field occupies one or more octets. Table 6 shows a format of the Control field of the bitmap-based scheduling IE provided in the conventional technology 2.

**Table 6**

| Bits: 0 | 1 to 7 |
|---|---|
| Address Type (address type) | Scheduling List Length (scheduling list length) |

When Address Type=0, it indicates that a device address is a short address, that is, an address length is 2 octets (16 bits). When Address Type=1, it indicates that a device address is a long address (or extended address), that is, an address length is 8 octets (64 bits). The device address herein is an address of a device scheduled by the bitmap-based scheduling IE, namely, the address of the device related to the scheduling list.

Scheduling List Length indicates a number of list elements in the scheduling list field. The list element is carried in the Scheduling List field. Table 7 shows a format of a list element in the scheduling list in the conventional technology 2.

**Table 7**

| Bits: 0 and 1 | 2 to 7 | Variable (one or more octets octets) | 2 octets or 8 octets |
|---|---|---|---|
| Bitmap Size (bitmap size) | Reserved (reserved) | Bitmap (bitmap) | Address (address) |

The bitmap (bitmap) in Table 7 indicates a one-dimensional bit string, for example, 0000100100100000. Bitmap Size indicates a length of the bitmap. A relationship between a value of Bitmap Size and the length of the bitmap is shown in Table 8. Table 8 shows the relationship between the value of Bitmap Size and the length of the bitmap.

**Table 8**

| Value of Bitmap Size | Meaning |
|---|---|
| 0 | 1-octet bitmap (8-bit bitmap) |
| 1 | 2-octet bitmap (16-bit bitmap) |
| 2 | 4-octet bitmap (32-bit bitmap) |
| 3 | 8-octet bitmap (64-bit bitmap) |

For example, the bitmap shown in Table 7 indicates a bit string whose length is 8, that is, indicates eight slots (each bit corresponds to one slot), that is, a corresponding value of Bitmap Size is 0. If a bit is 1, it indicates that a device that participates in ranging and that corresponds to a list element corresponding to the bitmap sends a UWB signal in a slot corresponding to the bit. Correspondingly, if a bit is 0, it indicates that the device does not send a UWB signal in a slot corresponding to the bit 0.

**Table 9**

| | | | | | | | |
|---|---|---|---|---|---|---|---|
| 0 | 1 | 0 | 1 | 1 | 0 | 1 | 1 |

The bitmap shown in Table 9 sequentially indicates a slot 1 to a slot 8 (or a slot 0 to a slot 7) from left to right. If bits corresponding to a slot 2, a slot 4, a slot 5, a slot 7, and the slot 8 are all 1, it indicates that the device sends the UWB signal in the slot 2, the slot 4, the slot 5, the slot 7, and the slot 8. If bits corresponding to the slot 1, a slot 3, and a slot 6 are all 0, it indicates that the device does not send the UWB signal in the slot 1, the slot 3, and the slot 6.

It should be noted that, in this specification, a manner of describing, for example, the bitmap in Table 9 is a left-to-right indication manner by default. In other words, the bitmap sequentially indicates a near-to-far sequence of the slots from left to right. For example, for the bitmap whose length is 1 octet, the bitmap sequentially indicates a slot 1 to a slot 8 (or a slot 0 to a slot 7) from left to right. In addition, the bitmap in embodiments of this application may alternatively be described from right to left, that is, sequentially indicate a near-to-far sequence of the slots. A description sequence of the bitmap is not limited in embodiments of this application. This specification is described by using an indication manner from left to right as an example.

Refer to Table 7. A proportion of the Address field in the list elements of Scheduling List is excessively high. When the number of list elements in the Scheduling List field is excessively large, overall transmission efficiency is reduced.

For a device with a short address (2-octet device address), the proportion of the Address field in the list elements of RDM List is shown in Table 10. Table 10 shows an overhead proportion of the address field of the device with a short address.

**Table 10**

| | | | | |
|---|---|---|---|---|
| Bitmap length (octet) | 1 | 2 | 4 | 8 |
| Proportion of an Address field | 50% | 40% | 28.6% | 18.2% |

For a device with a long address (8-octet device address), the proportion of the Address field in the list elements of RDM List is shown in Table 11. Table 11 shows an overhead proportion of the address field of the device with a long address.

**Table 11**

| | | | | |
|---|---|---|---|---|
| Bitmap length (octet) | 1 | 2 | 4 | 8 |
| Proportion of an Address field | 80% | 72.7% | 61.5% | 47.1% |

It can be learned from Table 10 and Table 11 that the proportion of the address field in the list element of the scheduling list field cannot be ignored. For a common number of scheduling slots, for example, when a number of scheduling slots is less than or equal to 16 (that is, a bitmap with a length of 1 octet or 2 octets is used), even for the device with a short address, the proportion of the address field is 40% or 50%. It can be learned from the foregoing analysis that overall transmission efficiency of the scheduling design in the conventional technology 2 is low.

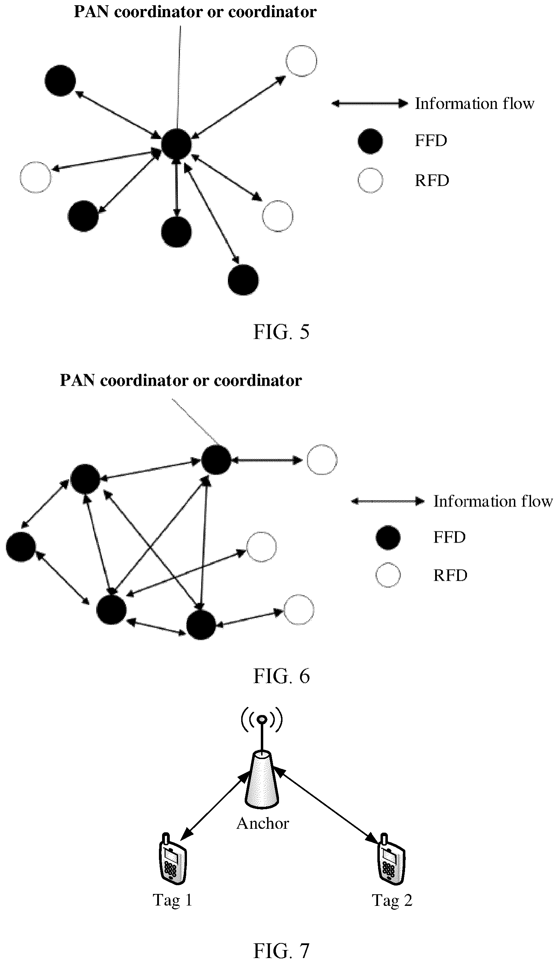

The communication solution for the UWB provided in embodiments of this application may operate in a star topology structure, a point-to-point topology structure, or a mesh topology structure. The communication solution for the UWB provided in embodiments of this application may further operate in another topology structure. This is not limited in this application. FIG. 5 is a diagram of an example of a star topology structure. As shown in FIG. 5, a star topology includes a central control node, for example, a personal area network (personal area network, PAN) or a coordinator shown in FIG. 5. The communication solution for the UWB provided in embodiments of this application is applicable to data communication/sensing/ranging/positioning between the central control node and one or more other devices in the star topology. FIG. 6 is a diagram of an example of a point-to-point topology structure or a mesh topology structure. The communication solution for the UWB provided in embodiments of this application is also applicable to communication/sensing/ranging/positioning between different devices in a point-to-point topology structure or a mesh topology structure (FIG. 6). In FIG. 5 and FIG. 6, a black node is a full function device (full function device, FFD), and a white node is a reduced function device (reduced function device, RFD). The FFD may serve as the PAN coordinator or the coordinator, but the RFD cannot serve as the PAN coordinator or the coordinator. FFD devices can communicate with each other, and the FFD device and the RFD device can communicate with each other. RFD devices cannot directly communicate with each other, and can only communicate with the FFD device, or forward data externally through one FFD device. In a UWB system, the FFD may be an anchor device or a tag device with a strong computing capability (for example, a UWB tag carried on a smartphone), and the RFD is a tag device with only some computing capabilities.

The technical solutions of this application are mainly applicable to the UWB system, for example, a UWB system that supports the IEEE 802.15.4a standard, the IEEE 802.15.4z standard, the IEEE 802.15.4ab standard, or a next-generation standard of the IEEE 802.15.4ab standard. A person skilled in the art easily understands that aspects of this application may be extended to other networks using various standards or protocols, for example, Bluetooth (Bluetooth), a high-performance radio LAN (high performance radio LAN, HIPERLAN) (a wireless standard similar to the IEEE 802.11 standard, mainly used in Europe), a wide area network (WAN), a personal area network (personal area network, PAN), or another network currently known or later developed. Therefore, regardless of a used coverage area and a used wireless access protocol, the various aspects provided in embodiments of this application are applicable to any suitable wireless network.

FIG. 7 shows an example of a UWB system to which a technical solution according to an embodiment of this application is applicable. The UWB system includes an anchor (anchor, only one anchor is shown), and one or more tags (tag, only a tag 1 and a tag 2 are shown). Protocols supported by the anchor and the tag may include protocols such as IEEE 802.15.4a, IEEE 802.15.4z, and IEEE 802.15.4ab. Certainly, with continuous evolution and development of communication technologies, the WLAN protocol may further include a next-generation protocol of IEEE 802.15.4ab, and the like. The anchor may be an access point, and the tag mat be a station (Station, STA). Both the access point and the STA support a WLAN protocol, and the WLAN protocol may include IEEE 802.11be (or referred to as Wi-Fi 7 or the EHT protocol).

The access point is an apparatus having a wireless communication function, supports communication according to the WLAN protocol, and has a function of communicating with another device (for example, a station or another access point) in the WLAN network. Certainly, the access point may further have a function of communicating with another device. The UWB system includes one or more access point (access point, AP) stations and one or more non-access point stations (non-access point station, non-AP STA). For ease of description, in this specification, the access point station is referred to as an access point (AP), and the non-access point station is referred to as a station (STA).

The access point may be an entire device, or may be a chip, a processing system, or the like installed in the entire device. The device in which the chip or the processing system is installed may implement a method and a function in embodiments of this application under control of the chip or the processing system (namely, the AP). The AP in embodiments of this application is an apparatus that provides a service for the station (Station, STA), and may support, for example, IEEE 802.15.4a, IEEE 802.15.4z, IEEE 802.15.4ab, or a next generation thereof. For example, the AP may be a communication entity like a communication server, a router, a switch, a bridge, a computer, or a mobile phone. The AP may include an anchor (anchor), a macro base station, a micro base station (also referred to as a small cell), a picocell base station, a femto base station, a relay station, an access point, a gNB, a transmission reception point (transmission reception point, TRP), an evolved NodeB (evolved NodeB, eNB), a radio network controller (radio network controller, RNC), a home base station (for example, a home evolved NodeB or a home NodeB, HNB), a baseband unit (baseband unit, BBU), a Wi-Fi access point (access point, AP), integrated access and backhaul (integrated access and backhaul, IAB), or the like. Certainly, the AP may alternatively be a chip and a processing system in these devices in various forms, to implement the method and the function in embodiments of this application.

The station is an apparatus having a wireless communication function, supports communication according to the WLAN protocol, and has a capability of communicating with another station or access point in the WLAN network. For example, the STA is any communication apparatus that allows a user to communicate with the AP and further communicate with the WLAN. The communication apparatus may be an entire device, or may be a chip, a processing system, or the like installed in the entire device. The device in which the chip or the processing system is installed may implement a method and a function in embodiments of this application under control of the chip or the processing system (namely, the station). The STA may include a tag (tag) device/smart tag (smart tag) device, a mobile phone (mobile phone), a mobile station (mobile station, MS), a tablet computer (pad), a computer with a wireless transceiver function (for example, a notebook computer), a virtual reality (virtual reality, VR) device, an augmented reality (augmented reality, AR) device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a subscriber unit (subscriber unit), a cellular phone (cellular phone), a wireless data card, a personal digital assistant (personal digital assistant, PDA) computer, a tablet computer, a laptop computer (laptop computer), a machine-type communication (machine-type communication, MTC) terminal, or the like. The station may include various handheld devices, vehicle-mounted devices, wearable devices, or computing devices that have a wireless communication function, or other processing devices connected to a wireless modem. For example, the station may be a handheld device (handset), a vehicle-mounted device, a wearable device, a terminal in the Internet of things or the Internet of vehicles, a terminal in any form in 5G and a communication system evolved after 5G, or the like that has a wireless communication function. This is not limited in this application. The station may support IEEE 802.15 series protocols such as IEEE 802.15.4a, IEEE 802.15.4z, and IEEE 802.15.4ab.

In a multi-node NBA-MMS UWB system, because octet overheads occupied by a device address are excessively large, signaling overheads of a configuration information list (for example, RDM List in the conventional technology 1 and the scheduling list in the conventional technology 2) are large. In this application, a manner of compressing a device address is designed, to reduce a proportion of the device address in the configuration information list, and further reduce signaling overheads of the configuration information list.

It should be noted that, unless otherwise specified, the following uses an initiator (initiator) as a controller (controller) by default for description. The method provided in this application is also applicable to corresponding descriptions of a case in which a responder (responder) is a controller or a controller is a third-party device. In addition, unless otherwise specified, the following uses a one-to-many (one-to-many) case for description by default, that is, one initiator corresponds to a plurality of responders. The method provided in this application is also applicable to corresponding descriptions of a case in which a plurality of initiators correspond to a plurality of responders. In addition, unless otherwise specified, the following is described by default by using an example in which the initiator broadcasts a configuration update message of a measurement round (for example, a ranging round) to all responders based on a measurement initiation message before each measurement round starts. Correspondingly, after receiving the configuration update message of the measurement round, the responder completes parameter update configuration, and starts measurement of a current round and measurement of a subsequent measurement round based on the updated parameter (until next parameter update configuration). The method provided in this application is also applicable to corresponding descriptions of a case in which the initiator broadcasts a measurement initiation message at another moment, for example, broadcasts a configuration update message of a measurement round based on the measurement initiation message in a measurement report phase of each measurement round.

In addition, unless otherwise specified, the configuration update message of the measurement round is broadcast by being carried in the measurement initiation message by default in the following. This is also applicable to corresponding descriptions of a case in which the configuration update message of the measurement round is broadcast by being carried in another message. For example, the method provided in this application is applicable to a case in which the configuration update message of the measurement round is carried in a POLL message that is sent by the initiator to the responder in NBA-MMS UWB ranging. For example, in one-to-many NBA-MMS UWB ranging, a configuration update message of a ranging round is carried in a POLL message that is sent by the initiator to an initial responder. The initial responder is a responder that performs ranging with the initiator initially in a time sequence in the plurality of responders. In this case, the POLL message is sent in a broadcast manner. For another example, in NBA-MMS UWB ranging, the configuration update message of the measurement round is carried in a RESPONSE message that is sent by the responder to the initiator. For another example, in NBA-MMS UWB ranging, the configuration update message of the measurement round is carried in a REPORT message that is sent by the initiator (responder) to the responder (initiator). The method provided in this application is applicable to the foregoing example cases. In addition, unless otherwise specified, the Address Size field is used by default below to trigger the function defined in embodiments of this application to take effect. The method provided in this application is applicable to corresponding descriptions of a case in which another field is used for triggering, for example, another field different from the Address Size field is defined. In addition, for ease of description, it is assumed by default below that in an initial measurement initiation message, an order in which list elements appear is consistent with an order of subscripts of devices, that is, a list element #0, a list element #1, ..., and a list element #N respectively correspond to a device 0, a device 1, ..., and a device N. The corresponding descriptions are also applicable to another case. For example, the method provided in this application is also applicable to a corresponding case in which a list element #0, a list element #1, ..., and a list element #N respectively correspond to a device 2, a device 4, ..., and a device N. In addition, unless otherwise specified, the following uses a ranging process as an example by default. The method provided in this application is also applicable to corresponding descriptions of another measurement process like sensing and positioning. In other words, the following uses an example in which a measurement process is ranging for description. In addition, unless otherwise specified, an updated round and a round that is not updated are not adjacent in time by default in the following. The method provided in this application is also applicable to corresponding descriptions in which rounds are adjacent in time.

In addition, unless otherwise specified, the following uses NBA-MMS UWB ranging as an example for description by default. The corresponding descriptions are also applicable to other measurement application like ranging, sensing, and positioning. The other ranging includes but is not limited to non-NBA-MMS ranging (ranging that neither includes NBA ranging nor MMS), and MMS ranging (ranging that does not include NBA but includes MMS).

With reference to the accompanying drawings, the following describes the communication solution for the UWB provided in embodiments of this application.

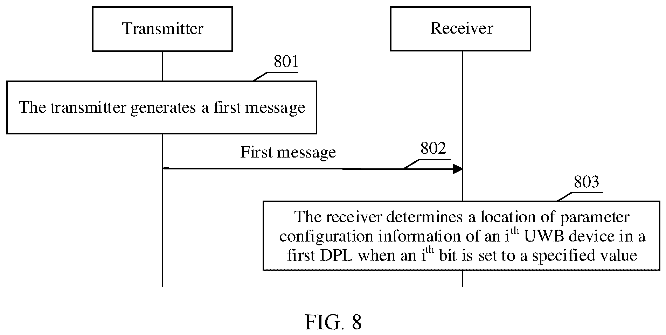

FIG. 8 is an interaction flowchart of a communication method for a UWB according to an embodiment of this application. The method shown in FIG. 8 may be applied to scenarios such as ranging, sensing, positioning, and communication, for example, scenarios such as NBA-MMS-based ranging, NBA-MMS-based sensing, and NBA-MMS-based positioning. As shown in FIG. 8, the method includes the following steps.

801: A transmitter generates a first message.

The transmitter may be a UWB device that supports a UWB standard. The transmitter may be an AP, or may be a station. The transmitter may be an FFD, or may be an RFD. The transmitter may be a ranging, sensing, positioning, or communication initiator (initiator), namely, a ranging initiator, a sensing initiator, a positioning initiator, or a communication initiator; may be a ranging, sensing, positioning, or communication responder (responder), namely, a ranging responder, a sensing responder, a positioning responder, or a communication responder; or may be a third-party device (which may be referred to as a controller device), that is, may not be an initiator or a responder (responder) of ranging, sensing, positioning, or communication. For example, the transmitter is an initiator, and the first message is a measurement initiation message or a poll/initiation POLL message. The measurement initiation message may be an SOR message, a sensing initiation message, a positioning initiation message, or a communication initiation message. The poll POLL message may also be referred to as a poll message. A name of the POLL message is not limited in this application.

The first message may carry a first device parameters list (device parameters list, DPL), and the first DPL includes one or more list elements. Each list element includes parameter configuration information of one device (a device corresponding to the list element). Alternatively, each list element includes scheduling information of one device (a device corresponding to the list element), and the scheduling information indicates a time unit that may be occupied by the device to transmit a UWB signal, that is, a time unit used by the device to transmit the UWB signal. In embodiments of this application, the parameter configuration information of the device corresponding to the list element in the first DPL may be information used by the device to determine parameter configuration of the device, or may be information used to change/update parameter configuration of the device. A name of the DPL is not limited in this application, and the DPL herein is merely an example.

The first message includes a first bitmap. The first bitmap may be included in a compressed device identifier (compressed device identifier, CPDID) field in the first message. A name of the field that includes the first bitmap and that is in the first message is not limited. The following uses an example in which the CPDID field includes the first bitmap for description. The first bitmap may include N bits, and N is an integer greater than 0. An i^{th} bit in the first bitmap corresponds to an i^{th} UWB device. In this application, the i^{th} bit in the first bitmap is the i^{th} bit arranged in order (for example, from left to right or from right to left, where the following is described by using an order from left to right as an example) in the first bitmap. One or more bits in the first bitmap each correspond to one UWB device. For example, a length of the first bitmap is 8, and each bit in the first bitmap corresponds to one UWB device, that is, a 0^{th} bit (initial bit) corresponds to a 0^{th} UWB device, a first bit corresponds to a first UWB device, ..., and a seventh bit corresponds to a seventh UWB device. Table 12 is an example of the first bitmap.

**Table 12**

| **Bits: 0** | **1** | **2** | **3** | **4** | **5** | **6** | **7** |
|---|---|---|---|---|---|---|---|
| 0/1 | 0/1 | 0/1 | 0/1 | 0/1 | 0/1 | 0/1 | 0/1 |

In Table 12, each bit from left to right corresponds to one UWB device. For example, it is assumed that bits from left to right respectively correspond to a 0^{th} UWB device to a seventh UWB device. When a bit is 0, it indicates that the first DPL does not include parameter configuration information of a UWB device corresponding to the bit. When the bit is 1, it indicates that the first DPL includes the parameter configuration information of the UWB device corresponding to the bit. For another example, a length of the first bitmap is 16, and each of first 12 bits arranged in order in the first bitmap corresponds to one UWB device, that is, a 0^{th} bit corresponds to a 0^{th} UWB device, a first bit corresponds to a first UWB device, ..., and an eleventh bit corresponds to an eleventh UWB device. Last 6 bits arranged in order in the first bitmap do not correspond to a UWB device. When the i^{th} bit in the first bitmap is set to a specified value, the i^{th} bit indicates a location of parameter configuration information of the i^{th} UWB device in the first DPL. The location of the parameter configuration information of the i^{th} UWB device in the first DPL may be understood as a location of a list element corresponding to the i^{th} UWB device in the first DPL. The specified value is 0 or 1. The following uses the specified value 1 as an example for description. i is greater than or equal to 1 and less than or equal to N. When the i^{th} bit in the first bitmap is not set to the specified value, the i^{th} bit indicates that the first DPL does not include the parameter configuration information of the i^{th} UWB device. When the i^{th} bit in the first bitmap is set to the specified value, the i^{th} bit indicates that the first DPL includes the parameter configuration information of the i^{th} UWB device.

802: The transmitter sends the first message.

Correspondingly, one or more receivers receive the first message. For example, the transmitter is both an initiator and a controller, and the receiver is a responder. For another example, the transmitter is a controller, and the receiver is a responder.

In a possible implementation, the first DPL includes one or more list elements arranged in order. When the i^{th} bit is an F^{th} bit that is arranged in order in the first bitmap and that is set to the specified value, the i^{th} bit indicates that an F^{th} list element in the first DPL includes the parameter configuration information of the i^{th} UWB device, where F is an integer greater than 0 and less than or equal to N. A number of bits in the first bitmap that are set to the specified value may be equal to a number of list elements in the first DPL. For example, the length of the first bitmap is 8, values of 3 bits in the first bitmap are 1, and the first DPL includes three list elements. The F^{th} bit that is arranged in order in the first bitmap and whose value is the specified value corresponds to the F^{th} list element in the first DPL. In other words, an order of the one or more list elements arranged in order in the first DPL is consistent with an order, in the first bitmap, of one or more UWB devices corresponding to the one or more list elements. Table 13 is another example of the first bitmap.

**Table 13**

| **Bits: 0** | **1** | **2** | **3** | **4** | **5** | **6** | **7** |
|---|---|---|---|---|---|---|---|
| 1 | 0 | 0 | 0 | 1 | 1 | 0 | 0 |

The length of the first bitmap is 8, and each bit in the first bitmap corresponds to one UWB device, that is, a 0^{th} bit corresponds to a 0^{th} UWB device, a first bit corresponds to a first UWB device, ..., and a seventh bit corresponds to a seventh UWB device. Values of the 0^{th} bit, the fourth bit, and a fifth bit in the first bitmap are the specified value, it indicates that the list elements in the first DPL are sequentially: a list element corresponding to the 0^{th} UWB device, a list element corresponding to a fourth UWB device, and a list element corresponding to a fifth UWB device. Refer to Table 14. It can be learned from Table 13 and Table 14 that the 0^{th} (initial) list element arranged in order in the first DPL includes parameter configuration information of the 0^{th} UWB device, a 2^{nd} list element arranged in order in the first DPL includes parameter configuration information of the fourth UWB device, and a 3^{rd} list element arranged in order in the first DPL includes parameter configuration information of the fifth UWB device.

**Table 14**

| **Octets: TBD** | **Octets: TBD** | **Octets: TBD** |
|---|---|---|
| Device Parameters List element #0 (0^{th} UWB device) | Device Parameters List element #1 (fourth UWB device) | Device Parameters List element #2 (fifth UWB device) |

In Table 14, Device Parameters List element (device parameters list element) #0 is the list element corresponding to the 0^{th} UWB device, for example, Device Parameters List element #0 is an update parameter set of the 0^{th} UWB device. Device Parameters List element #1 is the list element corresponding to the fourth UWB device, for example, Device Parameters List element #1 is an update parameter set of the fourth UWB device. Device Parameters List element #2 is the list element corresponding to the fifth UWB device, for example, Device Parameters List element #2 is an update parameter set of the fifth UWB device. The update parameter set of the UWB device is used to update parameter configuration of the UWB device. In this application, TBD (To be determined) indicates any value. This is not limited in this application. For example, a length of a device parameters list element in Table 14 is represented by Octets: TBD, indicating that the length of the device parameters list element may occupy one or more octets, that is, the length of the device parameters list element is not limited. In other words, the length of the device parameters list element may be flexibly configured based on a requirement. This is not limited in this application.

In a possible implementation, the first message further includes a first field, and the first field indicates to use the first bitmap to identify (identify) a location of parameter configuration information of a UWB device in the first DPL. The first field includes one or more bits. For example, the first field includes 1 bit. When a value of the bit is 1, the first field indicates to use the first bitmap to identify the location of the parameter configuration information of the UWB device in the first DPL. For another example, the first field includes 2 bits, and when a value of the 2 bits (namely, a binary value represented by the 2 bits) is 2, the first field indicates to use the first bitmap to identify the location of the parameter configuration information of the UWB device in the first DPL. The first field may be referred to as an address size field or another field. This is not limited herein. Table 15 shows an example of a meaning of a value of the first field. The value of the first field in Table 15 is merely an example, and is not limited. In this implementation, the first field indicates to use the first bitmap to identify the location of the parameter configuration information of the UWB device in the first DPL, so that a receiver learns, based on the first field, of the location, in the first DPL, that is identified by the first bitmap and that is of the parameter configuration information of the UWB device.

**Table 15**

| **Value of a first field** | **Corresponding meaning** |
|---|---|
| 0 | All list elements in a DPL use short addresses to identify devices |
| 1 | All the list elements in the DPL use long addresses to identify the devices |
| 2 | A first bitmap (CPDID field) is used to identify a location of parameter configuration information of a UWB device in the DPL |
| 3 | RFU (reserved for future use, reserved for future use, which is equivalent to reserved) |

In a possible implementation, the first message further includes a field indicating the length of the first bitmap. The field that is in the first message and that indicates the length of the first bitmap may be referred to as a CPDID Size field or another field. This is not limited in this application.

A device parameters management (device parameters management) field in the first message is used to update parameter configuration information of one or more responders. The device parameters management field may have another name. This is not limited herein. Table 16 shows an example of a format of the device parameters management field in the first message.

**Table 16**

| **Bits: 0 and 1** | **2 to 7** | **8** | **9 to 15** | **Octets: TBD** | **Octets: TBD** |
|---|---|---|---|---|---|
| Address Size | Device Parameters List Length | CPDID Size | RFU | Compressed Device Identifier (CPDID) | Device Parameters List (DPL) |

The CPDID Size field indicates a size of the CPDID field. In other words, the CPDID Size field indicates the length of the first bitmap. The CPDID Size field may occupy 1 bit. For example, the CPDID Size field occupies 1 bit. When a value of the CPDID Size field is 0, it indicates that the size of the CPDID field is 1 octet. When the value of the CPDID Size field is 1, it indicates that the size of the CPDID field is 2 octets. The CPDID size field takes effect only when the configuration indicates that the device address is configured in a compression manner. In other words, the CPDID size field takes effect only when the Address Size field indicates that the CPDID field (including the first bitmap) is used to identify the location of the parameter configuration information of the UWB device in the DPL. The CPDID Size field is optional. In some possible embodiments, a length of the CPDID field is fixed, for example, fixed to 1 octet or 2 octets. In this case, the device parameters management field may not include the CPDID Size field. In some possible embodiments, the length of the CPDID field is variable. In this case, the length of the CPDID field needs to be indicated by the CPDID Size field.

The CPDID field is a field including the first bitmap, and indicates the location of the parameter configuration information of the UWB device in the DPL. In other words, the CPDID field can indicate whether the parameter configuration information of the UWB device is located in the DPL, and can also indicate the location of the parameter configuration information of the UWB device in the DPL. In other words, the CPDID field indicates a UWB device corresponding to each list element in the DPL. In other words, the CPDID field includes a compression identifier of parameter configuration of one or more UWB devices. The CPDID field is present only when the configuration indicates that the device address is configured in the compression manner. In other words, the CPDID field is present only when the Address Size field indicates that the CPDID field (including the first bitmap) is used to identify the location of the parameter configuration information of the UWB device in the DPL.

The device parameters list length (Device Parameters List Length) field indicates a number of list elements in the DPL. The Device Parameters List Length field may occupy 6 bits. The Device Parameters List Length field is optional. When the Address Size field (namely, the first field) indicates that the CPDID field is used to identify the location of the parameter configuration information of the UWB device in the first DPL, the Device Parameters List Length field shown in Table 16 does not take effect. In this case, the number of list elements in the DPL may be directly determined based on a sum of a number of bits whose values are 1 in the CPDID field.

The Address Size field (namely, the first field) indicates to use the CPDID field (including the first bitmap) to identify the location of the parameter configuration information of the UWB device in the first DPL. The Address Size field may occupy 2 bits. Refer to Table 15. In the Address Size field, a new value 2 of the field is introduced to trigger the CPDID size field to take effect and the presence of the CPDID field. The Address Size may be referred to as another field. This is not limited herein.

RFU occupies 7 bits, and is reserved for future use.

It should be noted that Table 16 is merely an example of the format of the device parameters management field in the first message. A location and a size of each subfield in the device parameters management field are not limited in this application.

Table 17 shows an example of a format of a list element in the DPL.

**Table 17**

| Bits: 0 | 1 | 2 | 3 | 4 | 5 to 7 | Octets: TBD | Octets: TBD | Octets: TBD | Oct ets: TB D | Octets: TBD |
|---|---|---|---|---|---|---|---|---|---|---|
| Channel configuration Presence | MMS fragment configuration Presence | MMS preamble parameters Presence | NB data rate Presence | Time Offset to Next MMS POLL Packet Presence | RFU | Channel configuration | MMS fragment configuration | MMS preamble parameters | NB data rate | Time Offset to Next MMS POLL Packet |

It can be learned from Table 13 and Table 14 that the receiver does not need to read a device address of the receiver, but may learn, by reading the first bitmap, whether the receiver needs to perform updating in a current round. Table 17 is an example of the list element in the DPL. The CPDID field indicates a location, in the DPL, of a list element corresponding to the UWB device, so that the device address in the list element is omitted, and signaling overheads for updating the list element can be reduced. It should be noted that Table 17 is merely an example of the list element. Any list element that carries the device address may indicate, based on the CPDID field, a location, in the DPL, of the list element corresponding to the UWB device, so that the device address in the list element is omitted. The following further describes some examples in which the CPDID field indicates the location of the parameter configuration information of the UWB device in the DPL.

803: The receiver determines the location of the parameter configuration information of the i^{th} UWB device in the first DPL when the i^{th} bit is set to the specified value.

Before performing step 803, the receiver may learn of a correspondence between one or more bits in the first bitmap and the UWB device (or the device address). For example, before receiving the first message, the receiver receives a configuration message, and determines the correspondence between the one or more bits in the first bitmap and the UWB device based on the configuration message. In a possible implementation of step 803, when the i^{th} bit is an F^{th} bit that is arranged in order in the first bitmap and that is set to the specified value, it is determined that an F^{th} list element in the first DPL includes the parameter configuration information of the i^{th} UWB device. F is an integer greater than 0. For example, the first bitmap is shown in Table 13, and values of the 0^{th} bit, the fourth bit, and the fifth bit in the first bitmap are the specified value. It indicates that the list elements in the first DPL are sequentially: the list element corresponding to the 0^{th} UWB device, the list element corresponding to the fourth UWB device, and the list element corresponding to the fifth UWB device. The receiver may determine, based on the first bitmap, that the parameter configuration information of the 0^{th} UWB device is in the initial list element of the first DPL, the parameter configuration information of the fourth UWB device is in the 2^{nd} list element of the first DPL, and the parameter configuration information of the fifth UWB device is in the 3^{rd} list element of the first DPL.

The i^{th} UWB device may be the receiver, or may not be the receiver. Step 803 is merely an example in which the receiver determines a location of parameter configuration information of a UWB device in the first DPL. It should be understood that any receiver may determine a location of parameter configuration information of another UWB device in the first DPL in a similar manner.

In embodiments of this application, the first bitmap indicates the location of the parameter configuration information of the UWB device in the DPL, so that a device address in a list element is omitted, and signaling overheads for updating the list element can be reduced.

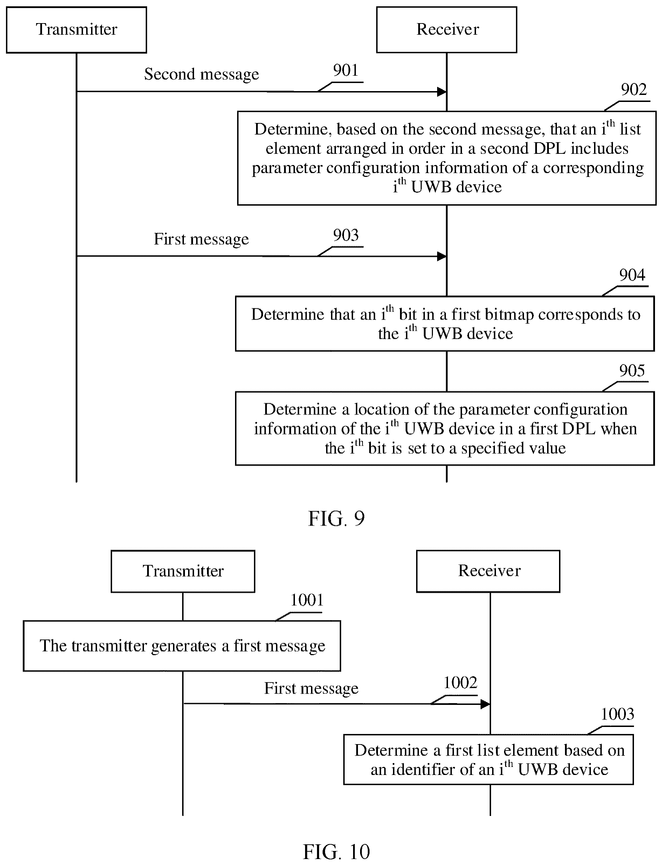

FIG. 9 is an interaction flowchart of another communication method for a UWB according to an embodiment of this application. A method procedure in FIG. 9 is a possible implementation of the method described in FIG. 8. The method procedures in FIG. 8 and FIG. 9 are applicable to a scenario in which a number of receivers is small (for example, the number of receivers is less than or equal to 16). In this implementation, a transmitter sends a second message to a receiver, so that the receiver determines a correspondence between a UWB device and a bit in a bitmap subsequently sent by the transmitter. As shown in FIG. 9, the method includes the following steps.

901: The transmitter sends the second message.

Correspondingly, one or more receivers receive the second message. The second message may be a broadcast message. For example, the second message is an SOR message or a POLL message that is broadcast by the transmitter to all responders participating in measurement before an initial measurement round.

The second message includes a second DPL, and the second DPL includes one or more list elements arranged in order. Any list element in the second DPL includes an address, namely, a device address, of a UWB device corresponding to the any list element. In other words, any list element in the second DPL includes a device address, and the device address is an address of a UWB device corresponding to the any list element. An i^{th} list element arranged in order in the second DPL includes parameter configuration information of a corresponding i^{th} UWB device. For example, the second DPL includes eight list elements arranged in order, and each list element includes one device address. Table 18 is an example of the second DPL.

**Table 18**

| Octets: TBD | Octets: TBD | Octets: TBD | Octets: TBD | Octets: TBD | Octets: TBD | Octets: TBD | Octets: TBD |
|---|---|---|---|---|---|---|---|
| List element #0 (0^{th} UWB device) | List element #1 (first UWB device) | List element #2 (second UWB device) | List element #3 (third UWB device) | List element #4 (fourth UWB device) | List element #5 (fifth UWB device) | List element #6 (sixth UWB device) | List element #7 (seventh UWB device) |

In Table 18, the second DPL includes eight list elements arranged in order. The list element #0 includes an address of the 0^{th} UWB device, the list element #1 includes an address of the first UWB device, ..., and the list element #7 includes an address of the seventh UWB device. In Table 18, the i^{th} list element arranged in order in the second DPL includes the parameter configuration information of the corresponding i^{th} UWB device.

902: The receiver determines, based on the second message, that the i^{th} list element arranged in order in the second DPL includes the parameter configuration information of the corresponding i^{th} UWB device.

i is an integer greater than 0. Alternatively, the receiver determines, based on the second message, that the i^{th} list element arranged in order in the second DPL includes the parameter configuration information of the i^{th} UWB device. In this application, the parameter configuration information of the UWB device may include one or more of measurement round update duration, a number of MMS fragments, ranging phase duration (ranging phase duration, RPDuration), a device scheduling slot, a parameter related to an MMS ranging sequence fragment (ranging sequence fragment, RSF), a parameter related to a ranging integrity fragment (ranging integrity fragment, RIF), a channel used by an NB, a signal carrier (for example, an NB, a UWB, and Bluetooth) used for measurement reporting, and the like. The parameters related to the RSF and/or the RIF include but are not limited to: a number of RSFs, a sequence used by the RSF, a time offset from the start of a ranging phase to an initiator first RSF (Time offset from the start of Ranging phase to the Initiator first RSF, TORPInitRSF), a time offset from the start of a ranging phase to a responder first RSF (Time offset from the start of Ranging phase to the Responder first RSF, TORPRespRSF), a time offset from the start of a ranging phase to an initiator first RIF (Time offset from the start of Ranging phase to the Initiator first RIF, TORPInitRIF), a time offset from the start of a ranging phase to a responder first RIF (Time offset from the start of Ranging phase to the Responder first RIF, TORPRespRIF), a number of RIFs, and a length of the RIF (for example, a length in one-or-more-chip chip units). The sequence used by the RSF may be determined based on a code index corresponding to the sequence used by the RSF (RSF code index) and/or zeros of a complementary sequence used by the RSF (RSF complementary set zeros). In this application, the parameter configuration information of the UWB device may include one or more of the foregoing parameters related to the RSF and/or the RIF.

It may be understood that the receiver may determine, based on the second message, a UWB device whose parameter configuration information is included in each list element arranged in order in the second DPL. Any receiver that receives the second message may perform step 902. The receiver may be the i^{th} UWB device. In other words, the receiver may determine the location of the parameter configuration information of the receiver in the second DPL. In a possible implementation, the receiver determines and records the location of the parameter configuration information of the receiver in the second DPL. The receiver may further determine and record a location of parameter configuration information of another UWB device in the second DPL.

903: The transmitter sends a first message.

For step 903, refer to step 801.

904: The receiver determines that an i^{th} bit in a first bitmap corresponds to the i^{th} UWB device.

Before receiving the first message, the receiver may record the location of the parameter configuration information of the i^{th} UWB device in the second DPL, that is, record that the i^{th} list element arranged in order in the second DPL includes the parameter configuration information of the i^{th} UWB device. In a possible implementation of step 904, the receiver determines, based on the recorded location of the parameter configuration information of the i^{th} UWB device in the second DPL, that the i^{th} bit in the first bitmap corresponds to the i^{th} UWB device. It may be understood that the receiver may determine, in a same manner, UWB devices corresponding to one or more bits in the first bitmap, instead of determining only the i^{th} UWB device corresponding to the i^{th} bit in the first bitmap. Some or all bits in the first bitmap correspond to list elements in the second DPL. Optionally, the UWB device corresponding to the i^{th} bit arranged in order in the first bitmap is a UWB device corresponding to the i^{th} list element arranged in order in the second DPL. The i^{th} list element arranged in order in the second DPL includes parameter configuration information of the UWB device corresponding to the i^{th} list element. For example, the second DPL is shown in Table 18. The first bitmap includes 8 bits, and the 8 bits arranged in order in the first bitmap sequentially correspond to the 0^{th} UWB device, the first UWB device, the second UWB device, ..., and the seventh UWB device.

905: Determine a location of the parameter configuration information of the i^{th} UWB device in a first DPL when the i^{th} bit is set to a specified value.

For step 905, refer to step 803.

In embodiments of this application, the transmitter sends the second message to the receiver, and the receiver determines, based on the second message, a correspondence between a bit in the first bitmap subsequently sent by the transmitter and the UWB device, to indicate the location of the parameter configuration information of the UWB device in the DPL based on the first bitmap, so that the device address in the list element is omitted, and signaling overheads for updating the list element can be reduced.

The following describes an example of a possible format of the list element in the DPL in Table 16. In these examples, according to the method in embodiments of this application, the list element in the DPL does not include the device address or identified information of another device, to reduce a length of the list element. Table 19 to Table 27 show examples of several possible formats of a list element in the DPL.

**Table 19**

| | | | |
|---|---|---|---|
| Bits: 0 and 1 | 2 to 5 | 6 and 7 | Variable (one or more octets octets) |
| Bitmap Size (bitmap size) | Bitmap Offset (bitmap offset) | Reserved (reserved) | Bitmap (time unit bitmap) |

The list element in Table 19 indicates a time unit to be occupied by transmitting a UWB signal by a UWB device corresponding to the list element. The bitmap offset is used to determine a start time unit in which the UWB device (which is referred to as a UWB device 1 below) corresponding to the list element transmits the UWB signal. The time unit bitmap indicates whether a time unit is used by the UWB device corresponding to the list element to transmit the UWB signal. A time unit corresponding to an initial bit of the time unit bitmap is the start time unit. It may be understood that the bitmap offset is used to determine the time unit corresponding to the initial bit of the time unit bitmap, and a time unit corresponding to each bit in the time unit bitmap may be determined based on the bitmap offset and the time unit bitmap. The bitmap size field indicates a length of the time unit bitmap.

Refer to Table 19. The bitmap size field occupies 2 bits, namely, the bit 0 and the bit 1; the bitmap offset occupies 4 bits, namely, the bit 2 to the bit 5, the reserved field occupies 2 bits, namely, the bit 6 and the bit 7, the time unit bitmap occupies one or more octets, that is, the length of the time unit bitmap is a variable value. It may be understood that Table 19 shows merely an example of a list element in the DPL, and a number of bits occupied by each field and a location of each field in the list element are not limited.

**Table 20**

| | | | | | |
|---|---|---|---|---|---|
| Bits: 0 and 1 | 2 | 3 to 7 | Variable (one or more octets octets) | Bits: 0 to 3 | 4 to 7 |
| Bitmap Size (bitmap size) | Bitmap Offset Presence (bitmap offset presence field) | Reserved (reserved) | Bitmap (time unit bitmap) | Bitmap Offset (bitmap offset) | Reserved (reserved) |

Refer to Table 20. The bitmap size field occupies 2 bits, namely, the bit 0 and the bit 1; the Bitmap Offset Presence field occupies 1 bit, namely, the bit 2; the reserved field occupies 5 bits, namely, the bit 3 to the bit 7; the time unit bitmap occupies one or more octets, that is, the length of the time unit bitmap is a variable value; the bitmap offset occupies 4 bits, namely, the bit 0 to the bit 3; and the reserved field occupies 4 bits, namely, the bit 4 to the bit 7. The Bitmap Offset Presence field indicates whether the list element includes the Bitmap Offset field. For example, when Bitmap Offset Presence=1, the Bitmap Offset field appears, that is, the list element includes the Bitmap Offset field. When Bitmap Offset Presence=0, the Bitmap Offset field does not appear, that is, the list element does not include the Bitmap Offset field. It may be understood that Table 20 shows merely an example of a list element in the DPL, and a number of bits occupied by each field and a location of each field in the list element are not limited. For a function of each field in Table 20, refer to Table 19.

**Table 21**

| | | | |
|---|---|---|---|
| Bits: 0 to 6 | 7 to 10 | 11 to 14 | 15 |
| Starting Slot Index | Period Index | Repetition Index | Reserved |

Refer to Table 21. The reserved field occupies 1 bit, that is, the bit 15; the Starting Slot Index field occupies 7 bits; the Period Index field occupies 4 bits; and the Repetition Index field occupies 4 bits. The Starting Slot Index field indicates a start time unit in which the UWB device 1 transmits the UWB signal, the period index field indicates a scheduling period in which the UWB device 1 transmits the UWB signal, and the repetition index field indicates a number of repetitions for transmitting the UWB signal by the UWB device 1. It may be understood that Table 21 shows merely an example of a list element in the DPL, and a number of bits occupied by each field and a location of each field in the list element are not limited.

**Table 22**

| | | | | | |
|---|---|---|---|---|---|
| Bits: 0 | 1 | 2 to 7 | Bits: 0 to 6 | Bits: 7 to 10 | 11 to 14 |
| Receiver Address presence | Ranging Role | Reserved | Starting Slot Index | Period Index | Repetition Index |

Refer to Table 22. The Ranging Role field and the Receiver Address Presence field (receiver address presence field) in the conventional technology appear in the format of the list element provided in embodiments of this application. It may be understood that Table 22 shows merely an example of a list element in the DPL, and a number of bits occupied by each field and a location of each field in the list element are not limited. In other words, the scheduling information provided in embodiments of this application may allow the Ranging Role field and the Receiver Address Presence field to appear, or may allow either the Ranging Role field or the Receiver Address Presence field to appear, for example, as shown in the following forms in Table 23 and Table 24 below. This is not limited in embodiments of this application.

**Table 23**

| | | | |
|---|---|---|---|
| Bits: 0 | 1 to 7 | 8 to 11 | 12 to 15 |
| Receiver addr. presence | Starting Slot Index | Period Index | Repetition Index |

**Table 24**

| | | | |
|---|---|---|---|
| 0 | 1 to 7 | 8 to 11 | 12 to 15 |
| Ranging Role | Starting Slot Index | Period Index | Repetition Index |

Table 22, Table 23, and Table 24 are examples in which fields (for example, the Ranging Role field and the Receiver Address Presence field) in the conventional technology are placed in the list element provided in embodiments of this application. It should be understood that another field in the conventional technology may be further placed in the list element provided in embodiments of this application. For example, the Receiver Address field and the Presence field shown in Table 22 to Table 24 may be placed in a list element as shown in Table 20. In other words, the Receiver Address field and the Presence field may be placed in a same list element together with the Bitmap Offset field, the Bitmap field, the Bitmap Size field, and the Bitmap Offset Presence field. An order, a location, and a field size of the Bitmap Offset field, the Ranging Role field, the Receiver Address Presence field, the Starting Slot Index field, the Period Index field, the Repetition Index field, and the like are not limited in embodiments of this application. Table 22, Table 23, and Table 24 are merely examples.

**Table 25**

| | | | |
|---|---|---|---|
| Bit: 0 | 1 to 7 | 8 to 11 | 12 to 15 |
| Period Mode | Starting Slot Index | Period Index | Repetition Index |

In Table 25, the bit 0 is the Period Mode field. For example, fields related to a transmission period, for example, the Starting Slot Index field, the Period Index field, and the Repetition Index field, appear and take effect only when Period Mode=1. The fields related to the transmission period, for example, the Starting Slot Index field, the Period Index field, and the Repetition Index field, do not take effect when Period Mode=0. It may be understood that Table 25 shows merely an example of a list element in the DPL, and a number of bits occupied by each field and a location of each field in the list element are not limited.

Refer to Table 26. Embodiments of this application may be combined with a list element including the slot index field.

**Table 26**

| | |
|---|---|
| Bits: 0 | 1 to 7 |
| Ranging Role | Ranging Slot Index |

Meanings of the Ranging Role field and the Ranging Slot Index field in Table 26 are the same as those in Table 4. A difference between Table 26 and Table 4 lies in that Table 26 does not include a device address field, namely, address. According to the solution in embodiments of this application, the list element is compressed in Table 26. It may be understood that Table 26 shows merely an example of a list element in the DPL, and a number of bits occupied by each field and a location of each field in the list element are not limited. Further, the list element provided in embodiments of this application may alternatively be allowed not to include the Ranging Role field, as shown in Table 27.

**Table 27**

| | |
|---|---|
| Bits: 0 to 6 | 7 |
| Ranging Slot Index | Reserved |

It may be understood that Table 27 shows merely an example of a list element in the DPL, and a number of bits occupied by each field and a location of each field in the list element are not limited.

Further, when there is no slot in a gap between adjacent slots of a scheduled device, the Ranging Slot Index field in the list element shown in Table 27 may be further omitted, that is, the list element may not be present. In other words, each bit in the bitmap-based CPDID field shown in Table 12 indicates both a corresponding device and a corresponding slot.

It should be understood that Table 19 to Table 27 show examples of several possible list elements. This is not specifically limited in the present invention. In other words, a case in which any one or more list elements do not include a device address falls within the protection scope of the present invention.

The foregoing describes the solution in which the first bitmap indicates the location of the parameter configuration information of the UWB device in the DPL. The following describes a solution in which an identifier (which may be considered as a shorter device address) of a UWB device indicates a location of parameter configuration information of a UWB device in a DPL.

FIG. 10 is an interaction flowchart of another communication method for a UWB according to an embodiment of this application. A method procedure in FIG. 10 is applicable to a scenario in which a number of receivers is large (for example, the number of receivers is greater than 16). As shown in FIG. 10, the method includes the following steps.

1001: A transmitter generates a first message.

The transmitter may be a UWB device that supports a UWB standard. The transmitter may be an AP, or may be a station. The transmitter may be an FFD, or may be an RFD. The transmitter may be a ranging, sensing, positioning, or communication initiator (initiator), namely, a ranging initiator, a sensing initiator, a positioning initiator, or a communication initiator, may be a ranging, sensing, positioning, or communication responder (responder), namely, a ranging responder, a sensing responder, a positioning responder, or a communication responder, or may be a third-party device (which may be referred to as a controller device), that is, may not be an initiator or a responder (responder) of ranging, sensing, positioning, or communication. For example, the transmitter is an initiator, and the first message is a measurement initiation message or a poll/initiation POLL message. The measurement initiation message may be an SOR message, a sensing initiation message, a positioning initiation message, or a communication initiation message.

The first message includes a first list element, and the first list element includes parameter configuration information of an i^{th} UWB device and an identifier of the i^{th} UWB device. The identifier of the i^{th} UWB device indicates an order, in a second DPL, of a list element of the i^{th} UWB device in a second message. The identifier of the i^{th} UWB device corresponds to a device address of the i^{th} UWB device. The identifier of the i^{th} UWB device may be considered as an ID of the i^{th} UWB device. In embodiments of this application, the identifier of the UWB device may be referred to as a temporary shorter device address (temporary shorter device ID, TSDID), or another name. This is not limited in this application. The second message is information sent before the first message is sent, and the second message carries the address of the i^{th} UWB device. The second DPL is included in the second message. For example, the first message includes a first DPL, the first list element is a list element in the first DPL, the second message includes the second DPL, and the identifier of the i^{th} UWB device indicates the order, in the second DPL, of the list element of the i^{th} UWB device in the second message. List elements in the second DPL are arranged in order. In other words, the list elements in the second DPL are arranged in an order.

1002: The transmitter sends the first message.

Correspondingly, one or more receivers receive the first message. For example, the transmitter is both an initiator and a controller, and the receiver is a responder. For another example, the transmitter is a controller, and the receiver is a responder.

In a possible implementation, the first message further includes a first field, and the first field indicates to use the identifier of the i^{th} UWB device to identify a location of the parameter configuration information of the i^{th} UWB device in the first DPL. It may be understood that the first field indicates to use the identifier of the UWB device to identify the location of the parameter configuration information of the UWB device in the first DPL. The first field may be referred to as an address size field or another field. This is not limited herein. A device parameters management (device parameters management, DPM) field in the first message includes the first DPL, and the first DPL is used to update parameter configuration information of one or more responders. A name of the device parameters management DPM is not limited in this application, and is merely an example herein. Table 28-1 shows an example of the device parameters management field in the first message. For a function of each field in Table 28-1, refer to a function of each field in Table 16.

**Table 28-1**

| | | | | |
|---|---|---|---|---|
| **Bits: 0 and 1** | **2 to 7** | **8** | **9 to 15** | **Octets: TBD** |
| Address Size | Device Parameters List Length | CPDID size | RFU | Device Parameters List (DPL) |

The CPDID Size field in Table 28-1 does not take effect, or Table 28-1 does not include the CPDID Size field. The Address Size field in Table 28-1 may be considered as the first field. Table 28-2 shows an example of a meaning of a value of the first field.

**Table 28-2**

| **Value of a first field** | **Corresponding meaning** |
|---|---|
| 0 | All list elements in a DPL use short addresses to identify devices |
| 1 | All the list elements in the DPL use long addresses to identify the devices |
| 2 | A first bitmap (CPDID field) is used to identify a location of parameter configuration information of a UWB device in the DPL |
| 3 | An identifier of the UWB device is used to identify the location of the parameter configuration information of the UWB device in the DPL |

The value of the first field in Table 28-2 is merely an example, and is not limited. In this implementation, the first field indicates to use the identifier of the i^{th} UWB device to identify the location of the parameter configuration information of the i^{th} UWB device in the first DPL, so that the receiver learns, based on the first field, of the location of the parameter configuration information in the first DPL, where the location of the parameter configuration information of the UWB device is identified by the identifier of the UWB device.

1003: The receiver determines the first list element based on the identifier of the i^{th} UWB device.

Before performing step 1003, the receiver may learn of the identifier of the i^{th} UWB device. For example, before receiving the first message, the receiver receives a configuration message, and determines the identifier of the i^{th} UWB device based on the configuration message. For example, before an initial ranging round, in an SOR message broadcast by the transmitter to all responders participating in ranging, each list element in the DPL uses a real address of a device, namely, a device address (2 octets or 8 octets). In a process of parsing the DPL, each receiver learns of an order in which list elements of the receiver appear in the DPL, and records the order as an identifier of the receiver. For example, the receiver records the order, in the second DPL, of the list element of the i^{th} UWB device in the second message, and uses the order as the identifier of the i^{th} UWB device.

Step 1003 may be understood as that the receiver determines, based on the identifier of the i^{th} UWB device, the first list element, in the first message, that includes the parameter configuration information of the i^{th} UWB device. It may be understood that any receiver may determine, based on an identifier of a UWB device, a list element, in the first message, that includes parameter configuration information of the UWB device. The identifier of the i^{th} UWB device occupies fewer than 2 octets. For example, the identifier of the i^{th} UWB device occupies one node. The technical essence of embodiments of this application is replacing the device identifier in the list element in the first DPL with the TSDID with a shorter length, to reduce signaling overheads.

In embodiments of this application, the receiver may determine, based on an identifier of a UWB device, a list element, in the first message, that includes parameter configuration information of the UWB device. Because the TSDID is used, the device identifier in the list element is changed from a 2-octet or 8-octet device address to the TSDID that occupies 1 octet. This reduces signaling consumption.

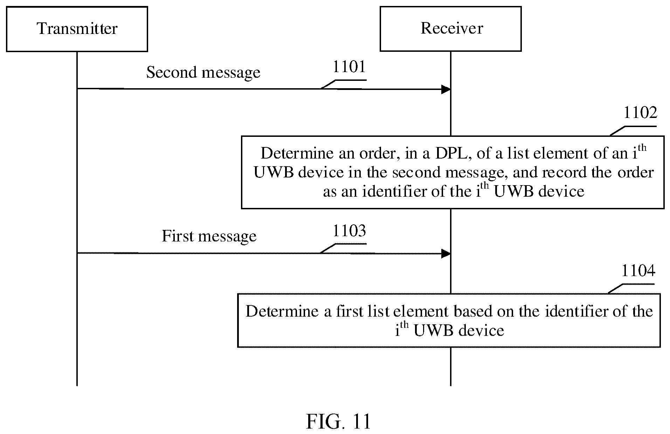

FIG. 11 is an interaction flowchart of another communication method for a UWB according to an embodiment of this application. A method procedure in FIG. 11 is a possible implementation of the method described in FIG. 10. In this implementation, a transmitter sends a second message to a receiver, so that the receiver determines an identifier of a UWB device. As shown in FIG. 11, the method includes the following steps.

1101: The transmitter sends the second message.

Correspondingly, one or more receivers receive a first message. For example, the transmitter is both an initiator and a controller, and the receiver is a responder. For another example, the transmitter is a controller, and the receiver is a responder. The second message may be a broadcast message. For example, the second message is an SOR message or a POLL message that is broadcast by the transmitter to all responders participating in measurement before an initial measurement round.

The second message carries an address of an i^{th} UWB device. i is an integer greater than or equal to 0. For example, the second message includes a second DPL, the second DPL includes one or more list elements, and each list element includes an address (2 octets or 8 octets) of a UWB device. In this example, the list elements in the second DPL are arranged in order, and an i^{th} list element arranged in order in the second DPL includes the address of the i^{th} UWB device. In other words, the i^{th} list element arranged in order in the second DPL is a list element of the i^{th} UWB device in the second message. Table 28-3 is an example of the second DPL.

**Table 28-3**

| | | | | |
|---|---|---|---|---|
| Octets: TBD | Octets: TBD | Octets: TBD | Octets: TBD | Octets: TBD |
| List element #0 (0^{th} UWB device) | List element #1 (first UWB device) | List element #2 (second UWB device) | List element #3 (third UWB device) | List element #4 (fourth UWB device) |

Refer to Table 28-3. The list elements arranged in order in the second DPL are the list element #0 to the list element #4 that respectively correspond to the 0^{th} UWB device to the fourth UWB device. In a subsequent measurement round, the 0^{th} UWB device to the fourth UWB device use 0, 1, 2, 3, and 4 as respective TSDIDs. For example, the 0^{th} UWB device uses 0 as the TSDID of the 0^{th} UWB device in the subsequent measurement round. For another example, the first UWB device uses 1 as the TSDID of the first UWB device in the subsequent measurement round.

1102: The receiver determines the order, in the DPL, of the list element of the i^{th} UWB device in the second message, and records the order as an identifier of the i^{th} UWB device.

The receiver may be the i^{th} UWB device. In other words, the receiver may determine the order, in the DPL, of the list element of the receiver in the second message, and record the order as the identifier of the receiver. Alternatively, the receiver may not be the i^{th} UWB device.

1103: The transmitter sends the first message.

For step 1103, refer to step 1001.

1104: The receiver determines a first list element based on the identifier of the i^{th} UWB device.

For step 1104, refer to step 1003. For example, the first message includes a first DPL, the first list element is a list element in the first DPL, and the first list element includes the identifier of the i^{th} UWB device. The receiver determines, based on the identifier of the i^{th} UWB device, the first list element in the first DPL, namely, the list element including parameter configuration information of the i^{th} UWB device. Table 28-4 shows an example of the first DPL in the first message.

**Table 28-4**

| | | |
|---|---|---|
| Octets: TBD | Octets: TBD | Octets: TBD |
| List element #0 (0^{th} UWB device) | List element #1 (fourth UWB device) | List element #2 (fifth UWB device) |

Refer to Table 28-4. The first DPL includes list elements respectively corresponding to the 0^{th} UWB device, the fourth UWB device, and the fifth UWB device. The list element #0 includes parameter configuration information of the 0^{th} UWB device, the list element #1 includes parameter configuration information of the fourth UWB device, and the list element #2 includes parameter configuration information of the fifth UWB device. It is assumed that parameter configuration of the 0^{th} UWB device, the fourth UWB device, and the fifth UWB device need to be updated in a subsequent round. The transmitter may send the first message carrying the first DPL shown in Table 28-4. The list element #1 in Table 28-4 is used as an example. Table 29 shows an example of a format of the list element.

**Table 29**

| Bits: 0 | 1 | 2 | 3 | 4 | 5 to 7 | Octets: TBD | Octets: TBD | Octets: TBD | Octets: TBD | Octets: TBD | Octet: 1 |
|---|---|---|---|---|---|---|---|---|---|---|---|
| Channel confi-gura-tion Presence | MMS fragment con-figu-ration Presence | MMS preamble parameters Presence | NB data rate Presence | Time Offset to Next MMS POLL Packet Presence | RFU | Channel configuration | MMS fragment configuration | MMS preamble parameters | NB data rate | Time Offset to Next MMS POLL Packet | 4 |

It can be learned from Table 29 that in the list element, corresponding to the fourth UWB device, in the first DPL, a device address (2 octets or 8 octets) of the fourth UWB device is directly replaced with a TSDID (1-octet length) of the fourth UWB device, to reduce signaling overheads of the list element. The last column in Table 29 is an identifier of the fourth UWB device, namely, the TSDID of the fourth UWB device. Table 29 shows a possible format of the list element (included in the DPL) in Table 28-1. A possible format of the list element in Table 28-1 includes: adding a TSDID of a UWB device to the list element shown in any one of Table 19 to Table 27, where a location of the added TSDID of the UWB device is not limited.

It may be understood that any receiver may determine, based on an identifier of the receiver, a list element, in the first message, that includes parameter configuration information of the receiver. For example, after determining the first list element based on the identifier of the i^{th} UWB device, the i^{th} UWB device updates parameter configuration of the i^{th} UWB device based on the first list element. For another example, after determining the first list element based on the identifier of the i^{th} UWB device, the i^{th} UWB device determines, based on the first list element, a time unit that can be occupied by transmitting the UWB signal by the i^{th} UWB device.

A variation of the methods shown in FIG. 10 and FIG. 11 is as follows: A controller in an NBA-MMS UWB system directly uses a 1-octet device address as a device identifier in a subsequent measurement round at an earlier time phase, for example, a device discovery (discovery) phase or a connection phase. In other words, according to the variant method, a shorter device address of 1 octet may be directly used in an initial SOR message and a subsequent SOR message, and a compressed device address does not need to be additionally determined in the manner shown in the foregoing embodiments.

In embodiments of this application, the receiver may determine, based on an identifier of a UWB device, a list element, in the first message, that includes parameter configuration information of the UWB device. Because the TSDID is used, the device identifier in the list element is changed from a 2-octet or 8-octet device address to the TSDID that occupies 1 octet. This reduces signaling consumption.

The method procedures in FIG. 8 to FIG. 10 are actually a solution of a compressed device address. It should be understood that the solution of a compressed device address provided in this application is applicable to a plurality of messages, including but not limited to an ADV-POLL/ADV-RESP/SOR message, a POLL/RESP/REPORT message, any other message that can carry a compression method, and the like. The solution of a compressed device address provided in this application is applicable to a plurality of frame formats, including but not limited to a frame format based on the compressed MAC header information element (compressed MAC Header IE) shown in Table 1-1 and Table 1-2, a frame format based on a compressed PSDU (compressed PSDU) shown in Table 38 to Table 40 below, a frame format based on a nested IE (nested IE), and the like. The solution of a compressed device address provided in this application is also applicable to messages based on combinations of various messages and various frame formats. For example, the message in embodiments of this application may be carried in an ADV-POLL/ADV-RESP/SOR message based on the compressed MAC Header IE format, that is, a field carrying the DPL is included in the content field in the format shown in Table 1-2. For another example, the message in embodiments of this application may alternatively be carried in a POLL/RESP/REPORT message based on the compressed PSDU format, that is, a field carrying the DPL is included in a content field in a format shown in Table 37. In conclusion, regardless of a message/frame format, any message/frame format that essentially includes the compressed device address provided in this application falls within the protection scope of this application.

The foregoing describes a manner of compressing a device address designed in this application, to reduce a proportion of the device address in the configuration information list, and further reduce signaling overheads of the configuration information list. The following describes an optimization solution for an initialization phase of a one-to-many NBA-MMS UWB provided in embodiments of this application.

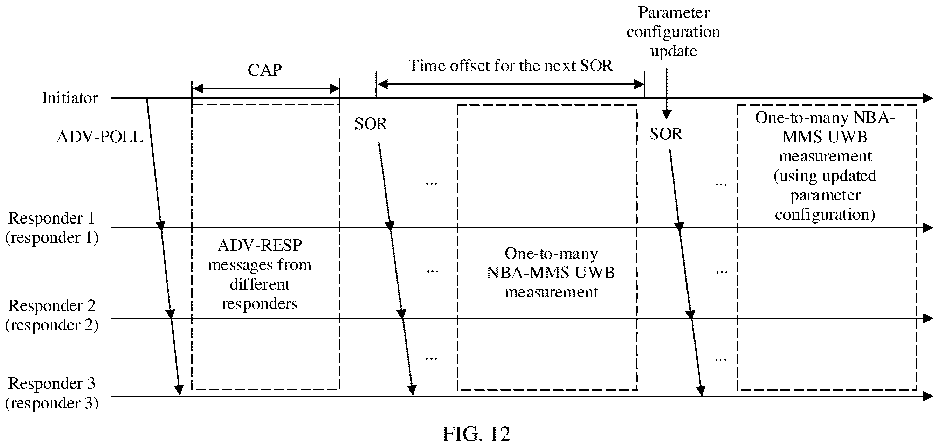

The initialization procedure shown in FIG. 3 is applicable to a one-to-one (one-to-one) case. In a one-to-many (one-to-many) case, an initiator may receive a plurality of ADV-RESP messages, and the plurality of ADV-RESP messages are from a responder that responds to an ADV-POLL message. In this case, the initiator cannot know in advance which responders respond to the ADV-POLL message, and therefore cannot receive, in a scheduling manner, the ADV-RESP messages sent by the responders that are to perform NBA-MMS UWB measurement. A number of responders that can be processed and accessed by the initiator is limited, and a large amount of energy is consumed by the initiator while waiting for receiving of the ADV-RESP messages for long time. Embodiments of this application provide a solution in which the initiator indicates a contention access period (contention-based access period, CAP) in a broadcast ADV-POLL message or another message. The CAP is used by the plurality of responders to report the ADV-RESP messages in a contention manner. Only a responder that successfully obtains a channel through contention and successfully uploads an ADV-RESP message in the CAP phase can be served by the initiator in a next one-to-many NBA-MMS UWB measurement round. FIG. 12 is a diagram of a one-to-many NBA-MMS UWB initialization phase according to an embodiment of this application. As shown in FIG. 12, an initiator indicates a CAP in a broadcast ADV-POLL message; a plurality of responders report ADV-RESP messages in a contention manner in the CAP. The initiator provides a service for a responder that successfully obtains a channel through contention and successfully uploads an ADV-RESP message in a CAP phase. An SOR message sent by the initiator carries information indicating a moment at which the initiator sends a next SOR message. A contention-based access processing manner used in the CAP phase is not limited in embodiments of this application, provided that a contention-based access method can effectively process a plurality of ADV-RESP messages in the CAP phase. The contention-based access processing manner used in the CAP phase includes but is not limited to: carrier sense multiple access with collision avoidance (carrier sense multiple access with collision avoidance, CSMA-CA), randomization (randomization), access based on received signal strength (if a collision occurs, a responder corresponding to an ADV-RESP message with higher received signal strength can perform access, and a responder corresponding to an ADV-RESP message with lower received signal strength cannot perform access), and the like.

As shown in FIG. 12, after the initiator and the responder complete handshake connection by exchanging ADV-POLL and ADV-RESP, the initiator broadcasts an SOR message to determine parameter configuration used by an NBA-MMS measurement round, and the initiator and the responder(s) perform one-to-many NBA-MMS UWB measurement based on the parameter configuration. After a measurement round is completed, an NBA-MMS UWB system may need to update parameters, for example, update duration of the measurement round, a number of MMS fragments, and a channel used by an NB. As shown in FIG. 12, before a new measurement round starts, the initiator needs to send an SOR message including the updated parameters to the responders. In this case, if a slot for receiving the SOR message is not specified in advance, the responders do not know when to receive the possibly updated SOR message. Consequently, the responders may respond the possibly updated SOR message in an idle period of time between an updated measurement round and a measurement round that is not updated, and a large amount of undetermined energy is consumed by the responders. Therefore, to ensure that the responder can turn on a receiver in advance at a specific moment before each round to receive the possibly updated SOR message, and avoid a waste of energy by the responder, in each SOR message, the initiator may indicate, in the SOR message based on a requirement, a slot in which a next SOR message appears. For example, as shown in FIG. 12, the SOR message may carry Time offset for the next SOR, and Time offset for the next SOR is used to help the responder determine an arrival slot of a next possibly updated SOR message.

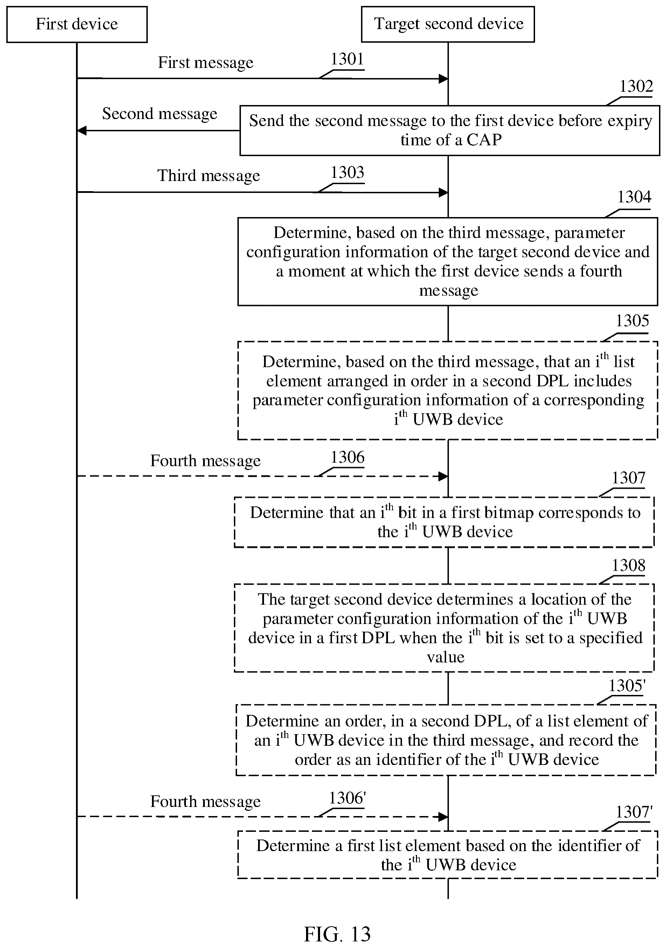

FIG. 13 is an interaction flowchart of another communication method for a UWB according to an embodiment of this application. As shown in FIG. 13, the method includes the following steps.

1301: A first device sends a first message.

Correspondingly, one or more second devices receive the first message. The first message indicates expiry time of a CAP, and the CAP is a period of time in which sending of a response message for the first message is allowed. The first message is included in a measurement initiation message or a poll/initiation POLL message. The measurement initiation message may be an SOR message, a sensing initiation message, a positioning initiation message, or a communication initiation message. The first device may be an AP, or may be a station. The first device may be an FFD, or may be an RFD. The first device may be a ranging, sensing, positioning, or communication initiator (initiator), namely, a ranging initiator, a sensing initiator, a positioning initiator, or a communication initiator; or may be a third-party device (which may be referred to as a controller device), that is, may not be an initiator or a responder (responder) of ranging, sensing, positioning, or communication. For example, the first device is an initiator, the first message is an ADV-POLL message, and the ADV-POLL message notifies all responders that NBA-MMS UWB measurement needs to be performed currently. The second device is a responder.

In a possible implementation, the first message includes a first field indicating the expiry time of the CAP. The first field may be referred to as an ADV-RESP CAP Timeout field or another field. For example, the first message is an ADV-RESP message, and the first field is carried in the content field shown in Table 1-2. Table 30-1 shows an example of the content field carrying the first field.

**Table 30-1**

| **Bits: 0** | **1** | **2** | **3 to 7** | **Octets: TBD** | **Octets: TBD** | **Octets: TBD** |
|---|---|---|---|---|---|---|
| Protocol Version Presence | Advertising Identity Presence | ADV-RESP CAP Timeout Presence | RFU | Protocol version | Advertising Identity | ADV-RESP CAP Timeout |

Protocol Version Presence is used to control that the Protocol version field is present or not. For example, when Protocol Version Presence=0, it indicates that the Protocol version field is not present. When Protocol Version Presence=1, it indicates that the Protocol version field is present.

Advertising Identity Presence is used to control that the Advertising Identity field is present or not. For example, when Advertising Identity Presence =0, it indicates that the Advertising Identity field is not present. When Advertising Identity Presence=1, it indicates that the Advertising Identity field is present.

ADV-RESP CAP Timeout Presence is used to control that the ADV-RESP CAP Timeout field is present or not. For example, when ADV-RESP CAP Timeout Presence=0, it indicates that the ADV-RESP CAP Timeout field is not present. When ADV-RESP CAP Timeout Presence=1, it indicates that the ADV-RESP CAP Timeout field is present.

Protocol Version indicates a protocol version used by current UWB application.

Advertising Identity indicates a type of an ADV-POLL message.

ADV-RESP CAP Timeout indicates expiry time (or an end time point) of a CAP phase.

If the current ADV-POLL message does not include the ADV-RESP CAP Timeout field (that is, corresponding ADV-RESP CAP Timeout Presence=0), a default value of ADV-RESP CAP Timeout of a system is reused by default.

In addition, when ADV-POLL is a broadcast message, the address field shown in Table 1-2 uses a broadcast address, for example, 0xFFFF.

In a possible implementation, the first message further includes information indicating start time of the CAP. For example, the start time of the CAP is end time at which the first device sends the first message. For another example, the start time of the CAP is a slot after the end time at which the first device sends the first message. Another example of the content field carrying the first field may be adding an ADV-RESP CAP start field to the content field shown in Table 30-1, where the ADV-RESP CAP start field indicates the start time of the CAP. Table 30-2 shows another example of the content field carrying the first field.

**Table 30-2**

| **Bits: 0** | **1** | **2** | **3** | **4 to 7** | **Octets: TBD** | **Octets: TBD** | **Octets: TBD** | **Octets: TBD** |
|---|---|---|---|---|---|---|---|---|
| Protocol Version Presence | Advertising Identity Presence | ADV-RESP CAP Start Presence | ADV-RESP CAP Timeout Presence | RFU | Protocol version | Advertising Identity | ADV-RESP CAP Start | ADV-RESP CAP Timeout |

In comparison with Table 30-1, the ADV-RESP CAP Start field and a presence control field, namely, the ADV-RESP CAP Start Presence field corresponding to the ADV-RESP CAP Start field are added in Table 30-2. ADV-RESP CAP Start Presence is used to control that the ADV-RESP CAP Start field is present or not. For example, when ADV-RESP CAP Start Presence=0, it indicates that the ADV-RESP CAP Start field is not present. When ADV-RESP CAP Start Presence=1, it indicates that the ADV-RESP CAP Start field is present. The ADV-RESP CAP Start field indicates a start time point of the CAP, namely, the start time. In addition to the ADV-POLL message shown in Table 30-2, the indication manner may alternatively be based on another message, including but not limited to an indication message in a time phase earlier than initialization and setup processes. Details are not described herein. In this implementation, the first message further includes information indicating the start time of the CAP, so that the responder learns of the start time of the CAP. This can reduce power consumption of the responder.

1302: A target second device sends a second message to the first device before the expiry time of the CAP.

The second message includes second parameter configuration information of the target second device. The second message may be an ADV-RESP message that carries the parameter configuration information required by the target second device. For example, the first message is an ADV-POLL message used to notify all responders that NBA-MMS UWB ranging needs to be performed currently. After the target second device (a responder) receives the ADV-POLL message, if ranging needs to be performed, the target second device feeds back an ADV-RESP (Advertisement-RESPONSE) message to the first device (initiator). The ADV-RESP message carries parameter configuration information required by the first device. The target second device is a second device that receives the first message and that successfully obtains a channel through contention before the expiry time of the CAP. It should be understood that any second device that receives the first message and that successfully obtains a channel through contention before the expiry time of the CAP may perform an operation similar to that of the target second device. For example, before performing step 1302, the target second device contends for a channel; and after obtaining the channel through contention before the expiry time of the CAP, the target second device sends the second message through the channel obtained through contention.

In a possible implementation, the target second device (namely, the responder) listens to the SOR message in a slot after the CAP phase. For example, the slot after the CAP phase ends may be a slot immediately after the CAP ends, or may be another slot. In other words, the initiator may broadcast an initial SOR message, namely, a third message below, in a 1^{st} slot or another slot after the CAP phase ends.

1303: The first device sends the third message.

Correspondingly, one or more second devices receive the third message. The third message may include first parameter configuration information of some or all of the plurality of second devices and information indicating a moment at which a fourth message is sent. For example, the third message is an SOR message sent by the first device for ADV-RESP messages, namely, second messages, sent by the plurality of second devices (responders). The SOR message may carry an acknowledgment message for the parameter configuration information in the ADV-RESP message sent by the second device, or carry a change/update message for the parameter configuration information in the ADV-RESP message sent by the second device. In embodiments of this application, both the acknowledgment message for the parameter configuration information in the ADV-RESP message sent by the second device and the change/update message for the parameter configuration information in the ADV-RESP message sent by the second device may be considered as the first parameter configuration information of the second device. The fourth message is used to update first parameter configuration information of at least one of some or all of the second devices. The fourth message may be an SOR message or a POLL message sent by the first device after the first device sends the third message.

In a possible implementation, the third message includes a second field, and the second field indicates that the third message includes the information indicating the moment at which the fourth message is sent. The second field may be referred to as a Time offset for the next SOR Presence field or another field. The third message may further include addresses of some or all of the plurality of second devices. The field that is in the third message and that indicates the moment at which the fourth message is sent may be referred to as a Time offset for the next SOR field. For example, the third message is an SOR message, and the second field is carried in the content field shown in Table 1-2. Table 31 shows an example of the content field carrying the second field.

**Table 31**

| | | | | |
|---|---|---|---|---|
| Bits: 0 | 1 | 2 to 7 | Octets: TBD | Octets: TBD |
| Device Parameters Management enabled | Time offset for the next SOR Presence | RFU | Device Parameters Management (DPM) | Time offset for the next SOR |

Device Parameters Management enabled is used to control that the DPM field is present or not. For example, when Device Parameters Management enabled=0, it indicates that the DPM field is not present. When Device Parameters Management enabled=1, it indicates that the DPM field is present.

Time offset for the next SOR Presence, namely, the second field, is used to control that the Time offset for the next SOR field is present or not. For example, when Time offset for the next SOR Presence=0, it indicates that the Time offset for the next SOR field is not present. When Time offset for the next SOR Presence=1, it indicates that the Time offset for the next SOR field is present.

Device Parameters Management is a field used to manage a parameter of a device. When there are a plurality of devices, the field is a list field.

Time offset for the next SOR indicates the moment at which the fourth message is sent. For example, Time offset for the next SOR indicates a time length from a currently broadcast SOR message (namely, the third message) to a next SOR message. A unit of the time length may be a ranging scheduling time unit (ranging scheduling time unit, RSTU), or may be a slot. The unit of the time length is not limited in this application.

Table 32 shows an example format of the DPM field.

**Table 32**

| **Bits: 0** | **1 to 6** | **7** | **Octets: TBD** |
|---|---|---|---|
| Address Size | Device Parameters List Length | RFU | Device Parameters List (DPL) |

Address Size indicates a type of a device address in the DPL. For example, when a value of Address Size is 0, all list elements in the DPL use short addresses to identify devices. When the value of Address Size is 1, all list elements in the DPL use long addresses to identify the devices. Device Parameters List Length indicates a number of elements in the DPL. Table 33 shows an example format of the DPL field.

**Table 33**

| **Octets: Variable** | **Octets: Variable** | **Octets: Variable** | ... |
|---|---|---|---|
| Device Parameters List Element #0 | Device Parameters List Element #1 | Device Parameters List Element #2 | ... |

Device Parameters List Element #0 is a list element in the DPL. Table 34 shows an example format of the list elements in the DPL.

**Table 34**

| **Bits: 0** | **1** | **2** | **3** | **4** | **5 to 7** | **Octets: TBD** | **Octets: TBD** | **Octets: TBD** | **Octets: TBD** | **Octets: TBD** | **Octets: 2/8** |
|---|---|---|---|---|---|---|---|---|---|---|---|
| Channel confi-gura-tion Presence | MMS fragment configuration Presence | MMS preamble parameters Presence | NB data rate Presence | Time Offset to Next MMS POLL Packet Presence | RFU | Channel configuration | MMS fragment configuration Presence | MMS preamble parameters Presence | NB data rate | Time Offset to Next MMS POLL Packet | Device address |

Channel configuration Presence is used to control that the Channel configuration field is present or not. For example, when Channel configuration Presence=0, it indicates that the Channel configuration field is not present. When Channel configuration Presence=1, it indicates that the Channel configuration field is present.

MMS fragment configuration Presence is used to control that the MMS fragment configuration field is present or not. For example, when MMS fragment configuration Presence=0, it indicates that the MMS fragment configuration field is not present. When MMS fragment configuration Presence=1, it indicates that the MMS fragment configuration field is present.

MMS preamble parameters Presence is used to control that the MMS preamble parameters field is present or not. For example, when MMS preamble parameters Presence=0, it indicates that the MMS preamble parameters field is not present. When MMS preamble parameters Presence=1, it indicates that the MMS preamble parameters field is present.

NB data rate Presence is used to control that the NB data rate field is present or not. For example, when NB data rate Presence=0, it indicates that the NB data rate field is not present. When NB data rate Presence=1, it indicates that the NB data rate field is present.

Time Offset to Next MMS POLL Packet Presence is used to control that the Time Offset to Next MMS POLL Packet field is present or not. For example, when Time Offset to Next MMS POLL Packet Presence=0, it indicates that the Time Offset to Next MMS POLL Packet field is not present. When Time Offset to Next MMS POLL Packet Presence=1, it indicates that the Time Offset to Next MMS POLL Packet field is present.

The Channel configuration field is used to configure a channel required for NBA-MMS UWB ranging.

The MMS fragment configuration field is used to configure a parameter required in an MMS process of NBA-MMS UWB ranging, for example, a number of fragments in the MMS process.

The MMS preamble parameters field is used to configure related parameter configuration of a preamble used by a fragment required in the MMS process of NBA-MMS UWB ranging.

The Time Offset to Next MMS POLL Packet is used to configure a time length from time at which a current device receives an SOR message to time at which the initiator initiates a POLL message. A unit of the time length may be a ranging scheduling time unit (Ranging Scheduling Time Unit, RSTU), or may be a slot. The unit of the time length is not limited in the present invention.

The Address field indicates a device address. Details are not described herein again.

In addition, when the SOR message is a broadcast message, the address field shown in Table 1-2 uses a broadcast address, for example, 0xFFFF.

1304: The target second device determines, based on the third message, the parameter configuration information of the target second device and the moment at which the first device sends the fourth message.

In some embodiments, after a period of time after the target second device receives the third message, the first device (initiator) and the responder (including the target second device) may start an NBA-MMS UWB ranging process. A length of the period of time may be determined based on Time offset to MMS POLL information, and the information is included in the third message.

1305: The target second device determines, based on the third message, that an i^{th} list element arranged in order in a second DPL includes parameter configuration information of a corresponding i^{th} UWB device.

i is an integer greater than 0. Alternatively, a receiver determines, based on the third message, that the i^{th} list element arranged in order in the second DPL includes the parameter configuration information of the i^{th} UWB device. The target second device may be the i^{th} UWB device, or may not be the i^{th} UWB device. The third message includes the second DPL, the second DPL includes one or more list elements arranged in order, and any list element in the second DPL includes an address of a UWB device corresponding to the any list element. Table 18 is an example of the second DPL. The i^{th} list element arranged in order in the second DPL includes the parameter configuration information of the corresponding i^{th} UWB device. A sequence of step 1305 and step 1304 is not limited.

1306: The first device sends the fourth message.

Correspondingly, the one or more second devices receive the fourth message. The target second device in the one or more second devices is used as an example. The target second device may start to respond, at a moment that is determined by the target second device and at which the first device sends the fourth message, the fourth message that may be sent by the first device. The fourth message may be an SOR message used to update parameter configuration of the one or more second devices. The fourth message may include a first bitmap, and the first bitmap includes N bits. An i^{th} bit in the first bitmap corresponds to the i^{th} UWB device. When the i^{th} bit is set to a specified value, the i^{th} bit indicates a location of first parameter configuration information of the i^{th} UWB device in a first DPL. i is greater than or equal to 1 and less than or equal to N, and N is an integer greater than 0. The first DPL is included in the fourth message.

In a possible implementation, the first DPL includes a plurality of list elements arranged in order. When the i^{th} bit is an F^{th} bit that is arranged in order in the first bitmap and that is set to the specified value, the i^{th} bit indicates that an F^{th} list element in the first DPL includes the first parameter configuration information of the i^{th} UWB device, where F is an integer greater than 0.

In a possible implementation, the fourth message further includes a third field, and the third field indicates to use the first bitmap to identify a location of first parameter configuration information of a UWB device in the first DPL.

In a possible implementation, the fourth message further includes a field indicating a length of the first bitmap.

1307: The target second device determines that the i^{th} bit in the first bitmap corresponds to the i^{th} UWB device.

For step 1307, refer to step 904.

1308: The target second device determines the location of the parameter configuration information of the i^{th} UWB device in the first DPL when the i^{th} bit is set to the specified value.

For step 1308, refer to step 803. For example, the target second device is the i^{th} UWB device. After determining the location of the parameter configuration information of the i^{th} UWB device in the first DPL, the target second device may obtain the parameter configuration information of the target second device, and update parameter configuration of the target second device based on the obtained parameter configuration information.

1305': The target second device determines an order, in a second DPL, of a list element of an i^{th} UWB device in the third message, and records the order as an identifier of the i^{th} UWB device.

The third message carries an address of the i^{th} UWB device. i is an integer greater than or equal to 0. The third message includes the second DPL, the second DPL includes the one or more list elements arranged in order, and each list element includes an address (2 octets or 8 octets) of a UWB device. In this example, the list elements in the second DPL are arranged in order, and the i^{th} list element arranged in order in the second DPL includes the address of the i^{th} UWB device. In other words, the i^{th} list element arranged in order in the second DPL is a list element of the i^{th} UWB device in the second message. Table 27 is an example of the second DPL. A sequence of step 1305' and step 1304 is not limited.

1306': The first device sends the fourth message.

Correspondingly, the one or more second devices receive the fourth message. The target second device in the one or more second devices is used as an example. The target second device may start to respond, at a moment that is determined by the target second device and at which the first device sends the fourth message, the fourth message that may be sent by the first device. The fourth message may be an SOR message used to update parameter configuration of the one or more second devices. The fourth message includes a first list element, and the first list element includes the first parameter configuration information of the i^{th} UWB device and the identifier of the i^{th} UWB device. The identifier of the i^{th} UWB device indicates the order, in the second DPL, of the list element of the i^{th} UWB device in the third message. The second DPL is included in the third message. The i^{th} UWB device is one of the plurality of second devices. Optionally, the identifier occupies fewer than 2 octets. For example, the identifier occupies 1 octet.

In a possible implementation, the fourth message further includes a first field, and the first field indicates to use the identifier of the i^{th} UWB device to identify the location of the first parameter configuration information of the i^{th} UWB device in the first DPL.

1307': The target second device determines the first list element based on the identifier of the i^{th} UWB device.

The first list element includes the first parameter configuration information of the i^{th} UWB device and the identifier of the i^{th} UWB device. For step 1307', refer to step 1003. For example, the target second device is the i^{th} UWB device. After determining the first list element, the target second device may obtain the parameter configuration information of the target second device, and update parameter configuration of the target second device based on the obtained parameter configuration information.

It should be noted that step 1305 to step 1308 and step 1305' to step 1307' are all optional. The method procedure in FIG. 13 may include step 1305 to step 1308, or may include step 1305' to step 1307', or may include only step 1301 to step 1304.

In a possible implementation, the third message indicates to terminate measurement of a current round or measurement of a next round, to reduce resource overheads and unnecessary measurement. In this implementation, after receiving the third message, the target second device terminates measurement of the current round or measurement of the next round. When the third message indicates to terminate measurement of the current round, the third message may carry information indicating to terminate measurement of the current round, and does not need to carry the parameter configuration information and the information indicating the moment at which the fourth message is sent. When the third message indicates to terminate measurement of the next round, the third message may carry the parameter configuration information and information indicating to terminate measurement of the next round, and does not need to carry the information indicating the moment at which the fourth message is sent. The current round and the next round may be adjacent in time, or may not be adjacent in time. The information indicating to terminate measurement of the next round may alternatively be in another manner. For example, expiry time is indicated based on a moment at which the fourth message is received, to indicate to terminate measurement of the next round. For example, when the expiry time arrives, if the target second device does not receive the fourth message, measurement of the next round is terminated. For another example, a moment at which the fourth message is received indicates whether a bit is valid, and when the bit indicates that a moment of the fourth message expires, it indicates to terminate measurement of the next round. A specific form of the indication of termination is not limited in the present invention.

In a possible implementation, the fourth message indicates to terminate measurement of a current round or measurement of a next round, to reduce resource overheads and unnecessary measurement. In this implementation, after receiving the fourth message, the target second device terminates measurement of the current round or measurement of the next round. When the fourth message indicates to terminate measurement of the current round, the fourth message may carry information indicating to terminate measurement of the current round, and does not need to carry the parameter configuration information. When the fourth message indicates to terminate measurement of the next round, the fourth message may carry the parameter configuration information and information indicating to terminate measurement of the next round.

In another possible implementation, the fourth message indicates to terminate measurement of one or more measurement rounds. In other words, the fourth message indicates to terminate one or more rounds of measurement. For example, the fourth message indicates to terminate measurement of a plurality of measurement rounds, and the plurality of measurement rounds may be adjacent in time, or may not be adjacent in time. For another example, the fourth message indicates to terminate measurement of a plurality of measurement rounds, and the plurality of measurement rounds may be located in a same measurement block, or may be located in different measurement blocks. One measurement block includes one or more measurement rounds. Being adjacent in time may mean that a plurality of measurement rounds in a same measurement block are adjacent, or one or more trailing measurement rounds in a previous measurement block are adjacent to one or more leading measurement rounds in a current measurement block.

In this implementation, the fourth message indicates to terminate measurement of one or more measurement rounds, to reduce resource overheads and unnecessary measurement. In addition, a time resource corresponding to a terminated measurement round may be used by another measurement procedure.

In a possible implementation, the one or more measurement rounds are a plurality of consecutive measurement rounds.

In a possible implementation, that the fourth message indicates to terminate measurement of one or more measurement rounds includes: The fourth message includes identifiers (for example, measurement round indexes) of the one or more measurement rounds. In other words, the fourth message includes identifiers of one or more measurement rounds for which measurement needs to be terminated.

In a possible implementation, that the fourth message indicates to terminate measurement of one or more measurement rounds includes: A value F included in the fourth message indicates to terminate measurement of an F^{th} measurement round, where F is an integer greater than or equal to 0, and the F^{th} measurement round is included in the one or more measurement rounds. For example, a current measurement round, namely, a round 1, is used as a reference point, and indicates to terminate measurement of a round (measurement round) relative to the round 1. For example, a value 0 indicates that measurement of the round 1 is terminated, that is, measurement of the current measurement round is terminated, and a value 1 indicates that measurement of a round 2 is terminated.

In a possible implementation, that the fourth message indicates to terminate measurement of one or more measurement rounds includes: The fourth message indicates to terminate measurement of all remaining measurement rounds. For example, a specific value included in the fourth message indicates that measurement of all remaining rounds is terminated. For example, the specific value is a maximum value of a field occupied by the specific value.

In a possible implementation, that the fourth message indicates to terminate measurement of one or more measurement rounds includes: The fourth message includes a second bitmap, a j^{th} bit in the second bitmap corresponds to a j^{th} measurement round, and when the j^{th} bit is set to a specified value, the j^{th} bit indicates to terminate the j^{th} measurement round, where the j^{th} measurement round is included in the one or more measurement rounds, and j is an integer greater than or equal to 0.

In a possible implementation, the one or more measurement rounds are a plurality of consecutive measurement rounds. That the fourth message indicates to terminate measurement of one or more measurement rounds includes: The fourth message includes a first value and a second value, the first value indicates an initial measurement round in the plurality of consecutive measurement rounds, and the second value indicates a last measurement round in the plurality of consecutive measurement rounds.

In a possible implementation, the fourth message includes a target field, and when the target field is set to the first value, it indicates that the fourth message indicates to terminate measurement of a measurement round.

The following provides several examples in which the fourth message indicates to terminate measurement of the one or more measurement rounds.

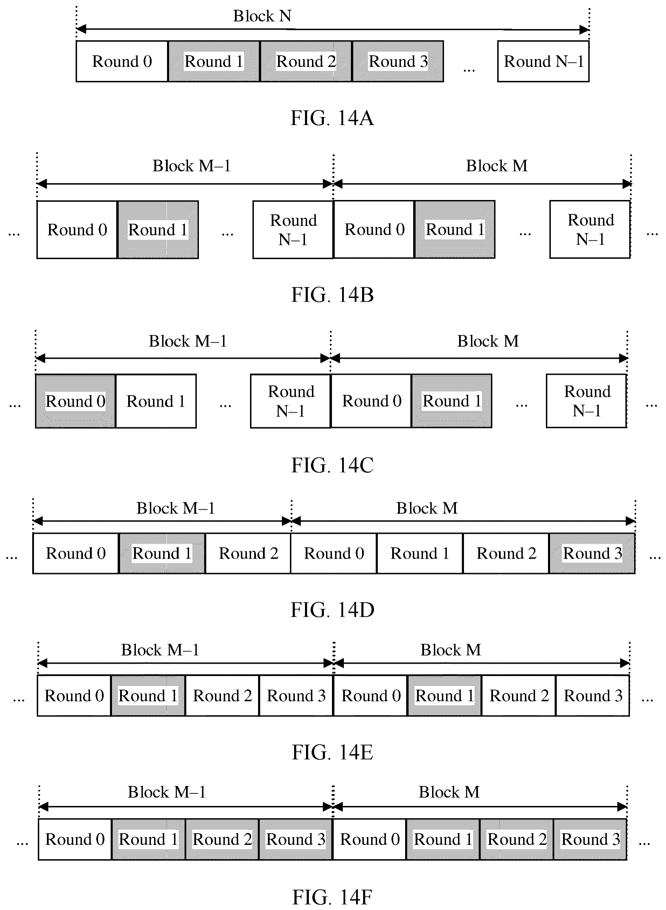

Example 1: The fourth message indicates to terminate measurement of a plurality of consecutive measurement rounds (rounds below). The fourth message includes a value (which may be referred to as a measurement termination indication value). When the value is N, it indicates to terminate measurement of all allocated measurement rounds (including a current measurement block and an N^{th} measurement block) from a round #i (namely, a measurement round #i) in the current measurement block (a block below) to a round #i in the subsequent N^{th} block. i is a non-negative integer, and indicates an index value of a round. For example, it is assumed that one measurement block includes a plurality of measurement rounds, and the current measurement round is a measurement round 1. When the measurement termination indication value N in the fourth message is equal to 2, ranging of three measurement rounds in total is terminated, where the three measurement rounds include the current measurement round and subsequent two measurement rounds, for example, a round 1, a round 2, and a round 3 shown in FIG. 14A. FIG. 14A is a diagram of a measurement round in a measurement block N (Block N) according to an embodiment of this application. As shown in FIG. 14A, a round 1, a round 2, and a round 3 in the measurement block N (Block N) are measurement rounds for which measurement needs to be terminated. Example 2: The fourth message indicates to terminate measurement of a plurality of consecutive measurement rounds, and the fourth message includes an identifier (for example, a round index) of a last measurement round in the plurality of consecutive measurement rounds. An initial measurement round in the plurality of consecutive measurement rounds is a current measurement round. The identifier of the last measurement round in the plurality of consecutive measurement rounds may be an index of the last measurement round, or may be an index value (that is, a relative index value) relative to the current measurement round. For example, a current measurement round, namely, a round i, is used as a reference point. The fourth message indicates to terminate ranging of a subsequent round (measurement round) relative to the round i, for example, the identifier of the last measurement round in the plurality of consecutive measurement rounds is F, indicating that measurement of a round i+F is terminated. A possible format of the identifier of the last measurement round in the plurality of consecutive measurement rounds included in the fourth message is shown in Table 35-1 or Table 35-2.

**Table 35-1**

| |
|---|
| Octets: 2 |
| Termination Round Index |

As shown in Table 35-2, the identifier of the last measurement round in the plurality of consecutive measurement rounds included in the fourth message occupies 2 octets, and Termination Round Index indicates the index of the last measurement round in the plurality of consecutive measurement rounds.

**Table 35-2**

| |
|---|
| Octets: 2 |
| Termination Relative Round Index |

As shown in Table 35-2, the identifier of the last measurement round in the plurality of consecutive measurement rounds included in the fourth message occupies 2 octets, and Relative Round Index Termination indicates the index value of the last measurement round, in the plurality of consecutive measurement rounds, relative to the current measurement round.

Example 3: The fourth message indicates to terminate measurement of one or more measurement rounds, and the fourth message includes identifiers of the one or more measurement rounds. For example, the fourth message includes an identifier of a measurement round, and the fourth message indicates to terminate measurement of the measurement round. A format of the identifier of the measurement round included in the fourth message may alternatively be similar to a format shown in Table X-1 (for example, a relative index value based on a round index is used, or an index value of the measurement round may be used). Details are not described herein again. In this example, the fourth message may indicate to terminate any round, regardless of whether rounds are consecutive, for example, indicate to terminate rounds 3, 6, 8, 10, and 11; or may indicate to terminate a single round.

Example 4: The fourth message includes a second bitmap, a j^{th} bit in the second bitmap corresponds to a j^{th} measurement round, and when the j^{th} bit is set to a specified value, the j^{th} bit indicates to terminate the j^{th} measurement round, where the j^{th} measurement round is included in the one or more measurement rounds, and j is an integer greater than or equal to 0. It may be understood that a bitmap manner may flexibly indicate to terminate measurement of any number of rounds, as shown in Table 35-3.

**Table 35-3**

| |
|---|
| Octets: TBD |
| Round Index Bitmap |

Each bit in Round Index Bitmap (namely, the second bitmap) indicates a round. A corresponding value 0 of the bit indicates that measurement of the round is not terminated, and a value 1 indicates that measurement of the round is terminated. The bit in Round Index Bitmap may indicate an absolute value of a round index. In addition, the bit in Round Index Bitmap may alternatively indicate a relative value (namely, a relative index value) of a round index, that is, a 1^{st} bit in Round Index Bitmap indicates a current round i, and another subsequent bit indicates another subsequent round relative to the round i, as shown in Table 35-4. Details are not described herein.

**Table 35-4**

| |
|---|
| Octets: TBD |
| Relative Round Index Bitmap |

In Table 35-4, a 1^{st} bit in Relative Round Index Bitmap indicates the current round i, namely, the current measurement round.

Example 4: The fourth message indicates to terminate measurement of a plurality of measurement rounds, the plurality of measurement rounds are included in two or more measurement blocks, and the fourth message includes identifiers of the plurality of measurement rounds. The example is applicable to a case in which a current round and a subsequent round are located in different blocks. For example, FIG. 14B shows a round 1 in a block M-1 and a round 1 in a block M. FIG. 14B is a diagram of measurement rounds in a measurement block M-1 (Block M-1) and a measurement block (Block M) according to an embodiment of this application. For another example, FIG. 14C shows a round 0 in a block M-1 and a round 1 in a block M. FIG. 14C is a diagram of other measurement rounds in a measurement block M-1 (Block M-1) and a measurement block (Block M) according to an embodiment of this application. A possible format of the identifier of the measurement round included in the fourth message is shown in Table 35-5 or Table 35-6.

**Table 35-5**

| | |
|---|---|
| Octets: TBD | Octets: TBD |
| Block Index | Round Index |

The Block Index field indicates a measurement block in which a measurement round for which measurement needs to be terminated is located, and the Round Index field indicates a measurement round for which measurement needs to be terminated. Table 35-5 may include a plurality of rows (lists), and each row (each list element) indicates a measurement round for which measurement needs to be terminated.

**Table 35-6**

| | |
|---|---|
| Octets: TBD | Octets: TBD |
| Block Index Bitmap | Round Index Bitmap List |

Each bit in Block Index Bitmap indicates a block. A corresponding value 0 of the bit indicates that the block does not include a round for which measurement needs to be terminated, and a value 1 indicates that the block includes a round for which measurement needs to be terminated. The bit in Block Index Bitmap may indicate an absolute value of a block index. In addition, the bit in Block Index Bitmap may alternatively indicate a relative value (namely, a relative index value) of a block index, that is, a 1^{st} bit in block Index Bitmap indicates a current block i, and another subsequent bit indicates another subsequent block relative to the block i.

Round Index Bitmap List includes a plurality of round index bitmaps, that is, each list element in Round Index Bitmap List is a round index bitmap. In other words, for each round index bitmap included in Round Index Bitmap List, a value of a bit, in Block Index Bitmap, corresponding to a block in which the round index bitmap is located is 1.

Each bit in Round Index Bitmap indicates a round. A corresponding value 0 of the bit indicates that measurement of the round is not terminated, and a value 1 indicates that measurement of the round is terminated. The bit in Round Index Bitmap may indicate an absolute value of a round index. In addition, the bit in Round Index Bitmap may alternatively indicate a relative value (namely, a relative index value) of a round index, that is, a 1^{st} bit in Round Index Bitmap indicates a current round i, and another subsequent bit indicates another subsequent round relative to the round i. For example, when Block Index Bitmap is 00110000, it means that a block 2 and a block 3 include rounds that need to be terminated, that is, it means that Round Index Bitmap List includes two list elements. A 1^{st} list element is Round Index Bitmap corresponding to the block 2, and a 2^{nd} list element is Round Index Bitmap corresponding to the block 3. Further, when Round Index Bitmap corresponding to the block 2 is 00000111, it means that measurement of rounds 5, 6, and 7 in the block 2 needs to be terminated. When Round Index Bitmap corresponding to the block 3 is 10011000, it means that measurement of rounds 0, 3, and 4 in the block 3 needs to be terminated.

Further, it is extended to a timing structure including a hyper block (hyper measurement block), that is, a case in which time lengths of different blocks may not be the same, or a case in which numbers of rounds in different blocks and/or a time length of a single round in a block may not be the same. FIG. 14D is a diagram of other measurement rounds in a measurement block M-1 (Block M-1) and a measurement block (Block M) according to an embodiment of this application. As shown in FIG. 14D, the block M-1 includes three rounds, and a round 1 is used for measurement between the initiator and the responder. The block M includes four rounds, a round 4 is used for measurement between the initiator and the responder. A round length of the block M-1 may be the same as or different from a round length of the block M. When a hyper block (hyper measurement block) shown in FIG. 14D is used for measurement between the initiator and the responder, a possible format of the identifier of the measurement round included in the fourth message is shown in Table 35-7.

**Table 35-7**

| | | |
|---|---|---|
| Octets: TBD | Octets: TBD | Octets: TBD |
| Hyper Block Index (optional) | Block Index | Round Index |

The Hyper Block Index field indicates a hyper block in which a measurement round for which measurement needs to be terminated is located, the Block Index field indicates a measurement block in which a measurement round for which measurement needs to be terminated is located, and the Round Index field indicates a measurement round for which measurement needs to be terminated.

Example 5: The fourth message directly indicates a block index of a block for which measurement needs to be terminated. Regardless of a number of rounds originally used for measurement in the block, once the block index is indicated, corresponding ranging is terminated. For details, refer to Table 35-8.

**Table 35-8**

| |
|---|
| Octets: TBD |
| Termination Block Index |

Termination Block Index indicates a block index of a block for which measurement needs to be terminated. Table 35-8 may include a plurality of rows, and each row indicates a block index of a block for which measurement needs to be terminated. Alternatively, the fourth message carries a block index, and the fourth message indicates to terminate measurement from a current block to a block corresponding to the block index.

Example 6: The fourth message directly indicates a round, in a current block, for which measurement needs to be terminated, and one or more rounds in the block may be originally used for measurement between the current initiator and the responder. Corresponding measurement of the round indicated to be terminated is terminated. A relative indication and an absolute indication are included. A subsequent block reuses a termination manner of the current block, that is, a round, in the subsequent block, for which measurement needs to be terminated is the same as the round, in the current block, for which measurement needs to be terminated. FIG. 14E is a diagram of other measurement rounds in a measurement block M-1 (Block M-1) and a measurement block (Block M) according to an embodiment of this application. As shown in FIG. 14E, a gray round (namely, a round 1 in each block) indicates a round, in the block, that is originally used for measurement between the current initiator and the responder. FIG. 14F is a diagram of other measurement rounds in a measurement block M-1 (Block M-1) and a measurement block (Block M) according to an embodiment of this application. As shown in FIG. 14F, a gray round (namely, a round 1, a round 2, and a round 3 in each block) indicates a round, in the block, that is originally used for measurement between the current initiator and the responder. Table 35-9 and Table 35-10 show examples of an indication format of the fourth message.

**Table 35-9**

| |
|---|
| Octets: TBD |
| Rounds to be terminated (relative indication) |

Table 35-9 indicates a round, in a current block, that needs to be terminated, and a relative indication method is used. When Number of rounds to be terminated=0, it indicates to terminate measurement of a current round (it is assumed that a subscript of the current round is i). When Number of rounds to be terminated=N, it indicates to terminate measurement of rounds from the current round i to a round i+N, where the rounds include the round i and the round i+N. A specific value indicates to terminate measurement of all remaining rounds.

For a subsequent block (not the current block), a same termination manner is used, that is, measurement of all rounds from the round i to the round i+N in the subsequent block is terminated, where the rounds include the round i and the round i+N.

**Table 35-10**

| |
|---|
| Octets: TBD |
| Rounds to be terminated |

Table 35-10 indicates a number of rounds that need to be terminated, and an absolute indication method is used. When Number of rounds to be terminated=0, it indicates to terminate measurement of a round 0 in a current block. When Number of rounds to be terminated=N, it indicates to terminate measurement of rounds from the round 0 to a round N in the current block, where the rounds include the round 0 and the round N. A specific value indicates to terminate measurement of all remaining rounds.

For a subsequent block (not the current block), a same termination manner is used, that is, measurement of all rounds from the round 0 to the round N in the subsequent block is terminated, where the rounds include the round 0 and the round N.

In embodiments of this application, the first device sends the first message. The first message indicates the expiry time of the CAP, so that the target second device sends the second message before the expiry time. This can reduce duration of receiving the second message, to reduce energy consumption. The first device sends the third message. The third message includes the information indicating the moment at which the fourth message is sent. This can reduce duration in which the target second device enables the receiver to receive a possible updated SOR message, to reduce energy consumption.

The following further describes a function of the Time offset for the next SOR field in Table 13.

In a possible implementation, when the Time offset for the next SOR field in Table 13 is not present, that is, the Time offset for the next SOR Presence field is 0, the current system reuses a value of the Time offset for the next SOR field configured by default, or reuses a value of the Time offset for the next SOR field configured last time, to indicate a slot for the responder to receive the SOR message for parameter configuration update. In other words, when the value of the Time offset for the next SOR field uses the default value or reuses the value configured last time, the responder periodically listens to an SOR message sent by the initiator for parameter configuration update, where a period length is Time offset for the next SOR. Correspondingly, if the initiator updates, in the SOR message, a time length for receiving the SOR message next time, in a current total ranging service duration, the responder essentially listens, in an aperiodic manner, to an SOR message sent by the initiator for parameter configuration update.

In a possible implementation, the initiator may further set a function of disabling the Time offset for the next SOR field, that is, the system does not reserve a slot for the responder to receive a possible SOR message for configuration update. In this case, the responder cannot receive, in the specified slot, the SOR message for parameter configuration update, and reuses configuration of the initial SOR message to complete ranging.

In a possible implementation, a control field is added to enable and disable Time offset for the next SOR. For example, the third message is an SOR message, and the Time offset for the next SOR field is carried in the content field shown in Table 1-2. Table 36 shows an example of the content field carrying the Time offset for the next SOR field.

**Table 36**

| **Bits: 0** | **1 and 2** | **3 to 7** | **Octets: TBD** | **Octets: TBD** |
|---|---|---|---|---|
| Device Parameters Management enabled | Time offset for the next SOR Control | RFU | Device Parameters Management (DPM) | Time offset for the next SOR |

For meanings of the Device Parameters Management enabled field, the Device Parameters Management field, and the Time offset for the next SOR field in Table 36, refer to meanings of fields in Table 31. The Time offset for the next SOR Control field may be used to enable and disable Time offset for the next SOR. Table 37 shows values of the Time offset for the next SOR Control field and meanings of the values.

**Table 37**

| Value of a Time offset for the next SOR Control field | Corresponding meaning |
|---|---|
| 0 | Disable a function of Time offset for the next SOR (that is, a system does not reserve a slot for a responder to receive a possible SOR message for parameter configuration update) |
| 1 | Enable the function of Time offset for the next SOR and present the Time offset for the next SOR field (this means that the Time offset for the next SOR field is configured in the current SOR message.) |
| 2 | Enable the function of Time offset for the next SOR, but do not present the Time offset for the next SOR field, where the Time offset for the next SOR field reuses a default value of the system |
| 3 | Enable the function of Time offset for the next SOR, but do not present the Time offset for the next SOR field, where the Time offset for the next SOR field reuses a value configured in previous SOR |

The meanings of the values of the Time offset for the next SOR Control field are merely examples, and are not limited.

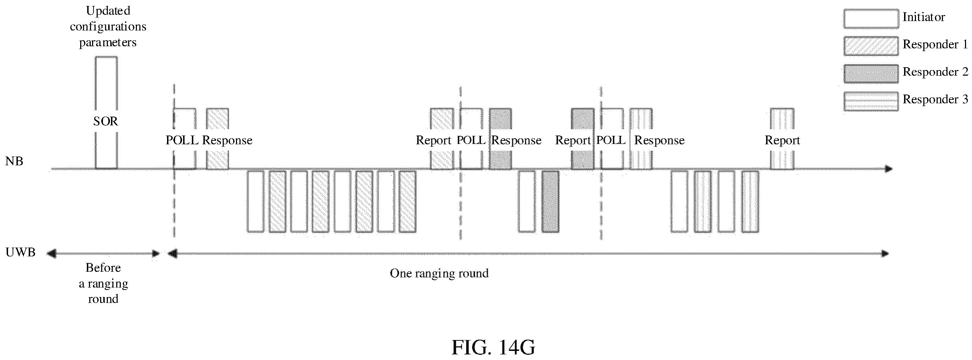

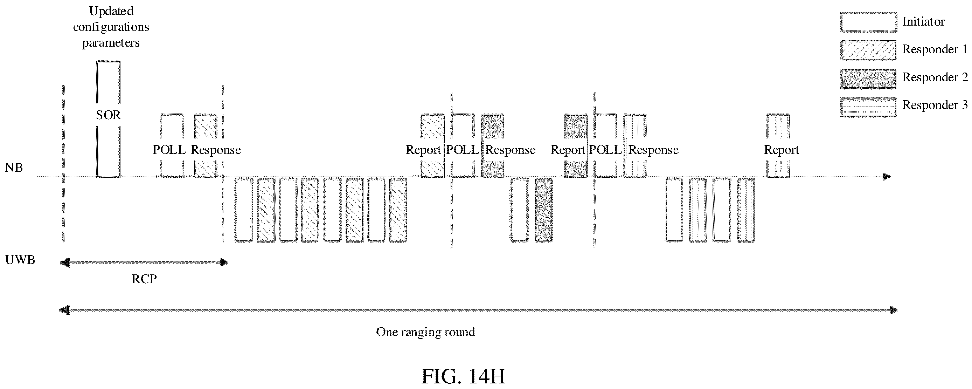

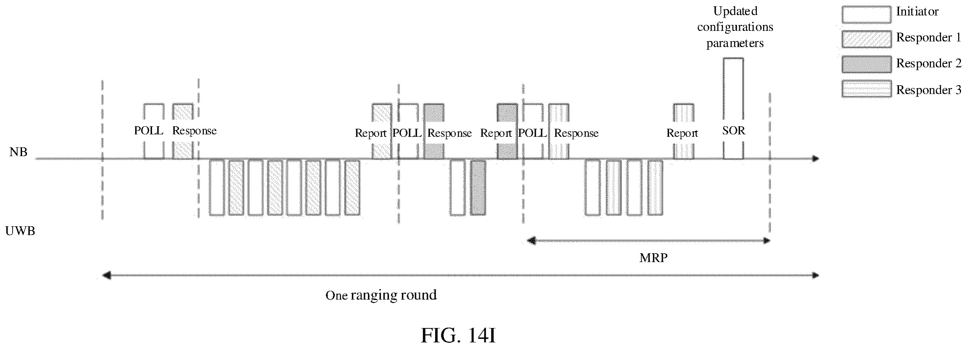

In a possible implementation, a slot location indicated by the Time offset for the next SOR field is any one of the following: a slot before a next measurement round (which may be referred to as a round for short) starts, one or more slots in a measurement control phase of the next round, a slot in a measurement report phase (measurement report phase, MRP) of the next round, a slot in a ranging phase (ranging phase, RP) of the next round, and a slot in an RP or MRP phase of a current round. When the SOR message for parameter configuration update appears in the MRP phase of the current/next round, the SOR message may be sent in an unused slot (unused slot(s)) in the MRP phase. For another example, the SOR message may alternatively be carried in a report message sent by the initiator to the responder, that is, the report message carries the SOR message. This is not limited in the present invention. FIG. 14G is a diagram of receiving, in a slot before a next round starts, an SOR message for parameter configuration update. FIG. 14H is a diagram of receiving, in one or more slots in an RCP of a next round, an SOR message for parameter configuration update. FIG. 14I is a diagram of receiving, in one or more slots in an MRP of a next round or a current round, an SOR message for parameter configuration update. Further, as shown in FIG. 14G, it can be learned that the unused slot in the MRP may be used by the initiator to broadcast the SOR message.

In a possible implementation, the message for parameter configuration update may not be carried in the SOR message, but is carried in another message. In other words, the third message may not be an SOR message. In this case, Time offset for the next SOR may be referred to as another name, for example, Time offset for the next update. This is not limited in this application.

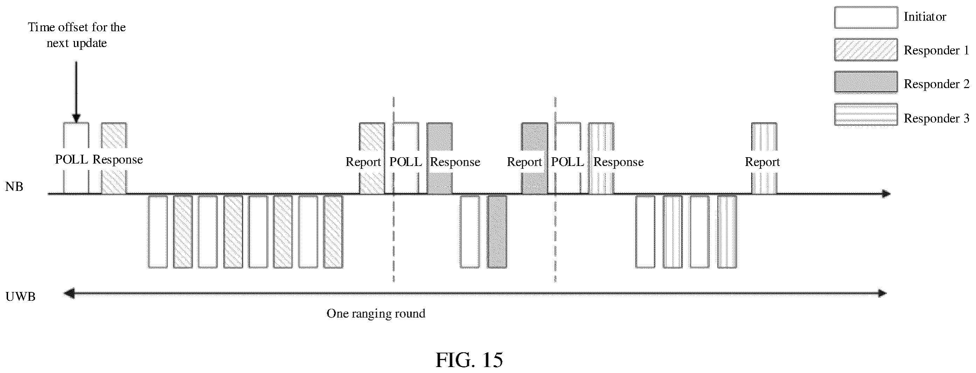

For example, in a one-to-many NBA-MMS UWB system, the DPL and Time offset for the next update (as shown in Table 32) that are sent to all responders may be carried in a POLL message sent by the initiator to a 1^{st} responder. In other words, the POLL message for the 1^{st} responder is sent in a broadcast manner. In this case, parameter configuration takes effect in a current round, that is, takes effect in a measurement phase after the POLL and the RESP are exchanged, as shown in FIG. 15. FIG. 15 shows that a POLL message sent by an initiator to a 1^{st} responder also carries a slot, namely, Time offset for the next update, that is for a next update and that is broadcast to all responders. Time offset for the next update may indicate whether a next POLL message or another message carries a message for parameter update.

For another example, Time offset for the next update may alternatively be implicitly indicated. For example, whether a POLL message sent by the initiator to the 1^{st} responder in a next round uses a broadcast address is indicated, to indicate whether the Time offset for the next update field in the next round appears. When it is indicated that the POLL message sent by the initiator to the 1^{st} responder in the next round does not use a broadcast address, it means that in the next round, the responder (not the initial responder) does not listen to the POLL message sent by the initiator to the 1^{st} responder to obtain a message for parameter update. This is similar to Table 37. The responder reuses the previous parameter configuration, or uses the default parameter configuration of the system. Details are not described herein again.

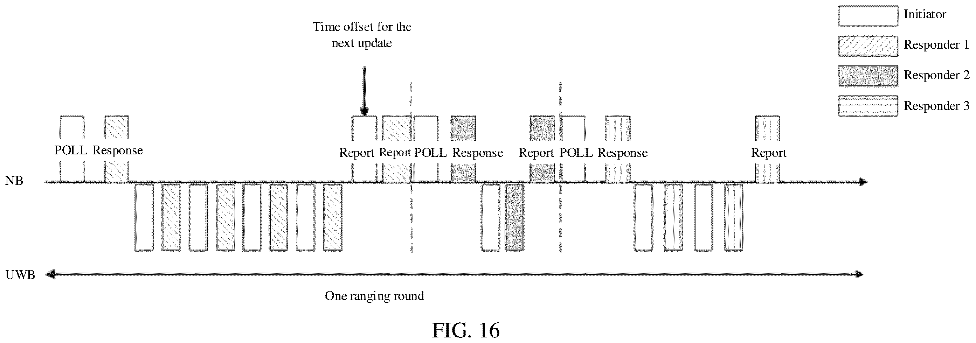

For another example, in the one-to-many NBA-MMS UWB system, in the MRP phase, the DPL and Time offset for the next update that are sent to all responders may be carried in a report message sent by the initiator to the responder. In other words, the report message for any responder is sent in a broadcast manner. In this case, the updated parameter configuration takes effect in the next round (not the current round), as shown in FIG. 16. FIG. 16 shows that an initiator broadcasts, to all responders based on a report message, a slot, namely, Time offset for the next update, for a next update. For another example, in the one-to-many NBA-MMS UWB system, the initiator sends a DPL to all responders in an unused slot in the MRP phase. In other words, in addition to receiving the report message including measurement information, any responder further receives a message including the DPL, and both the report message including the measurement information and the message including the DPL are sent in a broadcast manner. In this case, the updated parameter configuration takes effect in a next round (not the current round). In this case, the updated parameter configuration may alternatively take effect in the current round, namely, a phase (an RP phase or an MRP phase) after an RCP.

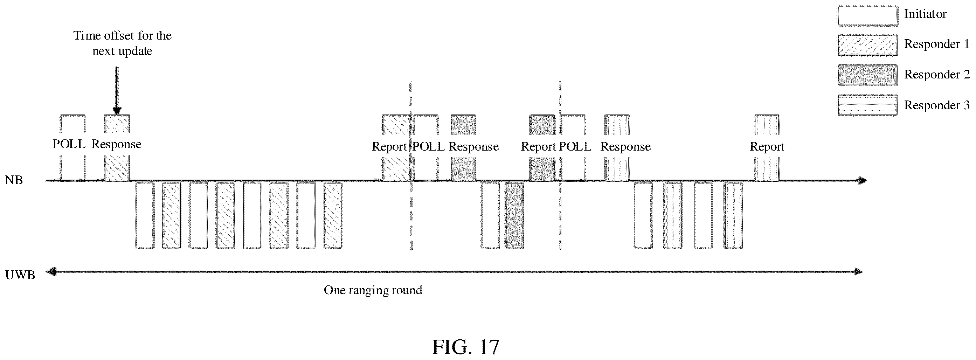

For another example, when a responder is a controller (that is, the initiator is not a controller), the DPL and Time offset for the next update may alternatively be carried in a response message sent by the responder in the RCP phase. In other words, the response message sent by the responder is sent in a broadcast manner. In this case, the updated parameter configuration takes effect in the next round (not the current round), as shown in FIG. 17. FIG. 17 shows that an initiator broadcasts, to all responders based on a response message, a slot, namely, Time offset for the next update, for a next update. In this case, the updated parameter configuration may alternatively take effect in the current round, namely, a phase (an RP phase or an MRP phase) after the RCP.

In addition, because the POLL/response/report message may be carried in an NB message, an NB signal in a compressed PSDU format may be used to carry the POLL/response/report message, to reduce a duty cycle of the NB signal in working time, reduce energy consumed by device processing, and reduce interference between devices. Table 1-1 shows an example of a compressed PSDU format that can carry the POLL/response/report message. Table 38 shows an example format of the compressed PSDU.

**Table 38**

| Octets: 1 | Octets: 2 | Variable | 2 |
|---|---|---|---|
| Message ID | Address | Content | CRC |

For meanings of fields in Table 38, refer to definitions of the fields in Table 1-2. Details are not described herein again.

Based on the format shown in Table 38, examples of formats in which Time offset for the next update information is carried in the POLL/response/report message are shown in Table 39, Table 40, and Table 41.

**Table 39**

| Octets: 1 | Octets: 2 | Octets: TBD | 2 |
|---|---|---|---|
| Message ID for POLL message (for example, 0x00) | Address | Time offset for the next update | CRC |

**Table 40**

| Octets: 1 | Octets: 2 | Octets: TBD | 2 |
|---|---|---|---|
| Message ID for RESPONSE message (for example, 0x01) | Address | Time offset for the next update | CRC |

**Table 41**

| Octets: 1 | Octets: 2 | Octets: TBD | 2 |
|---|---|---|---|
| Message ID for REPORT message (for example, 0x02) | Address | Time offset for the next update | CRC |

A specific value of Message ID is not limited in this application. Values of the message IDs and meanings of the values shown in Table 39, Table 40, and Table 41 are all examples.

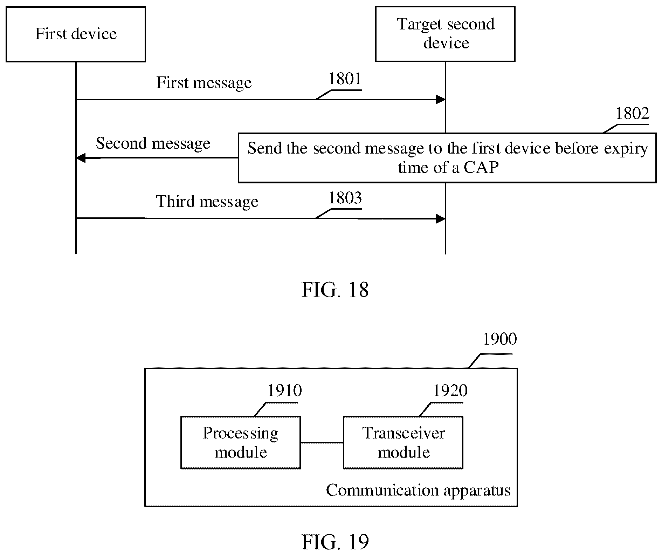

FIG. 18 is an interaction flowchart of another communication method for a UWB according to an embodiment of this application. As shown in FIG. 18, the method includes the following steps.

1801: A first device sends a first message.

Correspondingly, one or more second devices receive the first message. The first message indicates expiry time of a CAP. The CAP is a period of time in which sending of a response message for the first message is allowed. For example, the first message includes a first field, and the first field indicates that the first message includes information indicating the expiry time of the CAP. For step 1801, refer to step 1301.

1802: A target second device sends a second message to the first device before the expiry time of the CAP.

Correspondingly, the first device receives the second message. The second message may be a response message sent by the target second device for the first message. In some embodiments, the first device may receive response messages for the first message from the one or more second devices before the expiry time of the CAP. For step 1802, refer to step 1302.

1803: The first device sends a third message.

In a possible implementation, the third message carries information indicating a moment at which a fourth message is sent. The fourth message is sent to some or all of the plurality of second devices. For example, the third message is a POLL message, and the fourth message is a POLL message sent by the first device after the first device sends the third message.

In a possible implementation, the third message includes a second field, and the second field indicates that the third message includes the information indicating the moment at which the fourth message is sent. The third message may further include addresses of some or all of the plurality of second devices. The field that is in the third message and that indicates the moment at which the fourth message is sent may be referred to as a Time offset for the next POLL field. The second field is used to control that the Time offset for the next POLL field is present or not. For example, when a value of the second field is 0, the Time offset for the next POLL field is not present. When a value of the second field is 1, the Time offset for the next POLL field is present.

In a possible implementation, the third message indicates to terminate measurement of a current round or measurement of a next round, to reduce resource overheads and unnecessary measurement.

In a possible implementation, the fourth message indicates to terminate measurement of a current round or measurement of a next round, to reduce resource overheads and unnecessary measurement.

In embodiments of this application, the first device sends the first message. The first message indicates the expiry time of the CAP, so that the target second device sends the second message before the expiry time. This can reduce duration of receiving the second message, to reduce energy consumption. The first device sends the third message. The third message includes the information indicating the moment at which the fourth message is sent. This can reduce duration in which the target second device enables the receiver to receive a possible updated SOR message, to reduce energy consumption.

The following describes, with reference to the accompanying drawings, structures of communication apparatuses that can implement the communication method for a UWB provided in embodiments of this application.

FIG. 19 is a diagram of a structure of a communication apparatus 1900 according to an embodiment of this application. The communication apparatus 1900 may correspondingly implement functions or steps implemented by the transmitter in the foregoing method embodiments, or may correspondingly implement functions or steps implemented by the receiver in the foregoing method embodiments, or may correspondingly implement functions or steps implemented by the first device in the foregoing method embodiments, or may correspondingly implement functions or steps implemented by the target second device in the foregoing method embodiments. The communication apparatus may include a processing module 1910 and a transceiver module 1920. In a possible implementation, the apparatus may further include a storage unit. The storage unit may be configured to store instructions (code or a program) and/or data. The processing module 1910 and the transceiver module 1920 may be coupled to the storage unit. For example, the processing module 1910 may read the instructions (the code or the program) and/or the data in the storage unit, to implement a corresponding method. The foregoing units may be independently disposed, or may be partially or completely integrated. For example, the transceiver module 1920 may include a sending module and a receiving module. The sending module may be a transmitter, and the receiving module may be a receiver. An entity corresponding to the transceiver module 1920 may be a transceiver, or may be a communication interface.

In some possible implementations, the communication apparatus 1900 can correspondingly implement behavior and the functions of the transmitter in the foregoing method embodiments. For example, the communication apparatus 1900 may be the transmitter, or may be a component (for example, a chip or a circuit) used in the transmitter. For example, the transceiver module 1920 may be configured to perform all receiving or sending operations performed by the transmitter in embodiments in FIG. 8 to FIG. 11, for example, step 802 in the embodiment shown in FIG. 8, step 901 and step 903 in the embodiment shown in FIG. 9, and step 1002 in the embodiment shown in FIG. 10, and step 1101 and step 1103 in the embodiment shown in FIG. 11. The processing module 1910 is configured to perform all operations, other than the receiving and sending operations, performed by the transmitter in the embodiments in FIG. 8 to FIG. 11, for example, step 801 in the embodiment shown in FIG. 8.

In some possible implementations, the communication apparatus 1900 can correspondingly implement behavior and the functions of the receiver in the foregoing method embodiments. For example, the communication apparatus 1900 may be the receiver, or may be a component (for example, a chip or a circuit) used in the receiver. The transceiver module 1920 may be configured to perform, for example, all receiving or sending operations performed by the receiver in the embodiments in FIG. 8 to FIG. 11, for example, step 802 in the embodiment shown in FIG. 8, step 901 and step 903 in the embodiment shown in FIG. 9, step 1002 in the embodiment shown in FIG. 10, and step 1101 and step 1103 in the embodiment shown in FIG. 11. The processing module 1910 is configured to perform all operations, other than the receiving and sending operations, performed by the receiver, for example, step 803 in the embodiment shown in FIG. 8, and step 902, step 904, and step 905 in the embodiment shown in FIG. 9.

In some possible implementations, the communication apparatus 1900 can correspondingly implement behavior and the functions of the first device in the foregoing method embodiments. For example, the communication apparatus 1900 may be the first device, or may be a component (for example, a chip or a circuit) used in the first device. For example, the transceiver module 1920 may be configured to perform all receiving or sending operations performed by the first device in embodiments shown in FIG. 13 and FIG. 18. The processing module 1910 is configured to perform all operations, other than the receiving and sending operations, performed by the first device.

In some possible implementations, the communication apparatus 1900 can correspondingly implement behavior and the functions of the target second device in the foregoing method embodiments. For example, the communication apparatus 1900 may be the target second device, or may be a component (for example, a chip or a circuit) used in the target second device. For example, the transceiver module 1920 may be configured to perform all receiving or sending operations performed by the target second device in embodiments shown in FIG. 13 and FIG. 18. The processing module 1910 is configured to perform all operations, other than the receiving and sending operations, performed by the target second device.

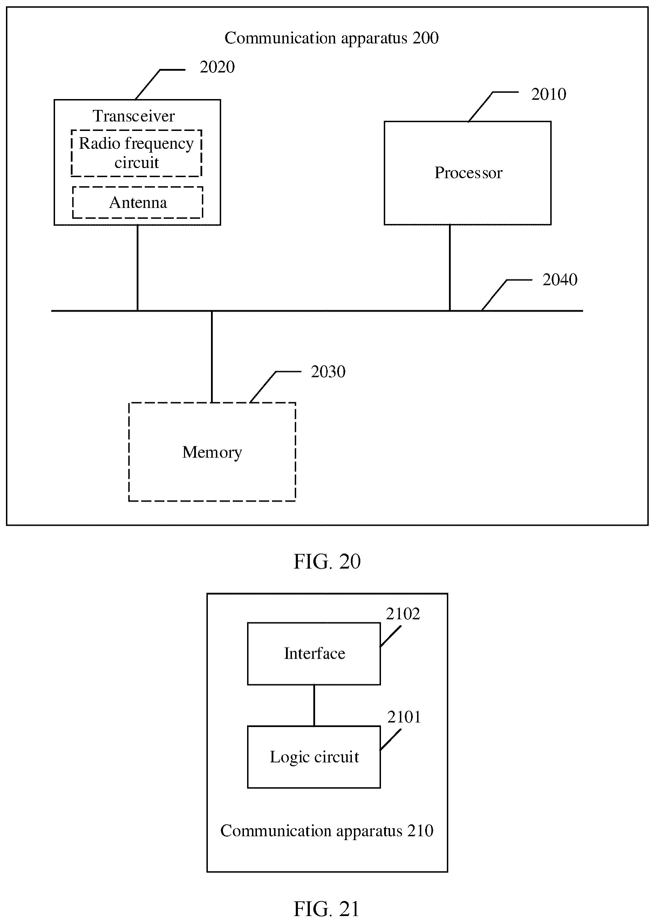

FIG. 20 is a diagram of a structure of another communication apparatus 200 according to an embodiment of this application. The communication apparatus in FIG. 20 may be the foregoing transmitter, the foregoing receiver, the foregoing first device, or the foregoing target second device.

As shown in FIG. 20, the communication apparatus 200 includes at least one processor 2010 and a transceiver 2020.

In some embodiments of this application, the processor 2010 and the transceiver 2020 may be configured to perform functions, operations, or the like performed by the transmitter. For example, the transceiver 2020 is configured to perform all receiving or sending operations performed by the transmitter in embodiments in FIG. 8 to FIG. 11. For example, the processor 2010 is configured to perform all operations, other than the receiving and sending operations, performed by the transmitter in the embodiments in FIG. 8 to FIG. 11.

In some embodiments of this application, the processor 2010 and the transceiver 2020 may be configured to perform functions, operations, or the like performed by the receiver. For example, the transceiver 2020 is configured to perform all receiving or sending operations performed by the receiver in the embodiments in FIG. 8 to FIG. 11. For example, the processor 2010 is configured to perform all operations, other than the receiving and sending operations, performed by the receiver in the embodiments in FIG. 8 to FIG. 11.

In some embodiments of this application, the processor 2010 and the transceiver 2020 may be configured to perform functions, operations, or the like performed by the first device. For example, the transceiver 2020 is configured to perform all receiving or sending operations performed by the first device in embodiments shown in FIG. 13 and FIG. 18. For example, the processor 2010 is configured to perform all operations, other than the receiving and sending operations, performed by the first device in the embodiments in FIG. 13 and FIG. 18.

In some embodiments of this application, the processor 2010 and the transceiver 2020 may be configured to perform functions, operations, or the like performed by the target second device. For example, the transceiver 2020 is configured to perform all receiving or sending operations performed by the target second device in the embodiments shown in FIG. 13 and FIG. 18. For example, the processor 2010 is configured to perform all operations, other than the receiving and sending operations, performed by the target second device in the embodiments in FIG. 13 and FIG. 18.

The transceiver 2020 is configured to communicate with another device/apparatus through a transmission medium. The processor 2010 receives and sends data and/or signaling by using the transceiver 2020, and is configured to implement the method in the foregoing method embodiments. The processor 2010 may implement functions of the processing module 1910, and the transceiver 2020 may implement functions of the transceiver module 1920.

Optionally, the transceiver 2020 may include a radio frequency circuit and an antenna. The radio frequency circuit is mainly configured to perform conversion between a baseband signal and a radio frequency signal, and process the radio frequency signal. The antenna is mainly configured to receive or send a radio frequency signal in a form of an electromagnetic wave. An input/output apparatus like a touchscreen, a display, or a keyboard is mainly configured to: receive data input by a user and output data to the user.

Optionally, the communication apparatus 200 may further include at least one memory 2030, configured to store program instructions and/or data. The memory 2030 is coupled to the processor 2010. Coupling in embodiments of this application is indirect coupling or communication connection between apparatuses, units, or modules, and may be in an electrical, mechanical, or another form, and is used for information exchange between the apparatuses, units, or modules. The processor 2010 may cooperate with the memory 2030. The processor 2010 may execute the program instructions stored in the memory 2030. At least one of the at least one memory may be included in the processor.

The processor 2010 may read a software program in the memory 2030, interpret and execute instructions of the software program, and process data of the software program. When data needs to be sent in a wireless manner, the processor 2010 performs baseband processing on the to-be-sent data, and then outputs a baseband signal to the radio frequency circuit. The radio frequency circuit performs radio frequency processing on the baseband signal, and then sends the radio frequency signal in a form of an electromagnetic wave through the antenna. When data is sent to the communication apparatus, the radio frequency circuit receives a radio frequency signal through the antenna, converts the radio frequency signal into a baseband signal, and outputs the baseband signal to the processor 2010. The processor 2010 converts the baseband signal into data and processes the data.

In another implementation, the radio frequency circuit and the antenna may be disposed independent of the processor that performs baseband processing. For example, in a distributed scenario, the radio frequency circuit and the antenna may be remotely disposed independent of the communication apparatus.

A specific connection medium between the transceiver 2020, the processor 2010, and the memory 2030 is not limited in embodiments of this application. In embodiments of this application, the memory 2030, the processor 2010, and the transceiver 2020 are connected through a bus 2040 in FIG. 20. The bus is represented by using a bold line in FIG. 20. A manner of connection between other components is merely an example for description, and is not limited thereto. The bus may be classified into an address bus, a data bus, a control bus, or the like. For ease of representation, only one bold line represents the bus in FIG. 20, but this does not mean that there is only one bus or only one type of bus.

In embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor or any conventional processor or the like. The steps of the methods disclosed with reference to embodiments of this application may be directly executed and accomplished by a hardware processor, or may be executed and accomplished by using a combination of hardware and software modules in the processor.

FIG. 21 is a diagram of a structure of another communication apparatus 210 according to an embodiment of this application. As shown in FIG. 21, the communication apparatus shown in FIG. 21 includes a logic circuit 2101 and an interface 2102. The processing module 1910 in FIG. 19 may be implemented by using the logic circuit 2101, and the transceiver module 1920 in FIG. 19 may be implemented by using the interface 2102. The logic circuit 2101 may be a chip, a processing circuit, an integrated circuit, a system on chip (system on chip, SoC), or the like, and the interface 2102 may be a communication interface, an input/output interface, or the like. In embodiments of this application, the logic circuit may be further coupled to the interface. A specific manner of connection between the logical circuit and the interface is not limited in embodiments of this application.

In some embodiments of this application, the logic circuit and the interface may be configured to perform functions, operations, or the like performed by the transmitter.

In some embodiments of this application, the logic circuit and the interface may be configured to perform functions, operations, or the like performed by the receiver.

In some embodiments of this application, the logic circuit and the interface may be configured to perform functions, operations, or the like performed by the first device.

In some embodiments of this application, the logic circuit and the interface may be configured to perform functions, operations, or the like performed by the target second device.

This application further provides a computer-readable storage medium. The computer-readable storage medium stores a computer program or instructions. When the computer program or the instructions are run on a computer, the computer is enabled to perform the method in the foregoing embodiments.

This application further provides a computer program product. The computer program product includes instructions or a computer program. When the instructions or the computer program is run on a computer, the method in the foregoing embodiments is performed.

This application further provides a communication system, including the transmitter and the receiver.

This application further provides a communication system, including the first device and the target second device.

This application further provides a chip. The chip includes a communication interface and a processor. The communication interface is configured to receive and send a signal of the chip. The processor is configured to execute computer program instructions, so that a communication apparatus including the chip performs the method in the foregoing embodiments.

All or some of the foregoing embodiments may be implemented by using software, hardware, firmware, or any combination thereof. When software is used to implement embodiments, all or a part of the embodiments may be implemented in a form of a computer program product. The computer program product includes one or more computer programs or instructions. When the computer programs or instructions are loaded and executed on a computer, the procedures or the functions described in embodiments of this application are all or partially performed. The computer may be a general-purpose computer, a dedicated computer, a computer network, a network device, user equipment, or another programmable apparatus. The computer programs or the instructions may be stored in the computer-readable storage medium, or may be transmitted from a computer-readable storage medium to another computer-readable storage medium. For example, the computer programs or the instructions may be transmitted from a website, computer, server, or data center to another website, computer, server, or data center in a wired or wireless manner. The computer-readable storage medium may be any usable medium accessible by the computer, or a data storage device, for example, a server or a data center, integrating one or more usable media. The usable medium may be a magnetic medium, for example, a floppy disk, a hard disk, or a magnetic tape, may be an optical medium, for example, a digital video disc, or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions between different embodiments are/is consistent and may be mutually referenced, and technical features in different embodiments may be combined based on an internal logical relationship thereof, to form a new embodiment.

## Claims

1. A communication method for an ultra-wideband UWB, comprising:
generating a first message, wherein the first message comprises a first bitmap, the first bitmap comprises N bits, an i^{th} bit in the first bitmap corresponds to an i^{th} UWB device, and when the i^{th} bit is set to a specified value, the i^{th} bit indicates a location of parameter configuration information of the i^{th} UWB device in a first device parameters list DPL, wherein i is greater than or equal to 1 and less than or equal to N, N is an integer greater than 0, and the first DPL is comprised in the first message; and
sending the first message.

2. A communication method for an ultra-wideband UWB, comprising:
receiving a first message, wherein the first message comprises a first bitmap, the first bitmap comprises N bits, and an i^{th} bit in the first bitmap corresponds to an i^{th} UWB device; and
determining a location of parameter configuration information of the i^{th} UWB device in a first device parameters list DPL when the i^{th} bit is set to a specified value, wherein i is greater than or equal to 1 and less than or equal to N, N is an integer greater than 0, and the first DPL is comprised in the first message.

3. The method according to claim 1 or 2, wherein the first DPL comprises one or more list elements arranged in order, and when the i^{th} bit is an F^{th} bit that is arranged in order in the first bitmap and that is set to the specified value, the i^{th} bit indicates that an F^{th} list element in the first DPL comprises the parameter configuration information of the i^{th} UWB device, wherein F is an integer greater than 0.

4. The method according to claim 3, wherein the first message further comprises a first field, and the first field indicates to use the first bitmap to identify a location of parameter configuration information of a UWB device in the first DPL.

5. The method according to any one of claims 1 to 4, wherein the first message further comprises a field indicating a length of the first bitmap.

6. The method according to any one of claims 1 to 5, wherein the first message is comprised in a measurement initiation message or a poll/initiation POLL message.

7. The method according to claim 1, wherein before the sending the first message, the method further comprises:
sending a second message, wherein the second message comprises a second DPL, the second DPL comprises one or more list elements arranged in order, any list element in the second DPL comprises an address of a UWB device corresponding to the any list element, and an i^{th} list element arranged in order in the second DPL comprises the parameter configuration information of the corresponding i^{th} UWB device.

8. The method according to claim 2, wherein the first DPL comprises a plurality of list elements arranged in order, and determining the location of the parameter configuration information of the i^{th} UWB device in the first device parameters list DPL when the i^{th} bit is set to the specified value comprises:
when the i^{th} bit is an F^{th} bit that is arranged in order in the first bitmap and that is set to the specified value, determining that an F^{th} list element in the first DPL comprises the parameter configuration information of the i^{th} UWB device, wherein F is an integer greater than 0.

9. The method according to claim 2 or 8, wherein before receiving the first message, the method further comprises:
receiving a second message, wherein the second message comprises a second DPL, the second DPL comprises one or more list elements arranged in order, and any list element in the second DPL comprises an address of a UWB device corresponding to the any list element; and
determining, based on the second message, that an i^{th} list element arranged in order in the second DPL comprises the parameter configuration information of the corresponding i^{th} UWB device, wherein i is an integer greater than 0; and
determining the location of the parameter configuration information of the i^{th} UWB device in the first device parameters list DPL when the i^{th} bit is set to the specified value comprises:
determining that the i^{th} bit in the first bitmap corresponds to the i^{th} UWB device; and
determining the location of the parameter configuration information of the i^{th} UWB device in the first DPL when the i^{th} bit is set to the specified value.

10. A communication method for an ultra-wideband UWB, comprising:
generating a first message, wherein the first message comprises a first list element, the first list element comprises parameter configuration information of an i^{th} UWB device and an identifier of the i^{th} UWB device, the identifier indicates an order, in a device parameters list DPL, of a list element of the i^{th} UWB device in a second message, the second message is information sent before the first message is sent, the second message carries an address of the i^{th} UWB device, and the DPL is comprised in the second message; and
sending the first message.

11. A communication method for an ultra-wideband UWB, comprising:
receiving a first message, wherein the first message comprises a first list element, the first list element comprises parameter configuration information of an i^{th} UWB device and an identifier of the i^{th} UWB device, the identifier indicates an order, in a device parameters list DPL, of a list element of the i^{th} UWB device in a second message, the second message is information sent before the first message is sent, the second message carries an address of the i^{th} UWB device, and the DPL is comprised in the second message; and
determining the first list element based on the identifier.

12. The method according to claim 10 or 11, wherein the identifier occupies fewer than 2 octets.

13. The method according to any one of claims 10 to 12, wherein the first message further comprises a first field, and the first field indicates to use the identifier of the i^{th} UWB device to identify a location of the parameter configuration information of the i^{th} UWB device in the first DPL.

14. The method according to any one of claims 11 to 13, wherein the first message is comprised in a measurement initiation message or a poll/initiation POLL message.

15. The method according to claim 11, wherein before receiving the first message, the method further comprises:
receiving the second message; and
determining the order, in the DPL, of the list element of the i^{th} UWB device in the second message, and recording the order as the identifier.

16. A communication apparatus, comprising:
a processing module, configured to generate a first message, wherein the first message comprises a first bitmap, the first bitmap comprises N bits, an i^{th} bit in the first bitmap corresponds to an i^{th} UWB device, and when the i^{th} bit is set to a specified value, the i^{th} bit indicates a location of parameter configuration information of the i^{th} UWB device in a first device parameters list DPL, wherein i is greater than or equal to 1 and less than or equal to N, N is an integer greater than 0, and the first DPL is comprised in the first message; and
a transceiver module, configured to send the first message.

17. A communication apparatus, comprising:
a transceiver module, configured to receive a first message, wherein the first message comprises a first bitmap, the first bitmap comprises N bits, and an i^{th} bit in the first bitmap corresponds to an i^{th} UWB device; and
a processing module, configured to determine a location of parameter configuration information of the i^{th} UWB device in a first device parameters list DPL when the i^{th} bit is set to a specified value, wherein i is greater than or equal to 1 and less than or equal to N, N is an integer greater than 0, and the first DPL is comprised in the first message.

18. The communication apparatus according to claim 16 or 17, wherein the first DPL comprises one or more list elements arranged in order, and when the i^{th} bit is an F^{th} bit that is arranged in order in the first bitmap and that is set to the specified value, the i^{th} bit indicates that an F^{th} list element in the first DPL comprises the parameter configuration information of the i^{th} UWB device, wherein F is an integer greater than 0.

19. The communication apparatus according to claim 18, wherein the first message further comprises a first field, and the first field indicates to use the first bitmap to identify a location of parameter configuration information of a UWB device in the first DPL.

20. The communication apparatus according to any one of claims 16 to 19, wherein the first message further comprises a field indicating a length of the first bitmap.

21. The communication apparatus according to any one of claims 16 to 20, wherein the first message is comprised in a measurement initiation message or a poll/initiation POLL message.

22. The communication apparatus according to claim 16, wherein
the transceiver module is further configured to send a second message, wherein the second message comprises a second DPL, the second DPL comprises one or more list elements arranged in order, any list element in the second DPL comprises an address of a UWB device corresponding to the any list element, and an i^{th} list element arranged in order in the second DPL comprises the parameter configuration information of the corresponding i^{th} UWB device.

23. The communication apparatus according to claim 17, wherein the first DPL comprises a plurality of list elements arranged in order; and
the processing module is specifically configured to: when the i^{th} bit is an F^{th} bit that is arranged in order in the first bitmap and that is set to the specified value, determine that an F^{th} list element in the first DPL comprises the parameter configuration information of the i^{th} UWB device, wherein F is an integer greater than 0.

24. The communication apparatus according to claim 17 or 23, wherein
the transceiver module is further configured to receive a second message, wherein the second message comprises a second DPL, the second DPL comprises one or more list elements arranged in order, and any list element in the second DPL comprises an address of a UWB device corresponding to the any list element;
the processing module is further configured to determine, based on the second message, that an i^{th} list element arranged in order in the second DPL comprises the parameter configuration information of the corresponding i^{th} UWB device, wherein i is an integer greater than 0; and
the processing module is specifically configured to: determine that the i^{th} bit in the first bitmap corresponds to the i^{th} UWB device; and determine the location of the parameter configuration information of the i^{th} UWB device in the first DPL when the i^{th} bit is set to the specified value.

25. A communication apparatus, comprising:
a processing module, configured to generate a first message, wherein the first message comprises a first list element, the first list element comprises parameter configuration information of an i^{th} UWB device and an identifier of the i^{th} UWB device, the identifier indicates an order, in a device parameters list DPL, of a list element of the i^{th} UWB device in a second message, the second message is information sent before the first message is sent, the second message carries an address of the i^{th} UWB device, and the DPL is comprised in the second message; and
a transceiver module, configured to send the first message.

26. A communication apparatus, comprising:
a transceiver module, configured to receive a first message, wherein the first message comprises a first list element, the first list element comprises parameter configuration information of an i^{th} UWB device and an identifier of the i^{th} UWB device, the identifier indicates an order, in a device parameters list DPL, of a list element of the i^{th} UWB device in a second message, the second message is information sent before the first message is sent, the second message carries an address of the i^{th} UWB device, and the DPL is comprised in the second message; and
a processing module, configured to determine the first list element based on the identifier.

27. The communication apparatus according to claim 25 or 26, wherein the identifier occupies fewer than 2 octets.

28. The communication apparatus according to any one of claims 25 to 27, wherein the first message further comprises a first field, and the first field indicates to use the identifier of the i^{th} UWB device to identify a location of the parameter configuration information of the i^{th} UWB device in the first DPL.

29. The communication apparatus according to any one of claims 25 to 28, wherein the first message is comprised in a measurement initiation message or a poll/initiation POLL message.

30. The communication apparatus according to claim 26, wherein
the transceiver module is further configured to receive the second message; and
the processing module is further configured to determine the order, in the DPL, of the list element of the i^{th} UWB device in the second message, and record the order as the identifier.

31. A communication apparatus, comprising a processor, wherein the processor is coupled to a memory, the memory stores computer program instructions, and the processor is configured to execute the computer program instructions, so that the communication apparatus performs the method according to any one of claims 1 to 30.

32. A chip, comprising:
a communication interface, configured to receive and send a signal of the chip; and
a processor, configured to execute computer program instructions, so that a communication apparatus comprising the chip performs the method according to any one of claims 1 to 30.

33. A computer-readable storage medium, wherein the computer-readable storage medium stores a computer program, the computer program comprises program instructions, and when the program instructions are executed, a computer is enabled to perform the method according to any one of claims 1 to 30.

34. A computer program product, wherein when the computer program product runs on a computer, the computer is enabled to perform the method according to any one of claims 1 to 30.
